# EUROPÄISCHE PATENTSCHRIFT

(11) **EP 2 449 018 B1**
(45) Veröffentlichungstag und Bekanntmachung des Hinweises auf die Patenterteilung: **16.04.2014**
(21) Anmeldenummer: 10731452.8
(22) Anmeldetag: 05.07.2010
(51) Int. Cl.: C08K 5/5398, C08L 25/06, C08J 9/00

(54) **FLAMMGESCHÜTZTE EXPANDIERBARE POLYMERISATE**
FLAME-RETARDANT EXPANDABLE POLYMERS
POLYMÉRISATS EXPANSIBLES, RETARDATEURS DE FLAMME

(30) Priorität: 03.07.2009 AT 10442009; 06.07.2009 AT 10582009; 09.04.2010 AT 5702010; 28.05.2010 AT 8762010
(43) Veröffentlichungstag der Anmeldung: 09.05.2012
(73) Patentinhaber: Sunpor Kunststoff Ges.m.b.H., 3100 St. Pölten (AT)
(72) Erfinder: EBERSTALLER, Roman, A-3200 Obergrafendorf (AT); HINTERMEIER, Gerhard, A-3100 St. Pölten (AT)
(74) Vertreter: Wildhack & Jellinek
(86) Internationale Anmeldenummer: PCT/AT2010/000246
(87) Internationale Veröffentlichungsnummer: WO 2011/000018

(56) Entgegenhaltungen:
- WO-A1-2006/027241
- WO-A2-2009/035881
- DE-A1- 2 034 887
- DE-A1- 10 338 131
- DE-A1-102008 014 117
- JP-A- 2001 270 993
- US-A- 4 198 492

## Beschreibung

Die vorliegende Erfindung betrifft flammgeschützte, zumindest ein Treibmittel enthaltende, expandierbare Polymerisate, die als Flammschutzmittel zumindest ein neues Derivat von 9,10-Dihydro-9-oxa-10-phosphaphenanthren-10-on bzw. -10-oxid enthalten.

Die Erfindung betrifft weiters mit diesen Flammschutzmitteln geschützte Polymerschaumstoffe, Verfahren zur Herstellung derselben, sowie die besondere Verwendung obenstehender Flammschutzmittel in expandierbaren Polymerisaten sowie Polymerschaumstoffen.

### STAND DER TECHNIK

### 9,10-Dihydro-9-oxa-10-phosphaphenanthren-10-on bzw. -10-oxid (DOPO)

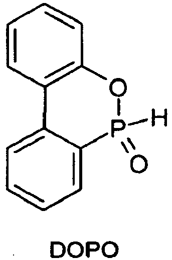

ist ein seit den frühen 1970er-Jahren bekanntes und gebräuchliches Flammschutzmittel und wurde erstmals von Sanko Chemical Co. Ltd. in der DE 20 34 887 beschrieben. In diesem Dokument wird allgemein eine Gruppe von 9,10-Dihydro-9-oxa-10-phosphaphenanthren-Derivaten der folgenden Formeln offenbart: 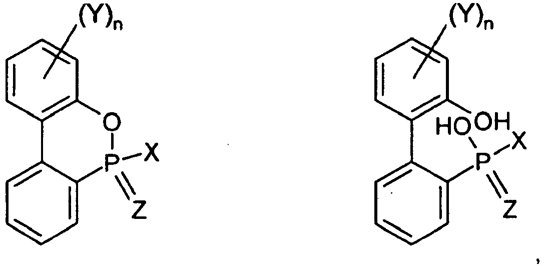 wobei die Verbindungen der letzteren Formel die Produkte ringöffnender Hydrolyse sind und worin die Symbole folgende Bedeutung haben:
Z ist Sauerstoff, Schwefel oder nicht vorhanden;
X ist Wasserstoff, Chlor, Methyl oder Phenoxy;
Y ist Wasserstoff, Chlor oder C₁₋₄-Alkyl; und
n = 0, 1 oder 2.

Weiters wird in diesem Dokument die Darstellung der Verbindungen durch Umsetzung von o-Phenylphenol-Derivaten mit Phosphortrichlorid, Triphenylphosphit, Phenoxydichlorphosphin oder Diphenoxychlorphosphin sowie ihre Verwendung (unter anderem) als Flammschutzmittel offenbart. Als einziges schwefelhältiges Derivat wird in den Beispielen "DOPS-OPh" gemäß folgender Reaktion hergestellt und analysiert:

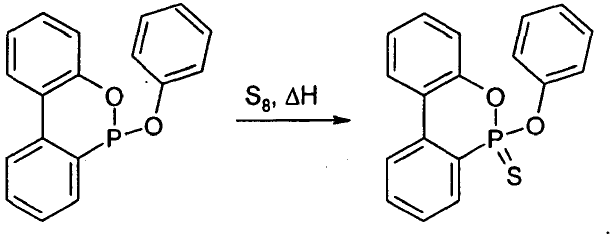

Dabei steht die Abkürzung "DOPS" für das Schwefelanalog von DOPO, d.h. für 9,10-Dihydro-9-oxa-10-phosphaphenanthren-10-sulfid bzw. -10-thion:

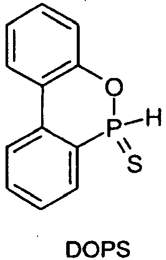

Seitdem wurde eine Vielzahl von Derivaten auf Basis des Oxaphosphaphenanthren-Ringsystems zur Verwendung als Brandschutzmittel in der Patentliteratur beschrieben.

So offenbaren Shinichi et al. in US 4.198.492 (an Asahi Dow) die Verwendung von DOPO-Derivaten der nachstehenden Formel als Brandschutzmittel in Polyphenylenether-Harzen: 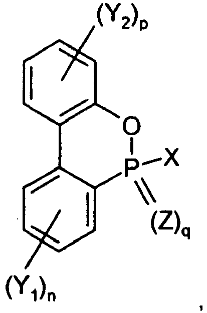 worin die Symbole die folgende Bedeutung haben:
Z ist Sauerstoff oder Schwefel;
q = 0 oder 1;
X ist Wasserstoff, eine Hydroxylgruppe, eine Aminogruppe, ein Halogenatom, C₁₋₁₀-Alkyl, C₁₋₁₀-Alkoxy, C₁₋₁₀-Alkylthio oder gegebenenfalls hydroxysubstituiertes C₆₋₁₀-Aryloxy;
Y₁ und Y₂stehen für C₁₋₈-Alkyl, C₁₋₈-Alkoxy oder eine Arylgruppe; und
n und p sind ganze Zahlen von 0 bis 4.

Als konkrete Beispiele für Verbindungen mit Z = Schwefel werden Derivate mit X = H, Alkoxy und Aryloxy genannt, darunter explizit auch DOPS. Als einziges schwefelhältiges Derivat wird jedoch die folgende Verbindung erwähnt:

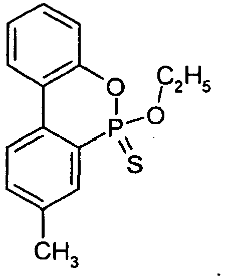

Diese Substanz wird jedoch nicht näher charakterisiert, sondern lediglich in eine Harzmischung eingearbeitet, deren Eigenschaften untersucht wurden, wobei unter anderem ein durchschnittliches Ergebnis bei der Flammzeitmessung erzielt wurde.

Das Derivat "DOPS-CI" wird ebenfalls in mehreren Dokumenten offenbart:

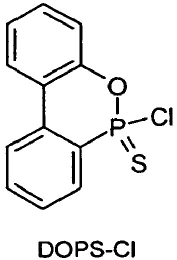

So beschreiben Chernyshev et al., Zhurnal Obshchei Khimii 42(1), 93-6 (1972), die Umsetzung von DOP-Cl mit Schwefel zu DOPS-Cl, und Bhatia et al., Chemistry & Industry 24, 1058 (1975), beschreiben die Darstellung von DOPS-Cl ausgehend von PSCl₃ und o-Phenylphenol.

Die US 2008/153950 (The Dow Chemical Company) offenbart allgemein die Verwendung von Phosphor-Schwefel-Verbindungen der nachstehenden Formel als Flammschutzmittel in Polymeren: 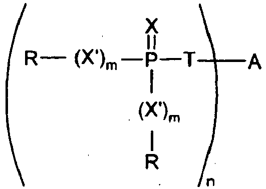 worin X und X' Sauerstoff oder Schwefel sind; m = 0, 1 oder 2 ist; T eine kovalente Bindung, Sauerstoff, Schwefel oder -NR⁴- ist; wobei zumindest einer von X und T Schwefel ist; die R gegebenenfalls miteinander verbundene Kohlenwasserstoffgruppen sind; A eine organische Linkergruppe ist; und n eine ganze Zahl von zumindest 1, vorzugsweise zumindest 2, ist. Vorzugsweise entsprechen die Verbindungen den folgenden Formeln: 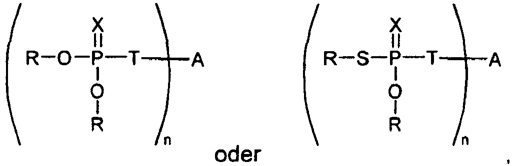 wobei in manchen Ausführungsformen auch die folgende Struktur möglich ist:

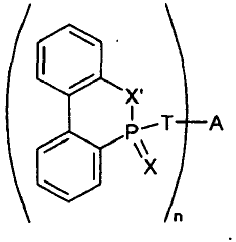

Die organische Linkergruppe A kann dabei ein n-wertiger, unverzweigter oder verzweigter, gegebenenfalls substituierter Alkylenrest sein, der mitunter auch Phosphor enthalten kann. Als kurzkettiges Beispiel für einen zweiwertigen Linker wird mehrmals die Gruppe -CH₂-CH=CH-CH₂- (2-Butenylen) angeführt. Die Synthese solcher zuletzt gezeigter Phosphaphenanthrenderivate mit X und X' = O und T = S erfolgt durch Umsetzung von DOPO mit elementarem Schwefel und Halogenderivaten des jeweiligen Linkers. Phosphaphenanthrenderivate mit X oder X' = S werden nicht konkret beschrieben oder gar hergestellt.

Die WO 2009/035881 von Dow Global Technologies beschreibt flammhemmende Polymer-Zusammensetzungen, in denen diverse phosphorhältige Verbindungen als wirksame Bestandteile zum Einsatz kommen. In diesem Zusammenhang wird hauptsächlich die Struktur einer großen Anzahl an Verbindungen mit vier an Phosphor gebundenen Heteroatomen, die entweder Sauerstoff oder Schwefel sind, d.h. genauer gesagt Salze und Ester von Phosphorsäure sowie diverser Thio- und Thionphosphorsäuren, mitunter in polymerer Form, beschrieben.

Darunter findet sich auch die Struktur von Dimeren von DOPS, in der zwei DOPS-Moleküle anstelle des Wasserstoffs über eine Sulfid- oder Disulfidbrücke miteinander verknüpft sind (d.h. "DOPS-S-DOPS" bzw. "DOPS-S₂-DOPS"), sowie Analoge davon, in denen der Sauerstoff des Dihydrooxaphosphaphenanthrens (DOP) durch Schwefel ersetzt ist, d.h. Dihydrophosphasulfaphenanthren- (DPS-) Derivate (sozusagen "DPSS-S-DPSS" bzw. "DPSS-S₂-DPSS").

In der WO 2009/035881 wurde jedoch kein einziges DOPO-Derivat tatsächlich hergestellt und somit auch nicht charakterisiert oder nacharbeitbar offenbart, sondern ausschließlich nichtaromatische Verbindungen.

Aus der Literatur ist somit bekannt, dass DOPO und verschiedene Derivate davon gute Flammschutzeigenschaften aufweisen, wobei diese Wirkung darauf zu beruhen scheint, dass diese Verbindungen beim Erhitzen phosphorhaltige Radikale freisetzen (siehe z.B. Seibold et al., J. Appl. Polym. Sci. 105(2), 685-696 (2007)). Dennoch wäre es wünschenswert, neue Substanzen mit weiter gesteigerter Flammschutzwirkung zur Verfügung zu haben, insbesondere solche, die die Gasphasenaktivität verbessern.

Die Herstellung weiterer Derivate kann beispielsweise ausgehend von DOP-Cl erfolgen. Hierzu beschreiben Ciesielski et al., Polymers for Advanced Technologies 19, 507 (2008), die Darstellung von DOP-NHPr ausgehend von DOP-Cl. Weitere, allgemeinere Reaktionen von Phosphiten, Alkyl- und Chlorphosphiten werden beispielsweise in den folgenden Literaturstellen erwähnt: US 2.805.241 (Ciba) beschreibt die Umsetzung von Dialkyl- und Diarylchlorophosphiten mittels Schwefelwasserstoff und stöchiometrischer Mengen an Base. US 4.220.472 (Sandoz) beschreibt die Hydrolyse der Gruppierung Cl-P=S. Auf diesem Weg wird unter anderem das im Handel von Clariant erhältliche Flammschutzmittel Sandoflam^{®} hergestellt. Kabatschnik et al., Chem. Zentralbl.127, 11232 (1956), und Borecki et al., J. Chem. Soc. 1958, 4081-4084, beschreiben wiederum die Umsetzung der Gruppierung H-P=O mit Schwefel. Und Seeberger et al., Tetrahedron 55(18), 5759-5772 (1999), zeigen exemplarisch sowohl die Umsetzung der Gruppierung H-P=S mit Schwefel als auch deren Oxidation mit Iod in Kombination mit Wasser.

In der WO 99/10429 (Albemarle) wird allgemein offenbart, dass die kombinierte Verwendung von - mitunter auch schwefelhältigen - Organophosphorverbindungen und elementarem Schwefel als Flammschutzmittel in styrenischen Polymeren verbesserte Brandschutzeigenschaften bewirkt. DOPO und seine Derivate werden hier allerdings nicht erwähnt.

Die Ausrüstung von Polymerschaumstoffen bzw. geschäumten Polymeren mit Flammschutzmitteln ist für eine Vielzahl von Anwendungen von Bedeutung, beispielsweise für Polystyrol-Partikelschaumstoffe aus expandierbarem Polystyrol (EPS) oder für Polystyrol-Extrusionsschaumstoffplatten (XPS) zum Isolieren von Gebäuden. Dabei werden für Polystyrol-Homo- und Copolymere bisher überwiegend halogenhaltige, insbesondere bromierte organische Verbindungen wie Hexabromcyclododecan (HBCD), eingesetzt. Eine Reihe dieser bromierten Substanzen ist jedoch auf Grund ihrer potentiellen Umwelt- und Gesundheitsgefährdung in Diskussion bzw. bereits verboten

Als Alternative existieren zahlreiche halogenfreie Flammschutzmittel. Halogenfreie Flammschutzmittel müssen jedoch zur Erreichung der gleichen Flammschutzwirkung von halogenhaltigen Flammschutzmittel in der Regel in deutlich höheren Mengen eingesetzt werden.

Unter anderem aus diesem Grund können halogenfreie Flammschutzmittel, die in kompakten thermoplastischen Polymeren einsetzbar sind, häufig nicht in gleicher Weise in Polymerschaumstoffen eingesetzt werden, da sie entweder den Schäumprozess stören oder die mechanischen und thermischen Eigenschaften des Polymerschaumstoffes beeinflussen. Bei der Herstellung von expandierbarem Polystyrol durch Suspensionspolymerisation können die hohen Flammschutzmittelmengen außerdem die Stabilität der Suspension verringern und somit das Herstellungsverfahren stören bzw. beeinträchtigen.

Die Wirkung der bei kompakten Polymeren eingesetzten Flammschutzmittel in Polymerschaumstoffen ist häufig aufgrund der Besonderheiten derartiger Schaumstoffe und des unterschiedlichen Brandverhaltens bzw. wegen unterschiedlicher Brandtests nicht vorhersagbar..

Aus dem Stand der Technik sind diesbezüglich in der WO 2006/027241 halogenfreie Flammschutzmittel für Polymerschaumstoffe beschrieben, die den Schäumprozess und die mechanischen Eigenschaften nicht wesentlich beeinflussen und auch die Herstellung von überwiegend geschlossenzelligen Polymerschaumstoffen ermöglichen. Bei diesen Flammschutzmitteln handelt es sich um seit den frühen 1970er-Jahren bekannte und gebräuchliche Phosphorverbindungen, die beispielsweise gemäß der JP-A 2004-035495, der JP-A 2002-069313 oder der JP-A 2001-115047 herzustellen ist. Besonders bevorzugt wird das eingangs bereits erwähnte Phosphoroxid 9,10-Dihydro-9-oxa-10-phospha-phenantren-10-oxid (6H-Dibenz[c,e]-oxaphosphorin-6-oxid, DOP-O, CAS [35948-25-5]) erwähnt.

Auch bei diesem Flammschutzmittel sind jedoch noch relativ hohe Konzentrationen an Flammschutzmittel erforderlich, um zu einem qualitativ entsprechenden Produkt zu gelangen und beeinflussen diese hohen Konzentrationen die Schaumstruktur und die Stabilität der Matrix relativ stark. Außerdem kann die europäische Brandklasse E getestet nach EN 11925 bzw. B1 getestet nach DIN 4102 nicht erfüllt werden.

Aufgabe der vorliegenden Erfindung ist es, ein halogenfreies flammgeschütztes, jedoch qualitativ entsprechendes, expandierbares Polymerisat zu schaffen, das ein besonderes Flammschutzmittel enthält, das nur in geringen Mengen eingesetzt werden muss bzw. das den nachfolgenden Schäumprozess und die mechanischen Eigenschaften des Schaums nicht wesentlich beeinflusst.

Weiters ist es Aufgabe der Erfindung, ein vorteilhaftes Verfahren zur Herstellung derartiger Polymerisate zu schaffen.

Eine weitere Aufgabe der Erfindung besteht darin, einen halogenfrei flammgeschützten, jedoch qualitativ entsprechenden, Polymerschaumstoff mit vorteilhaftem Brandverhalten sowie guten mechanischen Eigenschaften sowie ein vorteilhaftes Herstellungsverfahren dafür zu schaffen.

### OFFENBARUNG DER ERFINDUNG

Im Zuge aktueller Forschungen wurde festgestellt, dass eine Gruppe von Verbindungen, die der nachstehenden Formel I entsprechen, gegenüber DOPO und anderen Vergleichssubstanzen erhöhte Flammschutzwirkung entwickeln: 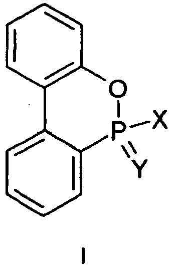 worin:
X aus Wasserstoff, OH und SH und Alkalimetall-, Erdalkalimetall-, Ammonium- und Phosphonium-Salzen davon, sowie zweiwertigen Linker-Gruppen Zₙ, die zwei gleiche oder unterschiedliche Dihydrooxaphosphaphenanthrenyl-Reste miteinander zu einem Dimer der folgenden Formel II verbinden, ausgewählt ist: 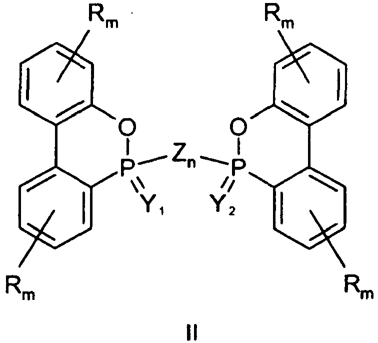
Y, Y₁, Y₂ und Z jeweils unabhängig voneinander ein Sauerstoffatom oder ein Schwefelatom darstellen;
mit der Maßgabe, dass in Formel I zumindest eines von X und Y und in Formel II zumindest eines von Y₁, Y₂ und Z ein Schwefelatom darstellt bzw. enthält;
n eine ganze Zahl von zumindest 1 ist, wobei, wenn Z ein Sauerstoffatom ist, n = 1 ist, und wenn Z ein Schwefelatom ist, n = 1 bis 8 ist;
die Reste R jeweils unabhängig voneinander eine gegebenenfalls substituierte Alkyl-, Alkoxy- oder Alkylthiogruppe mit 1 bis 8 Kohlenstoffatomen oder eine gegebenenfalls substituierte Arylgruppe darstellen; und
die m jeweils unabhängig voneinander für eine ganze Zahl von 0 bis 4 stehen;

Auch ringgeöffnete Hydrolysate solcher Verbindungen, wie oben erwähnt, zeigen flammhemmende Eigenschaften.

Unter dem "Alkyl"-Anteil der optionalen Substituenten R der erfindungsgemäßen Verbindungen sind hierin sowohl gesättigte als auch ungesättigte Aliphaten zu verstehen, die unverzweigt oder verzweigt sein können, wobei ungesättigte Gruppen bevorzugt sind. Die Substituenten R umfassen vorzugsweise kurzkettige Alkylgruppen mit nicht mehr als 6, noch bevorzugter nicht mehr als 4 oder 3, noch bevorzugter nicht mehr als 2, Kohlenstoffatomen bzw. Phenyl als Arylgruppe, und m ist vorzugsweise 0 bis 2, da längerkettige Reste, ein hoher Sättigungsgrad sowie eine größere Anzahl an Substituenten die Flammschutzwirkung nachteilig beeinflussen können. Besonders bevorzugt ist m = 0, d.h. die erfindungsgemäßen Verbindungen sind besonders bevorzugt unsubstituiert.

Falls Substituenten R vorhanden sind, weisen diese vorzugsweise einen schwefelhältigen Substituenten, wie z.B. -SH, -SO₃NH₄, -SO- oder -SO₂-, oder einen phosphorhältigen Substituenten, wie z.B. -PO(ONH₄)₂ oder dergleichen, auf, um so die Flammschutzwirkung weiter zu verbessern.

Von den optionalen Salzen etwaiger SH- oder OH-Gruppen der erfindungsgemäßen Verbindungen sind Ammonium- und Phosphoniumsalze bevorzugt, da diese ebenfalls zur Flammschutzwirkung beitragen können. Die Ammonium- und Phosphonium-Ionen können anstelle von Wasserstoffatomen jeweils bis zu vier organische Reste, z.B. oben definierte Substituenten R, aufweisen (d.h. NR₄⁺ bzw. PR₄⁺), wobei jedoch im Falle von Ammonium Wasserstoff als Substituent bevorzugt wird.

Mit diesen Flammschutzmitteln konnten Polymerisate und Polymerschaumstoffe mit verbesserter Flammschutzwirkung, die unter anderem - ohne sich auch eine Theorie festlegen zu wollen - auf erhöhter Gasphasenaktivität beruht, und verbesserten Eigenschaften geschaffen werden. Zudem reichen vergleichsweise geringere Mengen aus, um die gleiche Wirkung zu erzielen.

Die Erfindung betrifft daher in einem ersten Aspekt neue flammgeschützte, treibmittelhältige, expandierbare bzw. expandierfähige bzw. aufschäumbare Polymerisate, die als Flammschutzmittel zumindest eine der folgenden Phosphorverbindungen bzw. ringgeöffnete Hydrolysate oder Salze davon enthalten, konkret mehrere neue 9,10-Dihydro-9-oxa-10-phosphaphenanthren-Derivate der Formel I 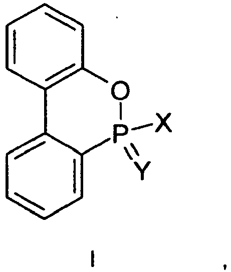 nämlich eine Verbindung der Formel I, worin X Wasserstoff ist und Y Schwefel ist, d.h. 9,10-Dihydro-9-oxa-10-phosphaphenanthren-10-thion bzw. -10-sulfid ("DOPS"): 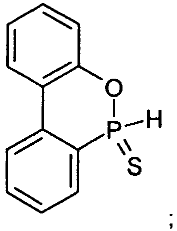 eine Verbindung der Formel I, worin X OH ist und Y Schwefel ist, d.h. 9,10-Dihydro-10-hydroxy-9-oxa-10-phosphaphenanthren-10-thion bzw. -10-sulfid ("DOPS-OH"): 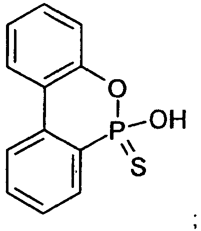 eine Verbindung der Formel I, worin X ONH₄ ist und Y Schwefel ist, d.h. 9,10-Dihydro-10-hydroxy-9-oxa-10-phosphaphenanthren-10-thion- bzw. -10-sulfid-ammoniumsalz ("DOPS-ONH₄"): 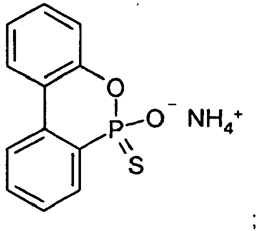 eine Verbindung der Formel I, worin X SH ist und Y Schwefel ist, d.h. 9,10-Dihydro-10-mercapto-9-oxa-10-phosphaphenanthren-10-thion bzw. -10-sulfid ("DOPS-SH"): 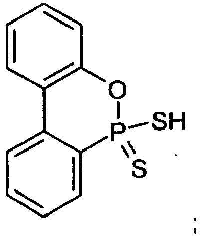 eine Verbindung der Formel I, worin X SNH(Et)₃ ist und Y Schwefel ist, d.h. 9,10-Dihydro-10-mercapto-9-oxa-10-phosphaphenanthren-10-thion- bzw. -10-sulfid-triethylammoniumsalz ("DOPS-SNH(Et)₃"): 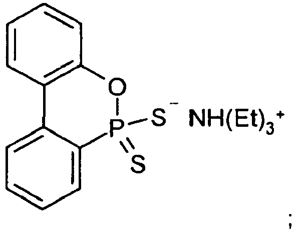 eine Verbindung der Formel I, worin X ONH(Et)₃ ist und Y Schwefel ist, d.h. 9,10-Dihydro-10-hydroxy-9-oxa-10-phosphaphenanthren-10-thion- bzw. -10-sulfid-triethylammoniumsalz ("DOPS-ONH(Et)₃"): 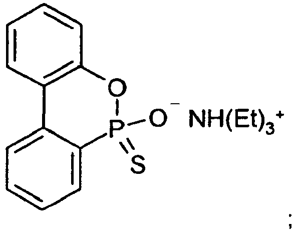 eine Verbindung der Formel I, worin X OMeI ist und Y Schwefel ist, d.h. 9,10-Dihydro-10-hydroxy-9-oxa-10-phosphaphenanthren-10-thion- bzw. -10-sulfid-melaminiumsalz ("DOPS-OMeI"): 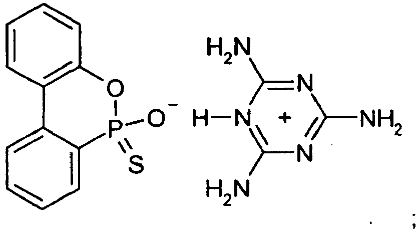 und
eine Verbindung der Formel I, worin X OGua ist und Y Schwefel ist, d.h. 9,10-Dihydro-10-hydroxy-9-oxa-10-phosphaphenanthren-10-thion- bzw. -10-sulfid-guanidiniumsalz ("DOPS-OGua"): 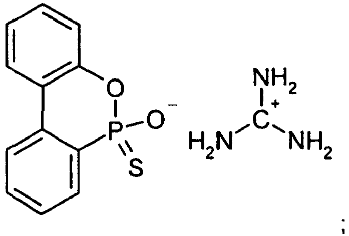 sowie mehrere neue 9,10-Dihydro-9-oxa-10-phosphaphenanthren-Derivate der Formel I, worin X eine zweiwertige Linker-Gruppe Zₙ ist, die zwei Dihydrooxaphosphaphenanthrenyl-Reste der Formel I zu einem Dimer der Formel II verbindet 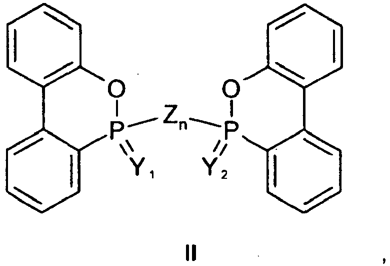 nämlich eine Verbindung der Formel II, worin Y₁ und Y₂ jeweils Sauerstoff sind, Z Schwefel ist und n = 1 ist, d.h. Bis(9,10-dihydro-9-oxa-10-oxo-10-phosphaphenanthren-10-yl)sulfid ("DOPO-S-DOPO"): 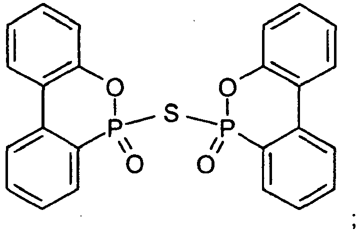 eine Verbindung der Formel II, worin Y₁ und Z jeweils Schwefel sind, Y₂ Sauerstoff ist und n = 1 ist, d.h. 9,10-Dihydro-10-(9,10-dihydro-9-oxa-10-phospha-10-thioxophenanthren-10-ylthio)-9-oxa-10-phosphaphenanthren-10-on bzw. -10-oxid ("DOPS-S-DOPO"): 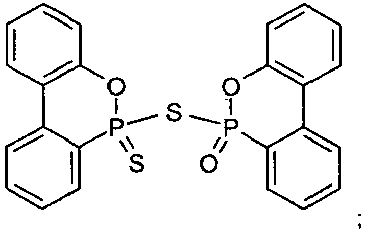 eine Verbindung der Formel II, worin Y₁, Y₂ und Z jeweils Schwefel sind und n = 1 ist, d.h. Bis(9,10-dihydro-9-oxa-10-phospha-10-thioxophenanthren-10-yl)sulfid ("DOPS-S-DOPS"): 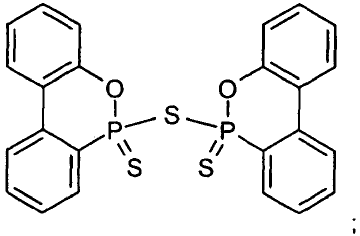 eine Verbindung der Formel II, worin Y₁, Y₂ und Z jeweils Schwefel sind und n = 2 ist, d.h. Bis(9,10-dihydro-9-oxa-10-phospha-10-thioxophenanthren-10-yl)disulfid ("DOPS-S₂-DOPS"): 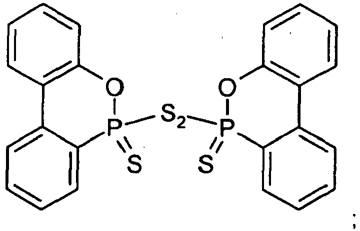 eine Verbindung der Formel II, worin Y₁, Y₂ und Z jeweils Schwefel sind und n = 4 ist, d.h. Bis(9,10-dihydro-9-oxa-10-phospha-10-thioxophenanthren-10-yl)tetrasulfid ("DOPS-S₄-DOPS"): 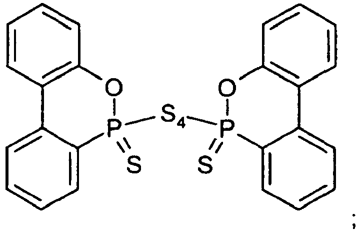 eine Verbindung der Formel II, worin Y₁ und Y₂ jeweils Schwefel sind, Z Sauerstoff ist und n = 1 ist, d.h. Di(9,10-dihydro-9-oxa-10-phospha-10-thioxophenanthren-10-yl)ether ("DOPS-O-DOPS"): 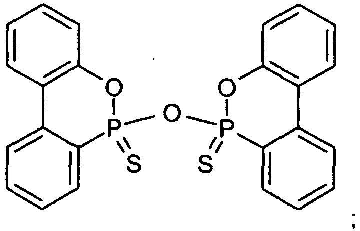 und eine Verbindung der Formel II, worin Y₁ Schwefel ist, Y₂ und Z jeweils Sauerstoff sind und n = 1 ist, d.h. 9,10-Dihydro-10-(9,10-dihydro-9-oxa-10-phospha-10-thioxophenanthren-10-yloxy)-9-oxa-10-phosphaphenanthren-10-on bzw. -10-oxid ("DOPS-O-DOPO"):

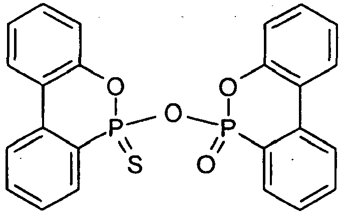

Da der zyklische Phosphon- bzw. Phosphinsäureester der erfindungsgemäßen Verbindungen der Formeln I und II vom Fachmann unter geeigneten Bedingungen leicht hydrolysierbar ist, liegen auch "ringgeöffnete Hydrolysate" im Schutzumfang der Erfindung. Darunter sind demzufolge Verbindungen zu verstehen, in denen die folgende Struktur enthalten ist: 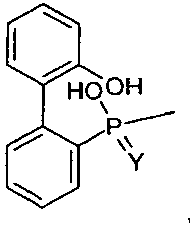 wobei diese Struktur auch in einer oder in beiden der Monomereinheiten von Dimeren gemäß obiger Formel II vorkommen kann, so dass solche Dimere ebenfalls unter die Definition "ringgeöffnete Hydrolysate" fallen, zumal derartige Hydrolysate ebenfalls als Flammschutzmittel wirksam sein können.

Die Struktur mancher der obigen Verbindungen ist zwar von in der Literatur erwähnten Formeln umfasst, allerdings wurde bisher keine einzige davon explizit beschrieben, tatsächlich synthetisiert oder näher charakterisiert. So ist etwa DOPS von den Formeln in DE 20 34 887 und in US 4.198.492 umfasst, wobei jene im letzteren Dokument auch DOPS-OH umfasst. Wie einleitend erwähnt, wurden auch die Strukturen DOPS-S-DOPS und DOPS-S₂-DOPS in der WO 2009/035881 bereits formal beschrieben, allerdings wurden diese Verbindungen noch nicht synthetisiert oder näher charakterisiert. Dies ist erst jetzt gelungen, und es wurde auch erst jetzt herausgefunden, dass diese speziellen Verbindungen gegenüber anderen, verwandten Vertretern der offenbarten Verbindungsgruppen verbesserte Flammschutzeigenschaften und dabei synergistische Wirkung mit elementarem Schwefel und anderen schwefelhältigen Verbindungen aufweisen.

Wie in den späteren Ausführungsbeispielen gezeigt wird, weisen die obigen neuen Verbindungen, alleine oder als Gemisch mehrerer davon oder in einer Flammschutzzusammensetzung enthalten, sehr gute Flammschutzeigenschaften auf. Mit diesen Flammschutzmitteln konnten Polymerisate und Polymerschaumstoffe mit verbesserter Flammschutzwirkung und verbesserten Eigenschaften geschaffen werden. Zudem reichen bereits vergleichsweise geringere - die Schäumung nicht störende - Mengen aus, um die gleiche Wirkung zu erzielen.

Eine vorteilhafte Ausgestaltung der Erfindung wird dadurch gekennzeichnet, dass überraschend festgestellt wurde, dass die neuen Verbindungen in Kombination mit elementarem Schwefel und anderen schwefelhältigen Verbindungen synergistische Wirkungen als Flammschutzmittel aufweisen.

Auf diese Weise erhaltene expandierbare Polymerisate sind dadurch gekennzeichnet, dass das zumindest eine Flammschutzmittel in Kombination mit elementarem Schwefel und/oder einer weiteren schwefelhältigen Verbindung bzw. Schwefelverbindung eingesetzt wird, insbesondere in einer Menge von 0,1 bis 10 Gew%, insbesondere in einer Menge von etwa 0,5 bis 5 Gew%, vorzugsweise etwa 2 Gew%, bezogen auf das Gesamtgewicht des Polymers. Besonders vorteilhaft ist es, wenn diese weitere schwefelhältige Verbindung zumindest eine S-S-Bindung aufweist, wobei zumindest eines der Schwefelatome in zweiwertiger Form vorliegt.

Als Schwefelverbindungen sind beispielsweise Sulfide, Sulfite, Sulfate, Sulfane, Sulfoxylate, Sulfone, Sulfonate, Thiosulfate, Thionite, Thionate, Disulfate, Sulfoxide, Schwefelnitride, Schwefelhalogenide und/oder Organoschwefelverbindungen wie Thiole, Thioether, Thiophene, etc. vorteilhaft einsetzbar.

Weiters haben sich Schwefelverbindungen als vorteilhaft erwiesen, die bei der Analyse mittels Thermogravimetrie (TGA) nach EN ISO 11358 unterhalb von 115°C eine Gewichtsabnahme von kleiner 10 Gew.-% aufweisen, z.B Ammoniumthiosulfat, Dicaprolactamdisulfid, Zinksulfid, Polyphenylensulfid, etc.

Besonders vorteilhaft ist es, wenn die schwefelhältige Verbindung bzw. Schwefelverbindung zumindest eine S-S-Bindung aufweist, wobei zumindest eines der Schwefelatome in zweiwertiger Form vorliegt, z.B. Disulfite, Dithionite, Cystin, Amylphenoldisulfid, Poly-tert-butylphenoldisulfid etc.

Vergleichsversuche belegen klar, dass die neuen Verbindungen der vorliegenden Erfindung bei kombinierter Verwendung mit elementarem Schwefel oder schwefelhältigen Verbindungen, mit denen sie synergistische Wirkung zeigen, erheblich bessere Flammschutzwirkungen zeigen als das bekannte Additiv DOPO.

Bevorzugt enthalten die halogenfreien, flammgeschützten Polymerschaumstoffe ein thermoplastisches Polymer, insbesondere ein Styrolpolymer.

Die erfindungsgemäßen expandierbaren Polymerisate sind vorzugsweise expandierbare Styrolpolymerisate (EPS) bzw. expandierbare Styrolpolymer Granulate (EPS). Diese bestehen vorteilhafterweise aus Homo- und Copolymeren von Styrol, vorzugsweise glasklares Polystyrol (GPPS), Schlagzähpolystyrol (HIPS), anionisch polymerisiertes Polystyrol oder Schlagzähpolystyrol (A-IPS), Styrol-alpha-Methylstyrolcopolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)-polymerisate oder Mischungen davon oder mit Polyphenylenether (PPE). Gerade für Polystyrol ist der Bedarf an qualitativ hochwertigen Produkten besonders hoch.

Die genannten Styrolpolymere können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden.

Des weiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatischlaromatischen Copolyestem möglich.

Als Verträglichkeitsvermittler eignen sich z.B. Maleinsäureanhydrid-modifizierte Styrolcopolymere, Epoxidgruppenhaltige Polymere oder Organosilane.

Eine vorteilhafte Ausführungsform der expandierbaren Polymerisate besteht darin, dass die Verbindungen entweder alleine als Flammschutzadditiv, z.B. in Kunststoffmassen, eingesetzt werden können, wobei sie vorzugsweise in einem Anteil von 0,1 bis 25 Gew.-%, vorzugsweise 3 bis 10 Gew.-%, bezogen auf das Gesamtgewicht des Polymers, vorliegen, oder aber als Bestandteil einer Flammschutzzusammensetzung, die darüber hinaus beliebige weitere, üblicherweise in solchen Zusammensetzungen enthaltene Komponenten umfassen kann. Dazu zählen beispielsweise organische Peroxide, z.B. Dicumylperoxid, Metallhydroxide, Stickstoffverbindungen, z.B. Melamine, Nanopartikel usw.

Die Wirksamkeit der Phosphorverbindungen kann durch den Zusatz geeigneter Flammschutzsynergisten, wie die thermischen Radikalbildner Dicumylperoxid, Ditertbutylperoxid oder Dicumyl, noch weiter verbessert werden.

Auch können zusätzlich weitere Flammschutzmittel, wie Melamin, Melamincyanurate, Metalloxide, Metallhydroxide, Phosphate, Phosphinate oder Synergisten wie Sb2O3 oder Zn-Verbindungen, eingesetzt werden.

Wenn auf die vollständige Halogenfreiheit des Polymerisats oder des Polymerschaumstoffes verzichtet werden kann, können halogenreduzierte Schaumstoffe durch die Verwendung der Phosphorverbindungen und den Zusatz geringerer Mengen an halogenhaltigen, insbesondere bromierten Flammschutzmitteln, wie Hexabromcyclodecan (HBCD), bevorzugt in Mengen im Bereich von 0,05 bis 1, insbesondere 0,1 bis 0,5 Gew.-%, hergestellt werden.

Die halogenfreien, flammgeschützten Polymerschaumstoffe weisen bevorzugt eine Dichte im Bereich von 8 bis 200 g/l, besonders bevorzugt im Bereich von 10 bis 50 g/l auf und sind bevorzugt zu mehr als 80 %, besonders bevorzugt zu 95 bis 100%, geschlossenzellig.

Ein weiterer Aspekt der Erfindung betrifft die Herstellung derartiger Polymerisate. Erfindungsgemäß können die eingangs erwähnten flammgeschützten, expandierbaren Polymerisate durch Beimischung der obenstehenden Flammschutzmittel und gegebenenfalls von Schwefel und/oder zumindest einer schwefelhältigen Verbindung bzw. Schwefelverbindung in an sich bekannter Weise hergestellt werden.

Eine vorteilhafte Verfahrensführung sieht dabei vor, dass das Flammschutzmittel und ein Treibmittel mit einer Styrolpolymerschmelze mit Hilfe eines dynamischen bzw. statischen Mischers gemischt und anschließend granuliert werden.

Alternativ kann vorgesehen werden, dass das Flammschutzmittel mittels eines dynamischen bzw. statischen Mischers zu noch granulatförmigem Polystyrolpolymerisat zugemischt und aufgeschmolzen wird und die Schmelze anschließend imprägniert und granuliert wird.

Alternativ kann weiters vorgesehen werden, dass das Flammschutzmittel mittels eines dynamischen bzw. statischen Mischers zu noch granulatförmigem EPS zugemischt wird und die Mischung anschließend aufgeschmolzen und granuliert wird.

Alternativ kann weiters vorgesehen werden, dass die Granulatherstellung durch Suspensions-Polymerisation von Styrol in wässriger Suspension in Gegenwart des Flammschutzmittels und eines Treibmittels erfolgt.

Schwefel und/oder zumindest eine schwefelhältige Verbindung bzw. Schwefelverbindung wird dabei gleichzeitig mit dem Flammschutzmittel zugegeben.

Ein weiteres erfindungsgemäßes Verfahren zur Herstellung der erfindungsgemäßen flammgeschützten expandierbaren Styrolpolymerisate (EPS) umfasst die Schritte:
- Gemeinsames Dosieren in einen Extruder von PS- oder EPS-Granulat mit einem Molekulargewicht von Mw > 120 000 g/mol, bevorzugt von 150 000 bis 250 000 g/mol, besonders bevorzugt von 180 000 bis 220 000 g/mol, sowie von dem Flammschutzmittel und gegebenenfalls von einem oder mehreren weiteren Additiven,
- Gemeinsames Aufschmelzen aller Komponenten im Extruder
- Optionale Zudosierung zumindest eines Treibmittels
- Mischung aller Komponenten bei einer Temperatur > 120°C
- Granulierung mittels druckbeaufschlagter Unterwassergranulierung, bei z.B. 1-20 bar, zu einer Granulatgröße < 5 mm, bevorzugt 0,2 bis 2,5 mm, bei einer Wassertemperatur von 30 bis 100°C, insbesondere 50 bis 80°C,
- gegebenenfalls oberflächliche Beschichtung mit Coatingmitteln, z.B. Silikate, Metallsalze von Fettsäuren, Fettsäureester, Fettsäureamide.

Die erfindungsgemäßen halogenfrei flammgeschützten, expandierbaren Styrolpolymere (EPS) und Styrolpolymerextrusionschaumstoffe (XPS) können durch Einmischen eines Treibmittels und einer oder mehrerer der genannten Phosphorverbindungen oder des Hydrolyseproduktes oder eines Salzes davon, und gegebenenfalls von Schwefel und/oder zumindest einer schwefelhältigen Verbindung bzw. Schwefelverbindung, in die Polymerschmelze und anschließende Extrusion zu Schaumstoffplatten, Schaumstoffsträngen, oder expandierbaren Granulaten hergestellt werden.

Bevorzugt weist das expandierbare Styrolpolymer ein Molekulargewicht > 120.000, besonders bevorzugt im Bereich von 180.000 bis 220.000 g/mol auf. Aufgrund des Molekulargewichtsabbaus durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Der Styrolpolymerschmelze können auch Polymerrezyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel eignen sich die üblicherweise in EPS eingesetzten physikalischen Treibmittel, wie aliphatische Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, isoPentan, n-Pentan eingesetzt. Für XPS werden bevorzugt CO₂ oder Mischungen mit Alkoholen oder Ketonen eingesetzt.

Die zugesetzte Treibmittelmenge wird so gewählt, dass die expandierbaren Styrolpolymeren (EPS) ein Expansionsvermögen von 7 bis 200 g/l, bevorzugt 10 bis 50 g/l aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf.

Des weiteren können der Styrolpolymerschmelze Additive, Keimbildner, Füllstoffe, Weichmacher, lösliche und unlösliche anorganische und/oder organische Farbstoffe und Pigmente, z.B. IR-Absorber, wie Russ, Graphit oder Aluminiumpulver, gemeinsam oder räumlich getrennt, z.B. über Mischer oder Seitenextruder, zugegeben werden. In der Regel werden die Farbstoffe und Pigmente in Mengen im Bereich von 0,01 bis 30, bevorzugt im Bereich von 1 bis 10 Gew.-%, zugesetzt. Zur homogenen und mikrodispersen Verteilung der Pigmente in dem Styrolpolymer kann es insbesondere bei polaren Pigmenten zweckmäßig sein, ein Dispergierhilfsmittel, z.B Organosilane, epoxygruppenhaltige Polymere oder Maleinsäureanhydrid-gepfropfte Styrolpolymere, einzusetzen. Bevorzugte Weichmacher sind Mineralöle, Phthalate, die in Mengen von 0,05 bis 10 Gew.-%, bezogen auf das Styrolpolymerisat, eingesetzt werden können.

Ein weiterer Aspekt der Erfindung betrifft einen Polymerschaumstoff, insbesondere ein Styrolpolymer-Partikelschaumstoff, oder einen extrudierten Polystyrol-Hartschaum (XPS), enthaltend als Flammschutzmittel zumindest eine der genannten Phosphorverbindungen bzw. ringgeöffnete Hydrolysate oder Salze davon.

Vorteilhafterweise kann zusätzlich Schwefel und/oder zumindest eine schwefelhältige Verbindung bzw. Schwefelverbindung enthalten sein.

Dieser Polymerschaumstoff ist erhältlich aus den erfindungsgemäßen flammgeschützten expandierbaren Polymerisaten, insbesondere aus expandierbaren Styrolpolymerisaten (EPS), insbesondere durch Aufschäumen und Versintern der Polymerisate oder durch Extrusion.

Ein besonders vorteilhafter Polymerschaumstoff hat eine Dichte zwischen 7 und 200 g/l und besitzt eine überwiegend geschlossenzellige Zellstruktur mit mehr als 0,5 Zellen pro mm³.

Erfindungsgemäß wird zumindest eine der genannten Phosphorverbindungen bzw. ringgeöffnete Hydrolysate oder Salze davon, als Flammschutzmittel in expandierbaren Polymerisaten, insbesondere in expandierbaren Styrolpolymerisaten (EPS) bzw. expandierbaren Styrolpolymer Granulaten (EPS) oder in Polymerschaumstoffen, insbesondere in Styrolpolymer-Partikelschaumstoffen, erhältlich durch Aufschäumen aus expandierbaren Polymerisaten, oder in extrudierten Polystyrol-Hartschäumen (XPS), eingesetzt.

Zur Herstellung von flammgeschütztem extrudierten Polystyrol-Hartschaum (XPS) werden das/die Flammschutzmittel und ein Treibmittel, und gegebenenfalls Schwefel und/oder zumindest eine schwefelhältige Verbindung bzw. Schwefelverbindung, mit einer Styrolpolymerschmelze mit Hilfe eines dynamischen bzw. statischen Mischers gemischt und anschließend geschäumt oder das Flammschutzmittel wird mittels eines dynamischen bzw. statischen Mischers zu noch granulatförmigem Polystyrolpolymerisat zugemischt und aufgeschmolzen, und die Schmelze anschließend imprägniert und geschäumt.

Um dem Fachmann die Nacharbeitbarkeit dieser Polymerisate und Schaumstoffe zu gewährleisten, wird einleitend folgendes bemerkt:

### Herstellung der Flammschutzmittel und ihrer Derivate:

Die erfindungsgemäßen Flammschutzmittel und ihre Derivate können beispielsweise hergestellt werden, indem ein 9,10-Dihydro-9-oxa-10-phosphaphenanthren- (DOP-) Derivat, ausgewählt aus DOPO, DOP-Cl, DOPS, DOPS-Cl und DOP-NHPr, mit elementarem Schwefel oder einer schwefelhältigen Verbindung zur gewünschten Verbindung umgesetzt wird.

Mittels derartiger Synthesen können die Flammschutzmittel in sehr guten Ausbeuten und ohne nennenswerte Bildung von Nebenprodukten wie Hydrolysaten oder Zersetzungsprodukten erhalten werden.

Besonders bevorzugte Reaktionen zum Erhalt der erfindungsgemäßen Verbindungen sind nachstehend angegeben:

Die Umsetzung von DOP-Cl mit Schwefelwasserstoff zu DOPS:

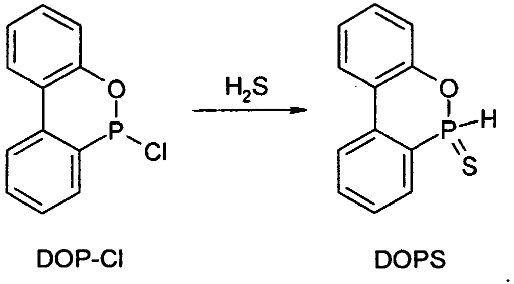

Die Umsetzung von DOPO mit Lawesson-Reagenz oder P₂S₅ zu DOPS: 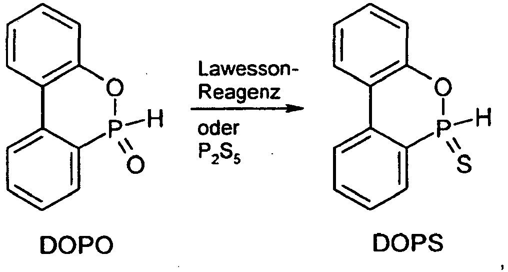 wobei das Lawesson-Reagenz folgende Struktur hat:

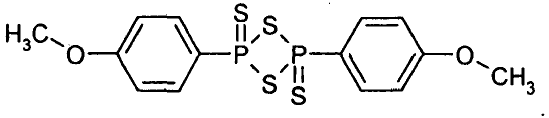

Die Umsetzung von DOPS-OH mit wässrigem Ammoniak zu DOPS-ONH₄:

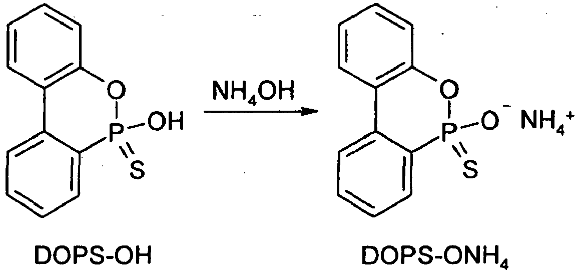

Die Umsetzung von DOP-NHPr mit Schwefelwasserstoff zu DOPS:

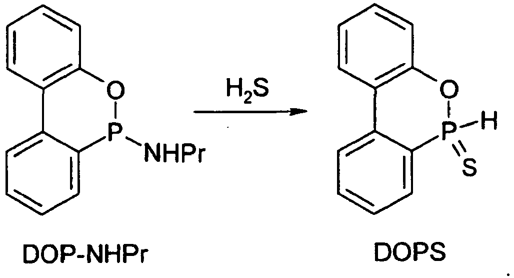

Die Umsetzung von DOPO mit elementarem Schwefel zu DOPS-OH:

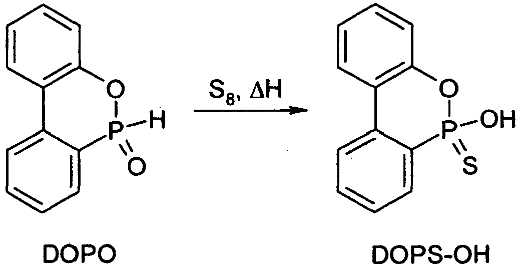

Die Umsetzung von DOPO mit Ammoniumthiosulfat zu DOPS-ONH₄:

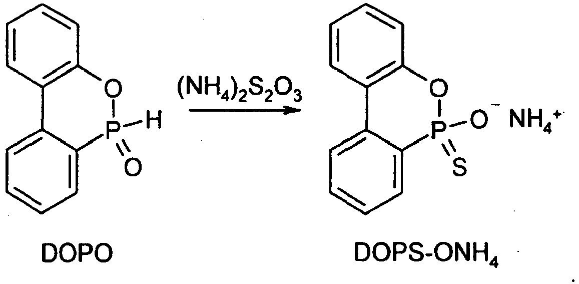

Die Umsetzung von DOPS mit elementarem Schwefel zu DOPS-SH:

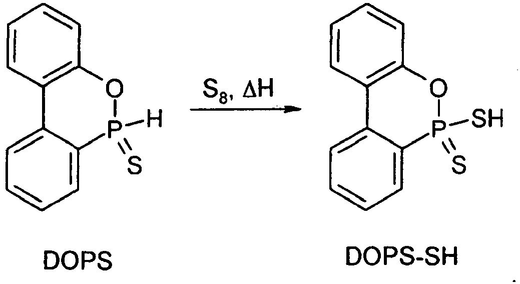

Die Umsetzung von DOPS-Cl mit Schwefelwasserstoff zu DOPS-SH:

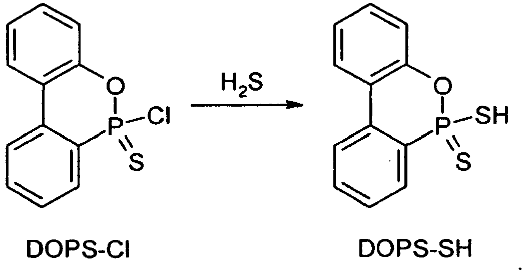

Die Umsetzung von DOPO mit N,N'-Dicaprolactamdisulfid (Bis(hexahydro-2-oxo-2H-azepin-1-yl)disulfid) zu einem Gemisch aus DOPO-S-DOPO und DOPS-S-DOPO:

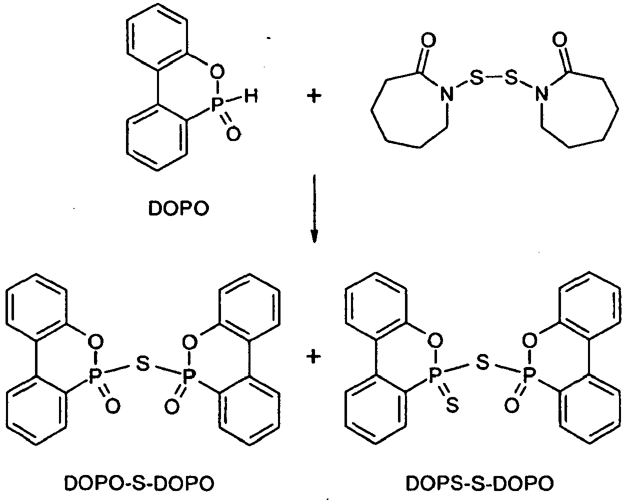

Die Umsetzung von DOPS-Cl mit Schwefelwasserstoff zu DOPS-S-DOPS:

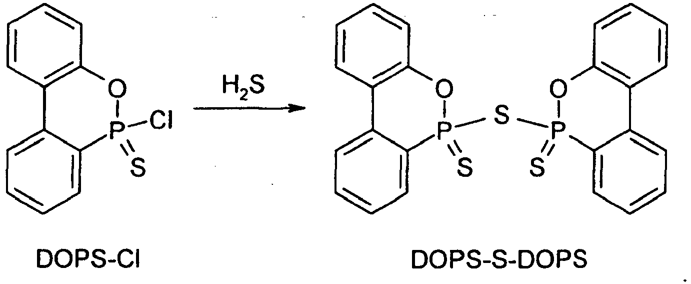

Die Umsetzung von DOPS mit Schwefel und Triethylamin zu DOPS-SNH(Et)₃:

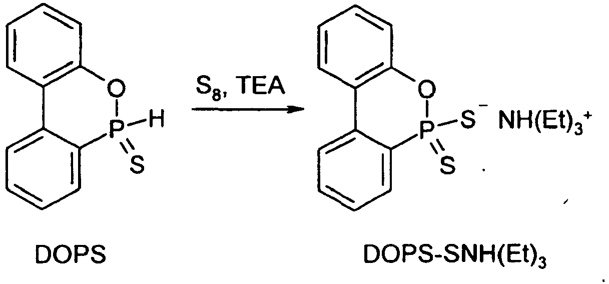

Die Umsetzung von DOPS-Cl mit Schwefel und Triethylamin zu DOPS-SNH(Et)₃:

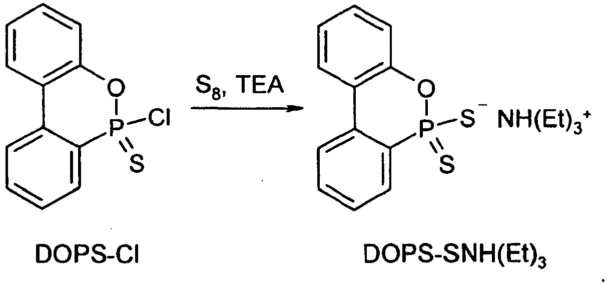

Die Umsetzung von DOPS-OH mit Triethylamin zu DOPS-ONH(Et)₃:

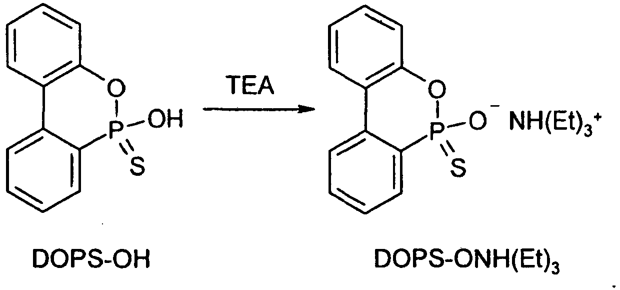

Die Umsetzung von DOPS-OH mit Melamin zu DOPS-OMeI:

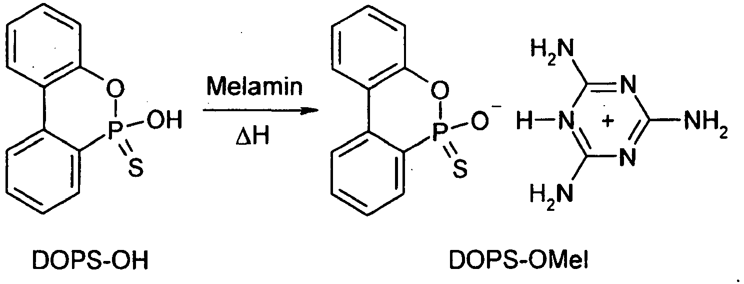

Die Umsetzung von DOPS-OH mit Guanidincarbonat zu DOPS-OGua:

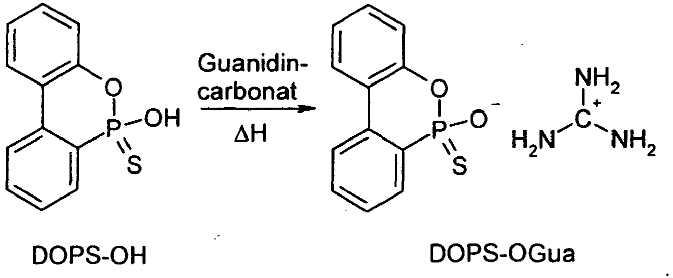

Die Dimerisierung von DOPS-SH zu DOPS-S-DOPS:

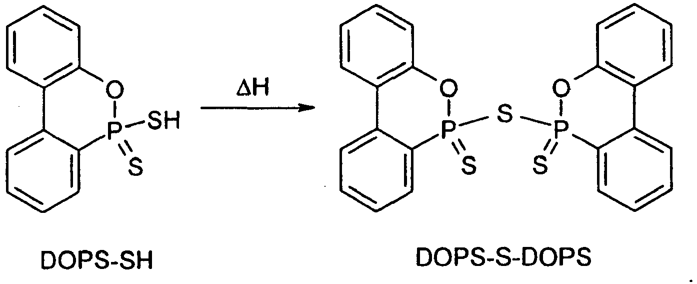

Die Umsetzung von DOPS-SNH(Et)₃ mit Wasserstoffperoxid unter gleichzeitiger Dimerisierung zu DOPS-S₂-DOPS:

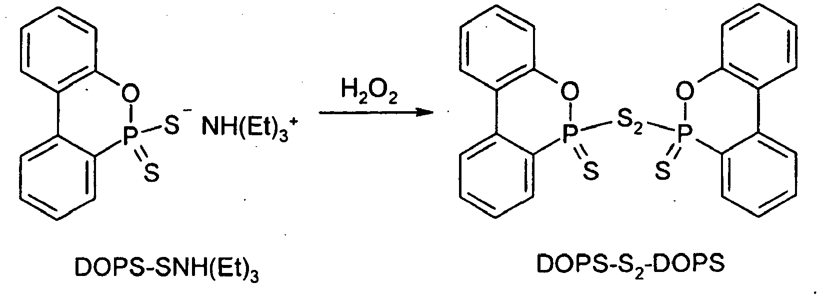

Die Umsetzung von DOPS-SNH(Et)₃ mit Dischwefeldichlorid zu DOPS-S₄-DOPS:

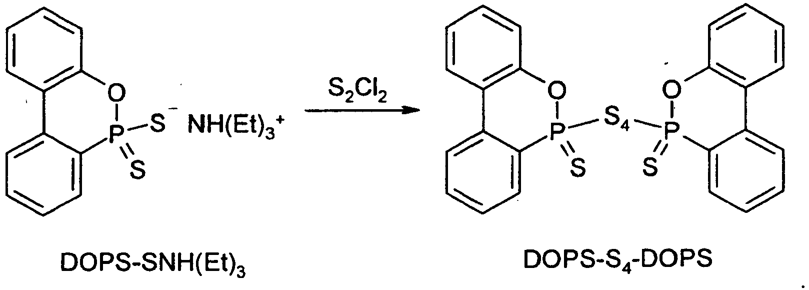

Die Umsetzung von DOP-Cl mit DOPS-OH und Triethylamin und in weiterer Folge mit elementarem Schwefel zu DOPS-O-DOPS:

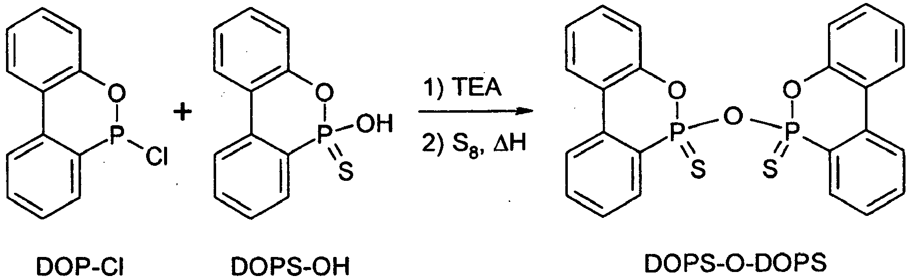

Die Umsetzung von DOP-Cl mit DOPO-OH und Triethylamin und in weiterer Folge mit elementarem Schwefel zu DOPS-O-DOPO:

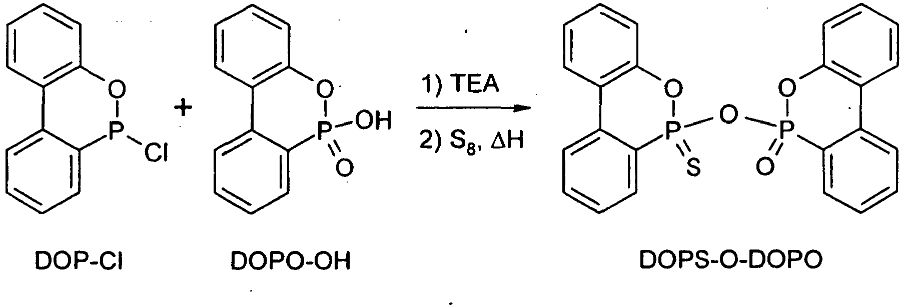

Die Umsetzung von DOP-Cl mit DOPS-SNHEt₃ und in der Folge mit elementarem Schwefel zu DOPS-S-DOPS:

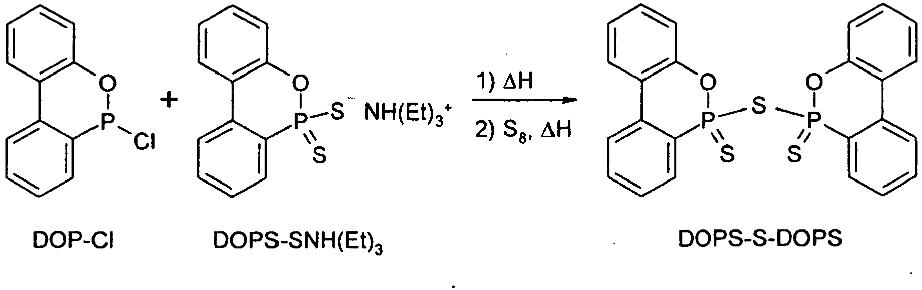

Schließlich existiert auch noch ein alternatives Verfahren zur Herstellung von 9,10-Dihydro-10-mercapto-9-oxa-10-phosphaphenanthren-10-thion bzw. -10-sulfid ("DOPS-SH"), bei dem DOPS-SNH(Et)₃ mit HCl zu DOPS-SH hydrolysiert wird:

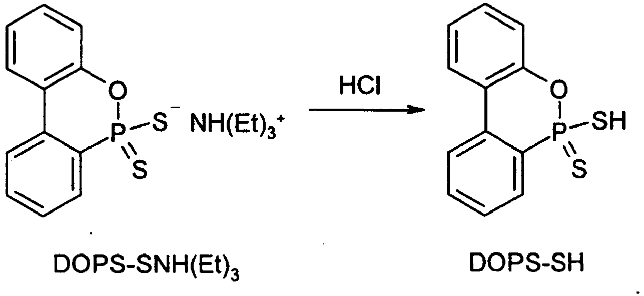

Die Flammschutzmittel-Verbindungen können freilich auch auf anderen Wegen erhalten werden, wobei ein durchschnittlicher Fachmann - unter Berücksichtigung der speziellen Phosphorinchemie - eine Reihe von alternativen Synthesewegen ermitteln kann, und zwar sowohl solche, die bereits von einem DOP-Derivat ausgehen, als auch auch solche, bei denen der Dihydrooxaphosphaphenanthren-Grundkörper erst noch auszubilden ist, z.B. ähnlich jener in DE 20 34 887 offenbarten Synthese ausgehend von o-Phenylphenol.

Beispielhafte Synthesen, die bereits von DOP-Derivaten ausgehen, sind nachstehend angeführt.

Die Umsetzung von DOPS-Cl mit einem Metallhydrid zu DOPS:

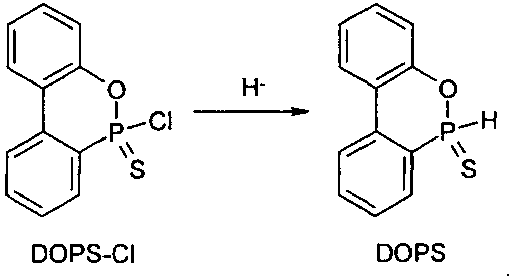

Die Umsetzung von DOPS-Cl mit Wasser oder wässriger Base zu DOPS-OH:

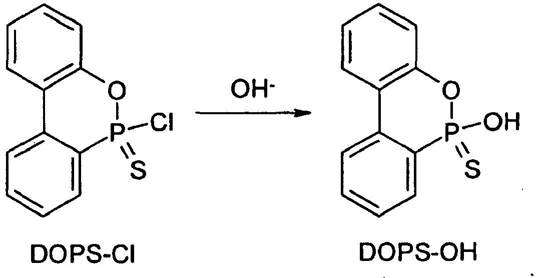

Die Umsetzung von DOPS mit einem organischen oder anorganischen Oxidationsmittel zu DOPS-OH:

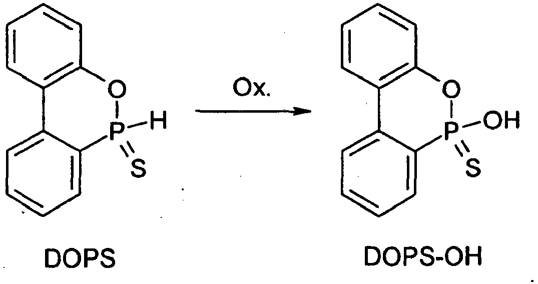

Die Umsetzung von DOPS-OH mit wässrigem Ammoniak zu DOPS-ONH₄:

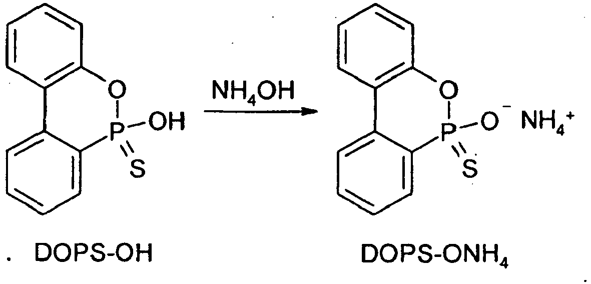

Diese Synthese ist in analoger Weise auch mit DOPS-SH durchführbar:

Die Umsetzung von DOPS-SH mit wässrigem Ammoniak zu DOPS-SNH₄:

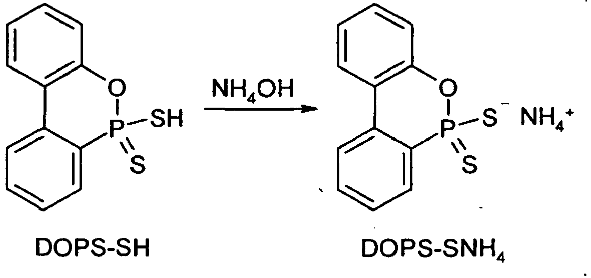

Alternativ dazu können DOPS-OH und DOPS-SH aber auch mit verdünnten Lösungen von Alkali- oder Erdalkalimetallhydroxiden in die entsprechenden Metallsalze oder mit einer Lösung eines Phosphoniumsalzes, z.B. eines Tetraalkylphosphoniumhalogenids oder -phosphats (vorzugsweise in Gegenwart einer mittelstarken oder starken Hilfsbase) in die entsprechenden Phosphoniumsalze übergeführt werden, wobei jedoch darauf zu achten ist, dass es zu keiner Hydrolyse des zyklischen Esters kommt, falls dies nicht erwünscht ist, wiewohl - wie zuvor erwähnt - durchaus auch solche Hydrolysate der erfindungsgemäßen Verbindungen Flammschutzaktivität zeigen können.

Die Umsetzung von DOP-NHPr mit Schwefelwasserstoff zu DOPS:

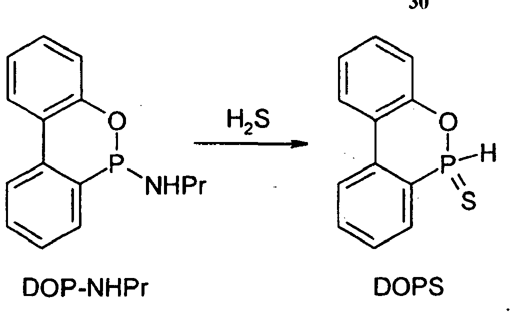

Die Umsetzung von DOPS-Cl mit Schwefelwasserstoff zu DOPS-SH:

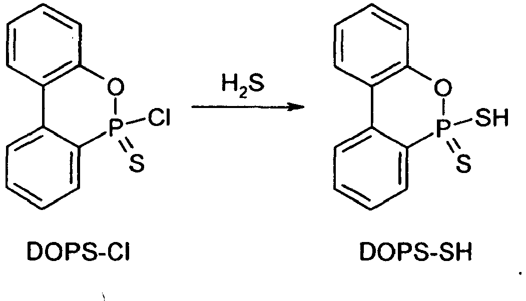

Die Umsetzung von DOPS-Cl mit Schwefelwasserstoff zu DOPS-S-DOPS:

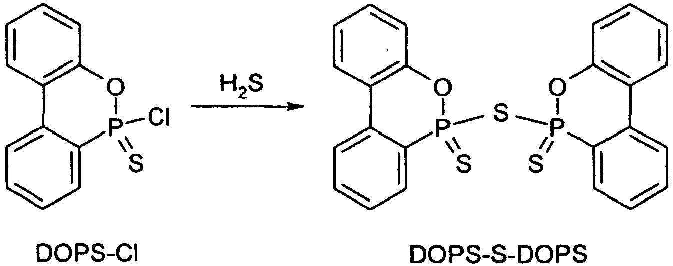

Die Umsetzung von DOPS-Cl mit Wasser zu DOPS-O-DOPS:

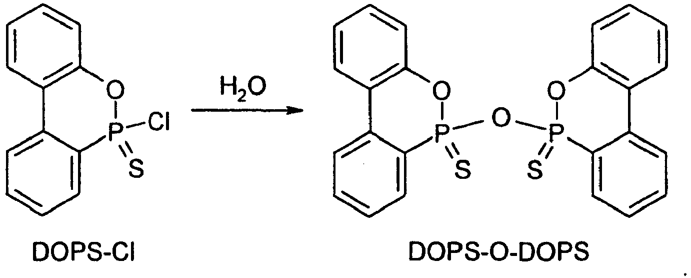

Die Herstellung von für die Synthese relevanten Ausgangsprodukten ("Synthesebeispiele") sowie von obenstehenden Flammschutzmitteln bzw. Derivaten davon ("Beispiele") wird anhand nachstehender - nicht als Einschränkung zu verstehender - Beispiele detaillierter beschrieben, um den Fachmann in die Lage zu versetzen, die Flammschutzmittel herzustellen:

### BEISPIELE

### Synthesebeispiel 1

### Herstellung von 10-Chlor-9,10-dihydro-9-oxa-10-phosphaphenanthren (DOP-Cl)

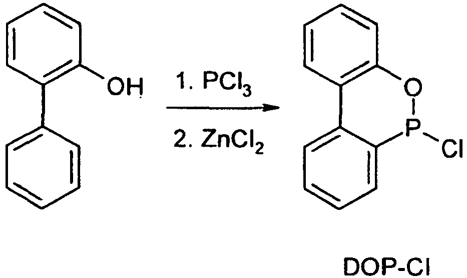

Dieses Ausgangsprodukt für die Synthese erfindungsgemäßer neuer Verbindungen wurde im Wesentlichen entsprechend der Literatur (DE 20 34 887) aus o-Phenylphenol mit PCl₃ und mittels Ringschluss des als Zwischenprodukt erhaltenen Dichlorphosphits unter Zinkchlorid-Katalyse hergestellt.
Ausbeute: 94 % d.Th.

### Synthesebeispiel 2

Herstellung von 10-Chlor-9,10-dihydro-9-oxa-10-phosphaphenanthren-10-thion bzw. -10-sulfid (DOPS-Cl)

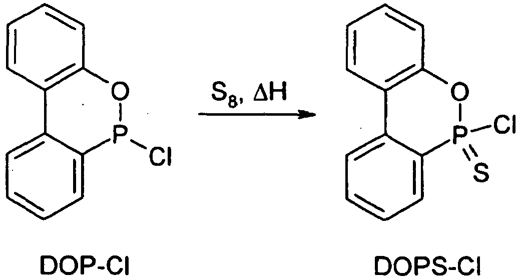

Dieses Ausgangsprodukt für die Synthese erfindungsgemäßer neuer Verbindungen wurde im Wesentlichen entsprechend der Literatur (Chernyshev et al., Zhurnal Obshchei Khimii 42(1), 93-6 (1972)) aus DOP-Cl mit elementarem Schwefel hergestellt.
Ausbeute: 88 % d.Th.

### Synthesebeispiel 3

### Herstellung von 9,10-Dihydro-9-oxa-10-phospha-10-propylaminophenanthren

### (DOP-NHPr)

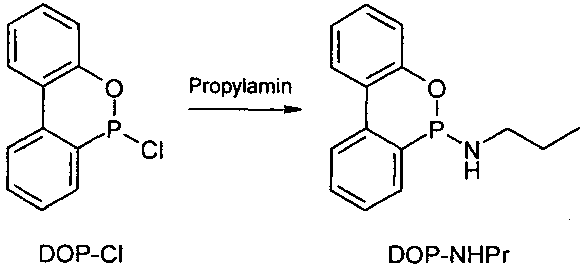

Dieses Ausgangsprodukt für die Synthese erfindungsgemäßer neuer Verbindungen wurde im Wesentlichen entsprechend der Literatur (Ciesielski et al., Polymers for Advanced Technologies 19, 507 (2008)) aus DOP-Cl und n-Propylamin hergestellt.
Ausbeute: 91 % d.Th.

### Beispiel 1

### Herstellung von 9,10-Dihydro-9-oxa-10-phosphaphenanthren-10-thion bzw. -10-sulfid

### (DOPS)

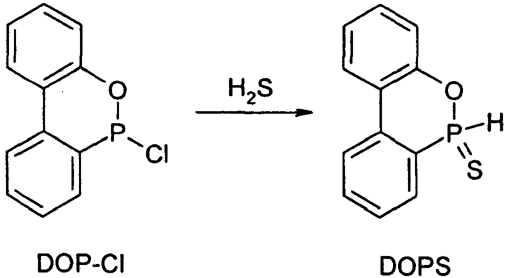

Unter Inertgasspülung wurden 28,1 g (0,12 mol) DOP-Cl in einen mit Gaseinleitrohr, Thermometer, Tropftrichter, mechanischem Rührwerk und Gasableitung ausgestatteten Rundkolben eingebracht, wonach 200 ml luft- und feuchtigkeitsfreies Toluol zugesetzt wurden. Nachdem sich das DOP-Cl vollständig gelöst hatte, wurde H₂S-Gas unter Rühren und Halten der Temperatur bei 25 bis 30 °C eingeleitet. Nach 2 h wurden 18,4 ml (13,4 g, 0,132 mol) Triethylamin zugegeben, was die Ausfällung eines weißen Feststoffs (Triethylamin-hydrochlorid) bewirkte. Nach weiteren 30 min wurde das Einleiten von H₂S-Gas beendet, und 1,5 h später wurde das Rührwerk angehalten. Anschließend wurde der Feststoff abfiltriert und das Toluol im Vakuum abdestilliert. Der verbleibende Rückstand wurde aus Acetonitril umkristallisiert. Dabei wurden 23,7 g (85 % d.Th.) DOPS als weißer, kristalliner Feststoff erhalten.
Fp.: 92-94 °C (Acetonitril)
³¹P-NMR (CDCl₃): 58,7 ppm
MS: 232 (C₁₂H₉OPS)
Elementaranalyse: ber. P 13,35 %, gef. P 13,21 %

### Beispiel 2

### Herstellung von 9,10-Dihydro-10-hydroxy-9-oxa-10-phosphaphenanthren-10-thion bzw. - 10-sulfid (DOPS-OH)

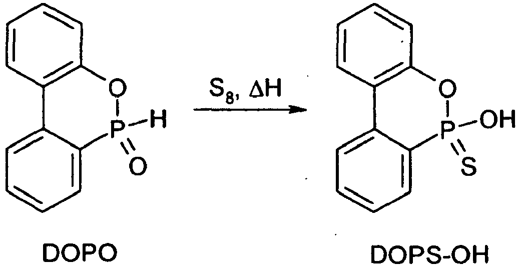

9,10-Dihydro-9-oxa-10-phosphaphenanthren-10-on bzw. -10-oxid (DOPO) wurde im Handel von der Schill + Seilacher AG, Böblingen, Deutschland, bezogen. 240 g (1,11 mol) DOPO und 96 g (3,0 mol) elementarer Schwefel wurden gründlich miteinander vermischt, das Gemisch wurde in einen Rundkolben gefüllt, und die Luft wurde mittels Inertgas (Argon oder Stickstoff) verdrängt. Anschließend wurde der Kolben mit den festen Ausgangsstoffen in einem auf 135 °C voreingestellten Heizbad erhitzt. Nach 15 min wurde das Heizbad entfernt. Die entstandene gelbe Schmelze wurde in ein Stahlgefäß gegossen. Nach dem Abkühlen des Gemischs wurde der erhaltene Feststoff mechanisch zerkleinert und zusammen mit 500 ml Methanol erwärmt. Anschließend wurde der überschüssige Schwefel abfiltriert, und das Methanol wurde am Rotationsverdampfer unter Teilvakuum abdestilliert, wobei ein hellgelbes Rohprodukt erhalten wurde, das aus 700 ml Toluol umkristallisiert wurde. Das Toluol wurde im Vakuum entfernt, wobei 248,1 g (90 % d.Th.) DOPS-OH in Form von weißen Kristallen erhalten wurden.
Fp.: 149-151 °C (Toluol)
³¹P-NMR (CDCl₃): 72,2 ppm
MS: 248 (C₁₂H₉O₂PS)
Elementaranalyse: ber. P 12,49 %, gef. P 12,28 %

### Beispiel 3

### Herstellung von 9,10-Dihydro-10-hydroxy-9-oxa-10-phosphaphenanthren-10-thion- bzw. - 10-sulfid-ammoniumsalz (DOPS-ONH₄)

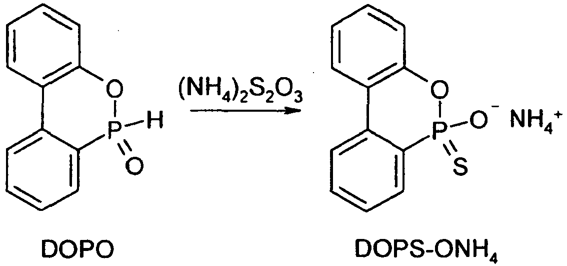

21,6 g (0,10 mol) DOPO und 14,8 g (0,10 mol) Ammoniumthiosulfat wurden gründlich vermischt, und das Gemisch wurde in einen Rundkolben übergeführt. Anschließend wurde der Kolben mit den festen Ausgangsstoffen in einem auf 160 °C voreingestellten Heizbad erhitzt. Nach 30 min wurde das Heizbad entfernt und das Reaktionsgemisch etwas abkühlen gelassen. Danach wurden 250 ml Ethanol zugesetzt und das Gemisch zum Sieden gebracht. Anschließend wurde der ungelöste Feststoff abfiltriert und das Filtrat im Vakuum eingedampft. Der Rückstand (ca. 20 g), der zu ca. 85 % aus DOPS-ONH₄ bestand, wurde aus Acetonitril umkristallisiert, was 19,1 g (75 % d.Th.) DOPS-ONH₄ in Form von weißen Kristallen erhalten.
Fp.: 238-239 °C (Zers.) (Acetonitril)
³¹P-NMR (CDCl₃/Ethanol): 60,1 ppm
MS: 248 (analog DOPS-OH)
Elementaranalyse: ber. P 11,69 %, gef. P 11,43 %

### Beispiel 4

### Herstellung von 9,10-Dihydro-10-hydroxy-9-oxa-10-phosphaphenanthren-10-thion- bzw. - 10-sulfid-ammoniumsalz (DOPS-ONH₄)

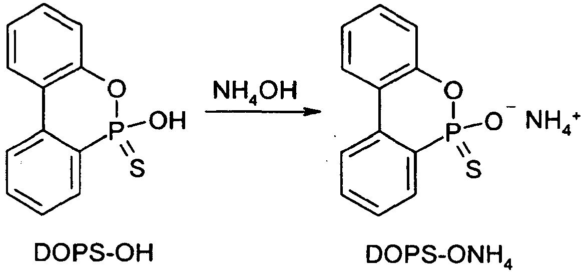

12,4 g (0,05 mol) DOPS-OH wurden unter leichtem Erwärmen in 50 ml Ethanol gelöst. Nach dem Abkühlen wurden 8 ml 25%ige Ammoniaklösung zugesetzt. Die Lösung wurde 1 h lang bei Raumtemperatur stehen gelassen, wonach das Ethanol im Vakuum entfernt wurde. Der Rückstand wurde aus Acetonitril umkristallisiert, wobei 11,5 g (90 % d.Th.) DOPS-ONH₄ in Form von weißen Kristallen erhalten wurden. Das so erhaltene Produkt war chemisch identisch mit jenem von Beispiel 3.

### Beispiel 5

### Herstellung von 9,10-Dihydro-10-mercapto-9-oxa-10-phosphaphenanthren-10-thion bzw. - 10-sulfid (DOPS-SH)

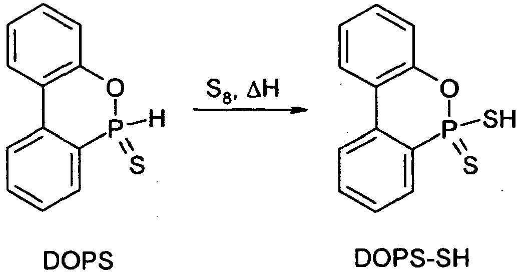

11,6 g (0,05 mol) DOPS und 1,6 g (0,05 mol) elementarer Schwefel wurden gründlich vermischt, das Gemisch wurde in einen Rundkolben übergeführt, und die Luft wurde mit einem Inertgas (Stickstoff) verdrängt. Anschließend wurden die festen Ausgangsstoffe in einem auf 130 °C voreingestellten Heizbad erhitzt. Nach 15 min wurde das Heizbad entfernt. Die entstandene hellgelbe Schmelze wurde ausgegossen und erstarrte beim Abkühlen zu einem amorphen Feststoff, der gemäß NMR-Analyse 93 % DOPS-SH im Gemisch mit DOPS-Ausgangsprodukt enthielt.
³¹P-NMR (CDCl₃): 78,7 ppm
MS: 264 (C₁₂H₉OPS₂)

### Beispiel 6

### Herstellung von Bis(9,10-dihydro-9-oxa-10-oxo-10-phosphaphenanthren-10-yl)sulfid (DOPO-S-DOPO) und 9,10-Dihydro-10-(9,10-dihydro-9-oxa-10-phospha-10-thioxophenanthren-10-ylthio)-9-oxa-10-phosphaphenanthren-10-on bzw. -10-oxid (DOPS-S-DOPO)

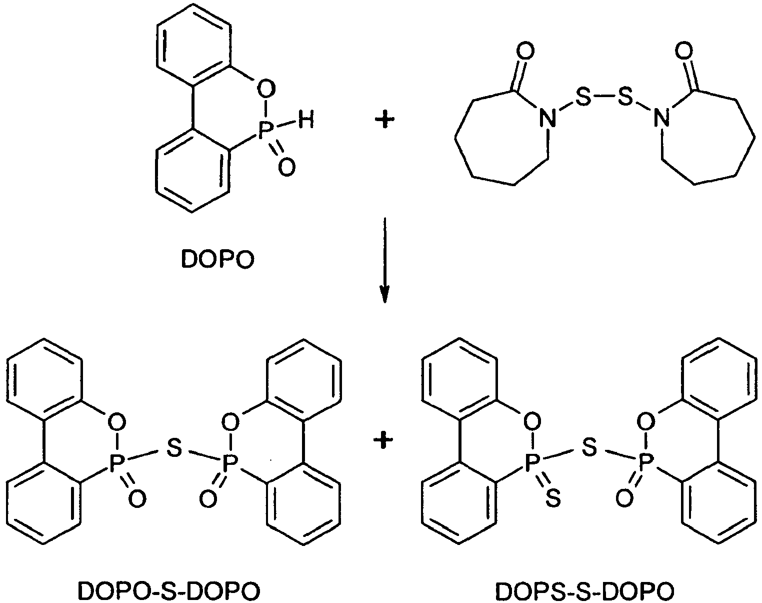

30 g (0,139 mol) DOPO, 20 g (0,69 mol) N,N'-Dicaprolactamdisulfid (Bis(hexahydro-2-oxo-2H-azepin-1-yl)disulfid) und 120 ml Toluol wurden in einem mit einem Rückflusskühler, einem mechanischen Rührwerk und einem Inertgaseinleitrohr ausgestatteten Rundkolben 3 h lang unter Rückfluss und Luftausschluss gerührt. Nach dem Abkühlen wurde die überstehende, dunkle Lösung durch Dekantieren entfernt. Der Rückstand wurde mit 200 ml Acetonitril aufgekocht, und die heiße Lösung wurde durch ein Faltenfilter filtriert. Beim Abkühlen schied sich ein körniger Feststoff ab, der abfiltriert und im Vakuum getrocknet wurde. Auf diese Weise wurden 19,8 g eines grauen Pulvers erhalten, das laut NMR-Analyse ein 37:63-Gemisch der Verbindungen DOPO-S-DOPO und DOPS-S-DOPO war.
³¹P-NMR (CDCl₃): DOPO-S-DOPO: 0,61 ppm
DOPS-S-DOPO: 0,14 ppm, 0,61 ppm, 63,4 ppm, 63,7 ppm
MS: DOPO-S-DOPO: 462 (C₂₄H₁₆O₄P₂S)
DOPS-S-DOPO: 478 (C₂₄H₁₆O₃P₂S₂)
Elementaranalyse (37 % DOPO-S-DOPO, 63 % DOPS-S-DOPO):
ber. P 13,13 %, gef. P 13,40 %

### Beispiel 7

### Herstellung von 9,10-Dihydro-10-mercapto-9-oxa-10-phosphaphenanthren-10-thion- bzw. -10-sulfid-triethylammoniumsalz (DOPS-SNH(Et)₃)

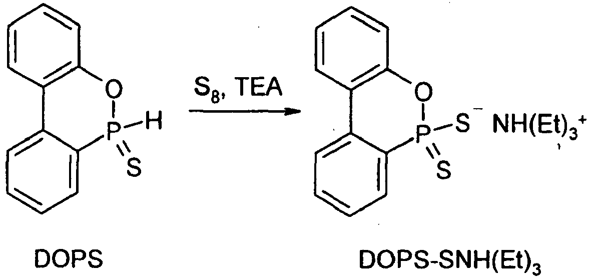

9,3 g (0,04 mol) DOPS und 1,31 g (0,041 mol) Schwefel wurden in 100 ml abs. Toluol 1,5 h lang bei 35 °C gerührt. Anschließend wurden 5,3 g (0,053 mol) Triethylamin unter Rühren zugetropft und die erhaltene Suspension 1 h lang bei etwa 50 °C gerührt. Nach dem Abkühlenlassen auf Raumtemperatur wird der ausgefallene Feststoff abfiltriert, mit Diethylether gewaschen und unter leichtem Erwärmen im Vakuum getrocknet. Auf diese Weise wurden 13,4 g (92 % d.Th.) DOPS-SNH(Et)₃ als weißer kristalliner Feststoff erhalten.
Fp.: 137-139 °C
³¹P-NMR (CDCl₃): 99,8 ppm
Elementaranalyse: ber. P 8,47 %, gef. P 8,32 %

### Beispiel 8

### Herstellung von 9,10-Dihydro-10-mercapto-9-oxa-10-phosphaphenanthren-10-thion- bzw. -10-sulfid-triethylammoniumsalz (DOPS-SNH(Et)₃)

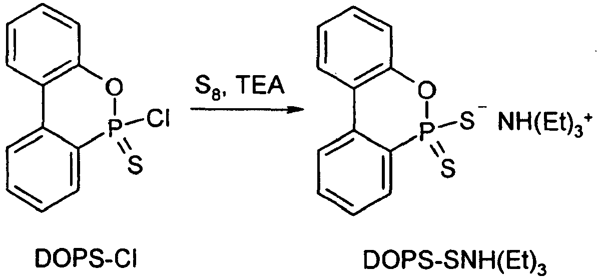

26,6 g DOPS-Cl (0,1 mol) wurden in 75 ml trockenem Toluol bei 80 °C gelöst, woraufhin 34 g (0,33 mol) Triethylamin und danach 7 g (0,22 mol) elementarer Schwefel zugesetzt wurden. Das Reaktionsgemisch wurde unter Inertgasatmosphäre 6 h lang bei 90 °C gerührt, wonach die Temperatur auf 100 °C erhöht und weitere 5 h lang gerührt wurde. Im Reaktionsverlauf färbte sich der Kolbeninhalt dunkel, und es bildete sich ein zäher Bodensatz, der beim anschließenden Abkühlen zu einem Feststoff erstarrte. Dieser wurde mittels einer Glasfritte abgesaugt, dreimal mit Toluol gewaschen und getrocknet. Anschließend wurde der Feststoff bei Raumtemperatur 5 min lang in 200 ml Ethanol gerührt, um Triethylamin-hydrochlorid zu entfernen, abgesaugt, mit 100 ml Toluol aufgeschlämmt und bei 60 °C 30 min lang gerührt, um die dunklen Verunreinigungen zu entfernen. Danach wurde das Produkt abgesaugt, mit Diethylether gewaschen und im Vakuum getrocknet. Erhalten wurden 29,6 g DOPS-SNH(Et)₃ als leicht bräunliches Pulver (80 % d.Th.), das mit dem Produkt aus Beispiel 7 chemisch identisch war.

### Beispiel 9

### Herstellung von 9,10-Dihydro-10-hydroxy-9-oxa-10-phosphaphenanthren-10-thion- bzw. -10-sulfid-triethylammoniumsalz (DOPS-ONH(Et)₃)

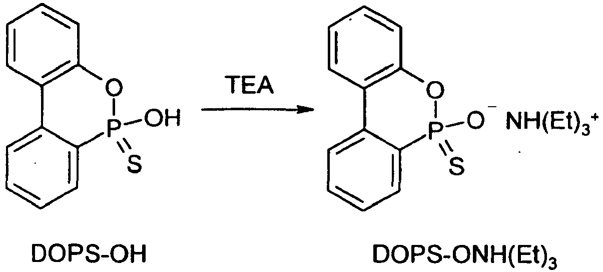

Zu einer Suspension von 12,41 g (0,05 mol) DOPS-OH in 75 ml abs. Toluol wurden bei 60 °C innerhalb von 15 min 6 g (0,06 mol) Triethylamin unter Rühren zugetropft. Das Reaktionsgemisch wurde weitere 30 min lang gerührt und danach abgekühl. Der dabei ausfallende Feststoff wurde über eine Glasfritte abfiltriert, mit Ether gewaschen und unter leichtem Ewärmen im Vakuum getrocknet. Auf diese Weise wurden 13,4 g (99% d.Th.) DOPS-OH(Et)₃ als weißer kristalliner Feststoff erhalten.
Fp.: 147-148,5 °C
³¹P-NMR (CDCl₃): 61,3 ppm
Elementaranalyse: ber. P 8,86 %, gef. P 8,78 %

### Beispiel 10

### Herstellung von 9,10-Dihydro-10-hydroxy-9-oxa-10-phosphaphenanthren-10-thion- bzw. - 10-sulfid-melaminiumsalz (DOPS-OMeI)

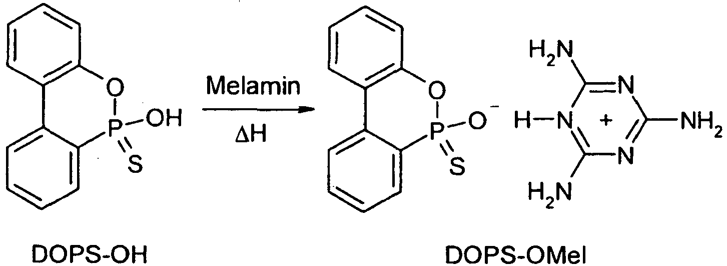

Unter Inertgasspülung wurden in einem mit einem mechanischen Rührer und einem Rückflusskühler ausgestatteten Rundkolben 126,1 g (1,0 mol) fein gemahlenes Melamin in 1300 ml Wasser bei Raumtemperatur vorgelegt. Dieser Suspension wurden unter starkem Rühren 248,2 g (1,0 mol) DOPS-OH zugesetzt. Das Reaktionsgemisch wurde auf 90 °C erhitzt und weitere 4 h lang bei gleicher Temperatur gerührt. Der beim Abkühlen auf Raumtemperatur entstandene rührbare Brei wurde filtriert, und der Filterkuchen wurde bis zu einer Restfeuchte < 0,1 % (Karl Fischer) bei 70 °C an der Luft getrocknet und anschließend vermahlen, wobei 365,7 g (98 % d.Th.) DOPS-OMeI als feinkristalliner, weißer Feststoff erhalten wurden.
Fp.: 275 °C (Zers.) (H₂O)
³¹P-NMR (MeOH-d₄): 60,7 ppm
Elementaranalyse: ber. P 8,27 %, N 22,44 %, gef. P 8,19 %, N 22,42

### Beispiel 11

### Herstellung von 9,10-Dihydro-10-hydroxy-9-oxa-10-phosphaphenanthren-10-thion- bzw. - 10-sulfid-guanidiniumsalz (DOPS-OGua)

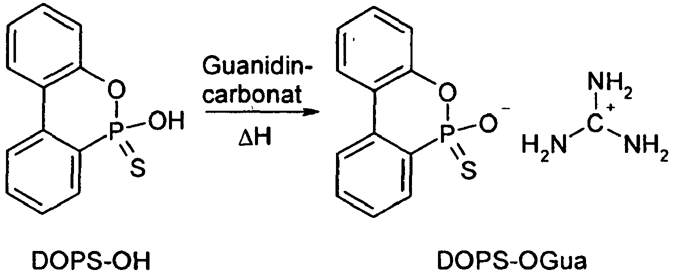

Unter Inertgasspülung wurden in einem mit einem mechanischen Rührer und einem Rückflusskühler ausgestatteten Rundkolben 90,1 g (0,5 mol) Guanidincarbonat in 300 g Wasser bei 60 °C gelöst. Unter starkem Rühren wurden zu dieser Lösung portionsweise und unter Vermeidung zu starker Gasentwicklung 248,2 g (1,0 mol) DOPS-OH zugesetzt. Die erhaltene Suspension wurde zunächst bei Normaldruck auf 140 °C und nach Ende der Dampfentwicklung im Wasserstrahlvakuum auf 185 °C erhitzt, um das Wasser zu entfernen. Nach dem Ausgießen, Kühlen und Vermahlen der gebildeten wasserfreien Schmelze wurden 304,5 g (99 % d.Th.) DOPS-OGua als bernsteinfarbenes Pulver erhalten.
Fp.: 173-179 °C (H₂O)
³¹P-NMR (Aceton-d₆): 57,9 ppm
Elementaranalyse: ber. P 10,07 %, N 13,67 %, gef. P 10,27 %, N 13,69

### Beispiel 12

### Herstellung von Bis(9,10-dihydro-9-oxa-10-phospha-10-thioxophenanthren-10-yl)sulfid (DOPS-S-DOPS)

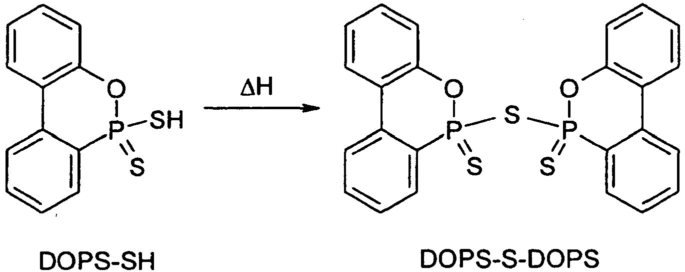

13,21 g (0,05 mol) DOPS-SH wurden in 120 ml Acetonitril 2 h lang unter Rückfluss und Inertgasatmosphäre gerührt, wobei ein körniger Feststoff gebildet wurde, der abfiltriert und anschließend 1 h lang in Xylol unter Rückfluss gerührt wurde. Danach wurde der Feststoff abfiltriert, mit warmem Chloroform und danach mit Diethylether gewaschen und anschließend im Vakuum getrocknet. So wurden 7,7 g (78 % d.Th.) DOPS-S-DOPS als weißer kristalliner Feststoff erhalten.
Fp.: 237-239 °C (Xylol)
³¹P-NMR (CDCl₃): 74,1 ppm; 74,8 ppm
MS: 494 (C₂₄H₁₆O₂P₂S₃)
Elementaranalyse: ber. P 12,53 %, gef. P 12,41 %

### Beispiel 13

### Herstellung von Bis(9,10-dihydro-9-oxa-10-phospha-10-thioxophenanthren-10-yl)disulfid (DOPS-S₂-DOPS)

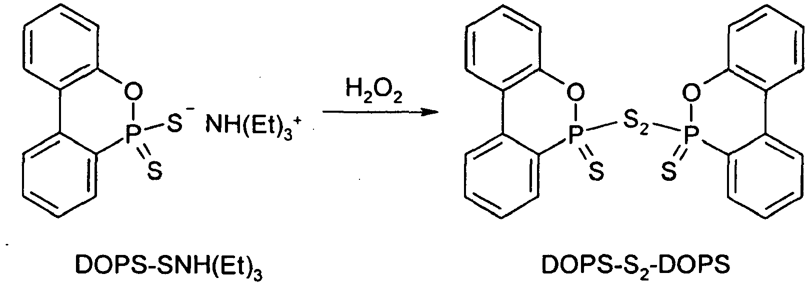

Zu einer Suspension von 5,48 g (0,015 mol) DOPS-ONH(Et)₃ in 50 ml abs. Toluol wurden bei etwa 20 °C mithilfe einer Spritze 0,66 g (0,018 mol) 37%ige Salzsäure zugesetzt, wonach 5,6 g (0,016 mol) einer 10%igen Lösung von Wasserstoffperoxid in Ethylacetat innerhalb von 10 min unter kräftigem Rühren zugetropft wurden. Nach weiteren 30 min wurden 0,75 ml Triethylamin zugesetzt, um überschüssige Salzsäure zu neutralisieren, wonach die flüchtigen Bestandteile im Vakuum abdestilliert wurden. Der Rückstand wurde mit einem Gemisch aus 75 ml Wasser und 25 ml Ethanol etwa 15 min lang unter leichtem Erwärmen gerührt, um Triethylamin-hydrochlorid aufzulösen. Anschließend wurde der Feststoff abgesaugt und ein weiteres Mal in Wasser/Ethanol gerührt. Das nach erneutem Absaugen und Trocknung unter leichtem Erwärmen im Vakuum erhaltene weiße Pulver wurde aus Acetonitril umkristallisiert wurde, wobei 3,20 g (81 % d.Th.) DOPS-S₂-DOPS erhalten wurden.
Fp.: 126-130 °C (Zers.) (Acetonitril)
³¹P-NMR (CDCl₃): 84,28 ppm; 84,65 ppm
MS: 526 (C₂₄H₁₆O₂P₂S₄)
Elementaranalyse: ber. P 11,76 %, gef. P 11,62 %

### Beispiel 14

### Herstellung von Bis(9,10-dihydro-9-oxa-10-phospha-10-thioxophenanthren-10-yl)tetrasulfid (DOPS-S₄-DOPS)

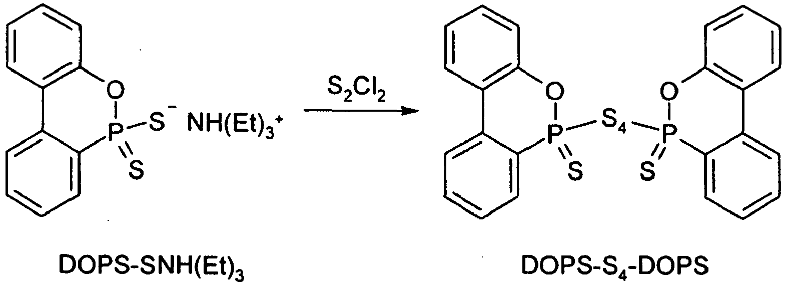

Zu einer Suspension von 2,75 g (0,0075 mol) DOPS-ONH(Et)₃ in 50 ml abs. Toluol wurden bei etwa 20 °C mithilfe einer Spritze 0,51 g (0,00375 mol) Dischwefeldichlorid innerhalb von 5 min zugesetzt. Nach Beendigung der Zugabe wurde das Reaktionsgemisch 2 h lang bei Raumtemperatur gerührt, wonach die flüchtigen Bestandteile im Vakuum abdestilliert wurden. Der Rückstand wurde mit einem Gemisch aus 50 ml Wasser und 10 ml Ethanol etwa 30 min lang bei 35 °C gerührt, um Triethylamin-hydrochlorid aufzulösen. Anschließend wurde der Feststoff abgesaugt und ein weiteres Mal in einem Gemisch aus 30 ml Wasser und 20 ml Ethanol gerührt. Nach dem Abfiltrieren wurde der Feststoff aus Acetonitril umkristallisiert und anschließend unter leichtem Erwärmen im Vakuum getrocknet, wobei 1,9 g (86 % d.Th.) DOPS-S₄-DOPS als weißer Feststoff erhalten wurden.
Fp.: ab ca. 150 °C (Zers.) (Acetonitril)
³¹P-NMR (CDCl₃): 84,0 ppm; 84,5 ppm
MS: 590 (C₂₄H₁₆O₂P₂S₆)
Elementaranalyse: ber. P 10,49 %, gef. P 10,56 %

### Beispiel 15

### Herstellung von Di(9,10-dihydro-9-oxa-10-phospha-10-thioxophenanthren-10-yl)ether (DOPS-O-DOPS)

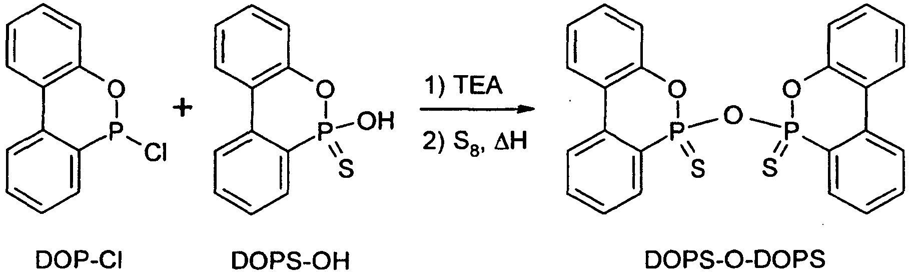

### 1) Dimerisierung

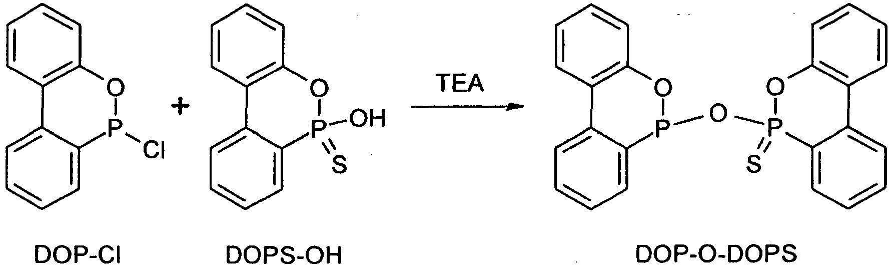

Unter Inertgasspülung wurden 23,5 g (0,10 mol) DOP-Cl in einen mit Thermometer, mechanischem Rührwerk und Rückflusskühler ausgestatteten Rundkolben eingebracht, wonach 130 ml luft- und feuchtigkeitsfreies Toluol zugesetzt wurden und das Gemisch auf 60 °C erhitzt wurde. Nachdem sich das DOP-Cl vollständig gelöst hatte, wurden 12,3 g (0,12 mol) Triethylamin zugegeben. Anschließend wurden 24,8 g (0,1 mol) DOPS-OH innerhalb von 15 min zugegeben. Nach weiteren 6 h bei 60 °C wurden Heizung und Rührer abgestellt, und der Reaktionsansatz wurde 12 h lang bei Raumtemperatur stehen gelassen.

### 2) Sulfidierung

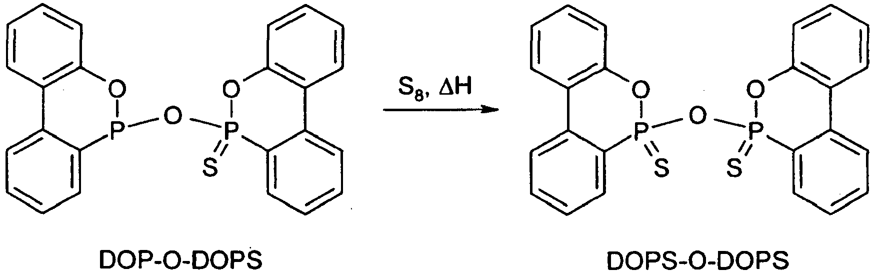

Nun wurden 3,2 g (0,1 mol) Schwefel zugegeben, und die Suspension wurde auf 80 °C erhitzt. Nach 1,5 h wurde die Temperatur auf 100 °C erhöht, und 4 h später wurden Heizung und Rührer abgeschaltet. Nach dem Abkühlen wurde der ausgefallene Feststoff abfiltriert, in Wasser aufgeschlämmt, um das Triethylammoniumchlorid zu entfernen, und erneut abfiltriert. Dieser Waschvorgang wurde wiederholt. Anschließend wurde der noch bräunliche Feststoff mit Chloroform gewaschen und dann im Vakuum getrocknet. Erhalten wurde DOPS-O-DOPS als weißer Feststoff (43 g, d.h. 90 % d.Th.).
Fp.: 210-215 °C
³¹P-NMR (CDCl₃): 62,3 ppm; 62,8 ppm
MS: 478 (C₂₄H₁₆O₃P₂S₂)
Elementaranalyse: ber. P 12,95 %, gef. P 12,61 %

### Beispiel 16

### Herstellung von 9,10-Dihydro-10-(9,10-dihydro-9-oxa-10-phospha-10-thioxophenanthren-10-yloxy)-9-oxa-10-phosphaphenanthren-10-on bzw. -10-oxid (DOPS-O-DOPO)

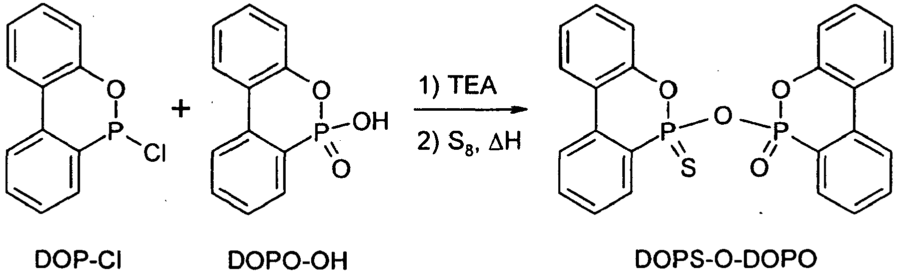

### 1) Dimerisierung

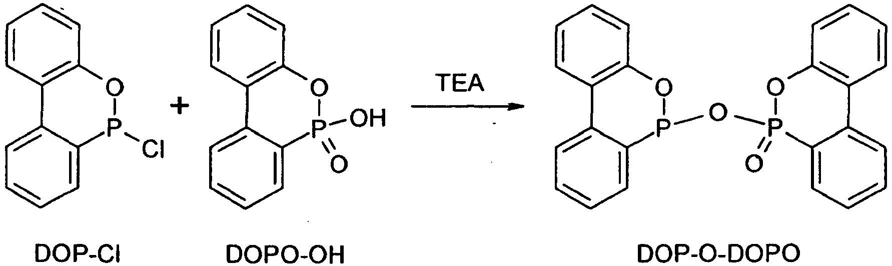

Unter Inertgasspülung wurden 22,7 g (0,097 mol) DOP-Cl in einen mit Thermometer, mechanischem Rührwerk und Rückflusskühler ausgestatteten Rundkolben eingebracht, wonach 100 ml luft- und feuchtigkeitsfreies Toluol zugesetzt wurden und das Gemisch auf 60 °C erhitzt wurde. Nachdem sich das DOP-Cl vollständig gelöst hatte, wurden 10,0 g (0,10 mol) Triethylamin zugegeben. Anschließend wurden 22,5 g (0,097 mol) DOPS-OH innerhalb von 10 min zugegeben, und das Reaktionsgemisch wurde 3 h lang bei 60 °C gerührt.

### 2) Sulfidierung

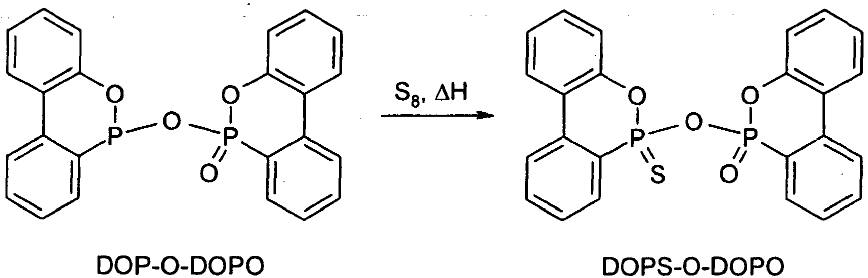

Nun wurden 3,2 g (0,10 mol) elementarer Schwefel zugegeben, und das Reaktionsgemisch wurde 6 h lang bei 95 °C gerührt, wonach Heizung und Rührer abgeschaltet wurden. Nach dem Abkühlen wurde der ausgefallene Feststoff abfiltriert, in Wasser aufgeschlämmt um das Triethylammoniumchlorid zu entfernen, und erneut abfiltriert. Dieser Waschvorgang wurde wiederholt. Anschließend wurde der Feststoff im Vakuum getrocknet. Erhalten wurde DOPS-O-DOPO als weißer Feststoff (39 g, d.h. 87 % d.Th.).
Fp.: 211-216 °C
³¹P-NMR (CDCl₃): -0,61 ppm; -0,29 ppm; -0,03 ppm, 0,30 ppm;
63,26 ppm; 63,45 ppm; 63,58 ppm; 63,79 ppm
MS: 462 (C₂₄H₁₆O₄P₂S)
Elementaranalyse: ber. P 13,40 %, gef. P 13,45 %

### Beispiel 17

### Herstellung von Bis(9,10-dihydro-9-oxa-10-phospha-10-thioxophenanthren-10-yl)sulfid (DOPS-S-DOPS)

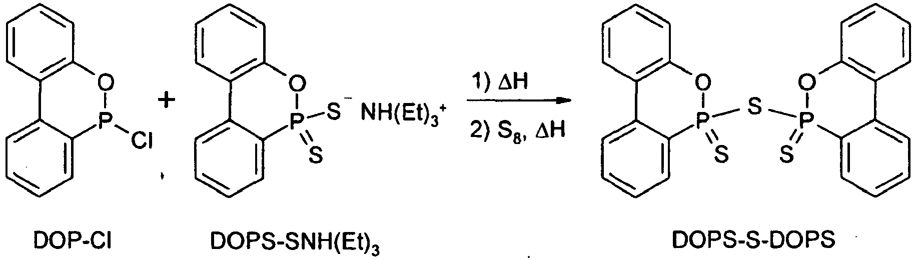

### 1) Dimerisierung

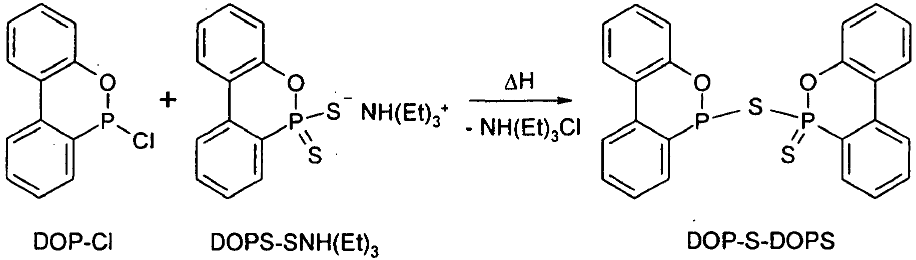

Unter Inertgasspülung wurden 4,7 g (0,02 mol) DOP-Cl in einen mit Thermometer, mechanischem Rührwerk und Rückflusskühler ausgestatteten Rundkolben eingebracht, wonach 60 ml luft- und feuchtigkeitsfreies Toluol zugesetzt wurden und das Gemisch auf 60 °C erhitzt wurde. Nachdem sich das DOP-Cl vollständig gelöst hatte, wurden unter Rühren 7,3 g (0,02 mol) DOPS-SNH(Et)₃ zugegeben, und das Reaktionsgemisch wurde 4 h lang bei 60 °C gerührt. Die erhaltene Suspension wurde wurde ohne vorherige Abkühlung unter Feuchtigkeitsausschluss filtriert, um das Triethylammoniumchlorid abzutrennen. Der Filterkuchen wurde mit warmem abs. Toluol nachgewaschen, wonach die Filtrate vereinigt und im Vakuum auf ca. 50 ml eingeengt wurden.

### 2) Sulfidierung

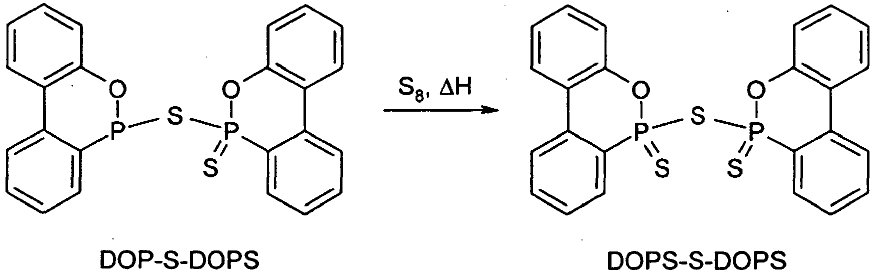

Zur eingeengten Lösung von DOP-S-DOPS wurden 0,64 g (0,02 mol) elementarer Schwefel zugegeben, wonach das Reaktionsgemisch bei 100 °C 4 h lang unter Inertgasatmosphäre gerührt wurde. Nach dem Abkühlen wurde der ausgefallene Feststoff abfiltriert, mit warmem abs. Toluol gewaschen und im Vakuum getrocknet. Erhalten wurde DOPS-S-DOPS als hellgraues Pulver (5,1 g, d.h. 52 % d.Th.). Das so erhaltene Produkt war chemisch identisch mit jenem von Beispiel 12.

### Beispiel 18

### Herstellung von 9,10-Dihydro-10-mercapto-9-oxa-10-phosphaphenanthren-10-thion bzw. - 10-sulfid (DOPS-SH)

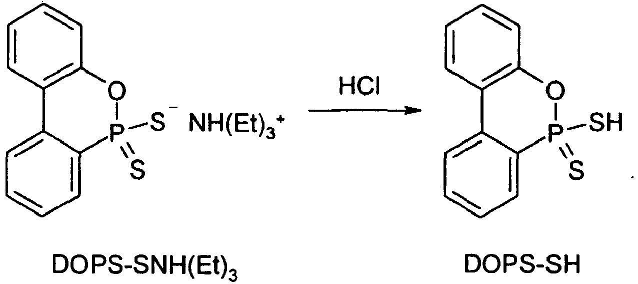

9,13 g (0,025 mol) DOPS-SNH(Et)₃ wurden bei 60 °C unter Inertgasatmosphäre in 100 ml Ethanol gelöst. Nach dem Abkühlen wurden 50 ml konz. Salzsäure, 200 ml Wasser und ca. 20 g NaCl zugesetzt, wonach 150 ml Toluol hinzugefügt wurden. Dieses Gemisch wurde 10 min gerührt und dann in einen Scheidetrichter übergeführt. Die Toluolphase wurde abgetrennt und die wässrige Phase dreimal mit je 30 ml Toluol extrahiert. Die organischen Phasen wurden vereinigt, mit 50 ml Wasser gewaschen und über Na₂SO₄ getrocknet. Nach Abfiltrieren des Trocknungsmittels und Abdestillieren des Toluols im Vakuum wurde DOPS-SH in 85%iger Ausbeute als kristalliner Feststoff erhalten.
³¹P-NMR (CDCl₃): 78,7 ppm
MS: 264 (C₁₂H₉OPS₂)
Elementaranalyse: ber. P 11,72 %, gef. P 11,29 %

### Beispiel 19

### In-situ-Herstellung von 9,10-Dihydro-10-hydroxy-9-oxa-10-phosphaphenanthren-10-thion bzw. -10-sulfid (DOPS-OH) bei der Flammschutzausrüstung von Kunststoffen

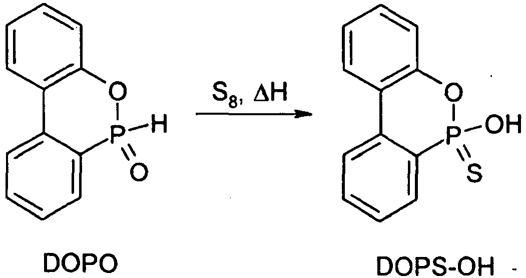

Der Reaktionsmechanismus war analog zu Beispiel 2. Polystyrol-Granulat (M_{w}: ca. 192.000 g/mol, T_{g}: ca. 94 °C) wurde zusammen mit 5 Gew.-% DOPO und 2 Gew.-% Schwefel bei 175-180 °C mit einer Verweilzeit von 3 min in einem Doppelschneckenextruder der Marke Prism Eurolab 16 von Thermo Scientific unter Verwendung einer Düse mit einem Austrittsspalt von 16 x 4 mm zu einem einheitlichen Strang verarbeitet. Anhand von ³¹P-NMR-Analysen wurde gezeigt, dass DOPO praktisch quantitativ zu DOPS-OH umgesetzt war.

Durch diese Beispiele wird der Fachmann somit in die Lage versetzt, die gewünschten Flammschutzmittel als solche sowie allenfalls benötigte Ausgangsprodukte herzustellen.

### Herstellung von expandierbaren Polymerisaten mit derartigen Flammschutzmitteln:

Dazu ist grundsätzlich zu bemerken, dass die Herstellung von flammgeschützten expandierbaren Polymerisaten, z.B. von EPS, in Form von Granulaten bzw. Perlen dem Fachmann an sich bekannt ist und die Herstellung der erfindungsgemäßen Polymerisate mit obenstehenden Flammschutzmitteln im wesentlichen analog funktioniert. So können beispielsweise die Ausführungsbeispiele der WO 2006/027241 herangezogen werden, wobei statt der dort verwendeten Phosphorverbindungen, die in vorliegender Erfindung genannten Flammschutzmittel verwendet werden. Ebensolches gilt auch für die Polymerschaumstoffe bzw. für XPS.

Die vorliegende Erfindung wird nachstehend nunmehr beispielhaft anhand von konkreten, jedoch nicht einschränkend zu verstehenden, Ausführungsbeispielen detailliert und nacharbeitbar beschrieben. In weiterer Folge werden diese Beispiele dann auch herangezogen, um die Wirksamkeit zu demonstrieren.

### a) erste Versuchsreihe (6 Beispiele):

Bei Beispiel 4 handelt es sich um ein Vergleichsbeispiel mit dem bekannten Flammschutzmittel DOPO für nachfolgende Tabelle 4.

### Beispiel 1 (Ausführungsbeispiel - 5 % DOPS-OH):

Einem Styrolpolymer (SUNPOR EPS-STD: 6 Gew% Pentan, Kettenlänge MW = 200.000 g/mol, Uneinheitlichkeit MW/Mn=2,5) wurde im Einzugsbereich eines Doppelschneckenextruders 5 Gew% 6-Hydroxy-6Hdibenz[c,e][1,2]-oxaphosphorine-6-sulfid (Hydroxy-DOPS), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

### Beispiel 2 (Ausführungsbeispiel - 10 % DOPS-OH):

Beispiel 1 wurde wiederholt mit dem Unterschied, dass 10 Gew% 6-Hydroxy-6Hdibenz[c,e][1,2]oxaphosphorine-6-sulfid (Hydroxy-DOPS), bezogen auf das erhaltene EPS-Granulat, zudosiert wurden.

### Beispiel 3 (Ausführungsbeispiel - zusätzlich HBCD):

Beispiel 1 wurde wiederholt mit dem Unterschied, dass zusätzlich 0,1 Gew% Hexabromcyclododecan (HBCD), bezogen auf das erhaltene EPS-Granulat, zudosiert wurden.

### Beispiel 4 (Vergleichsbeispiel - 10 % DOPO):

Einem Styrolpolymer (SUNPOR EPS-STD: 6 Gew% Pentan, Kettenlänge MW = 200.000 g/mol, Uneinheitlichkeit MW/Mn =2,5) wurde im Einzugsbereich eines Doppelschneckenextruders 10 Gew% 9,10-Dihydro-9-oxa-10-phospha-phenanthren-10-oxid (DOPO), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

### Beispiel 5 (Ausführungsbeispiel - zusätzliche Additive):

Beispiel 1 wurde wiederholt mit dem Unterschied, dass zusätzlich 0,2 Gew% Dicumylperoxid (DCP) und 0,2 Gew% 4-Hydroxy-2,2,6,6-tetramethylpiperidino-N-oxid (HTEMPO), bezogen auf das erhaltene EPS Granulat, zudosiert wurden.

### Beispiel 6 (Ausführungsbeispiel - 10 % DOPS-OH, alternative Herstellung + Additive):

4 kg Styrol wurden in einem mit einem Rührwerk, Heizung und Kühlung ausgestattetem Druckreaktor vorgelegt und darin 10 Gew% 6-Hydroxy-6H-dibenz[c,e][1,2]oxaphosphorine-6-sulfid (Hydroxy-DOPS), bezogen auf die erhaltenen EPS-Perlen, gelöst. Des Weiteren wurden 10 g Dibenzoylperoxid (75% in Wasser), 8g tert-Butylperoxy-2-ethylhexylcarbonat und 10 g Dicumylperoxid zugegeben. Dem Ansatz wurden 20 Liter vollentsalztes Wasser das 14 g Natriumphyrophosphat und 26 g Magnesiumsulfat enthielt zugegeben und unter ständigem Rühren 5 Stunden auf 90°C gehalten. Der Reaktor wurde geschlossen und nach Zugabe von 7% Pentan, bezogen auf Styrol, wurde auf 125°C erhitzt und 2,5 Stunden auf dieser Temperatur gehalten. Die erhaltenen EPS-Perlen hatten eine durchschnittliche Korngröße von 1 mm.

### b) zweite Versuchsreihe (20 Beispiele):

### Vergleichsbeispiele:

### Beispiel 1 (Vergleichsbeispiel - 10 % DOPO):

Einem Styrolpolymer (SUNPOR EPS-STD: 6 Gew% Pentan, Kettenlänge MW = 200.000 g/mol, Uneinheitlichkeit MW/Mn=2,5) wurde im Einzugsbereich eines Doppelschneckenextruders 10 Gew% 9,10-Dihydro-9-oxa-10-phospha-phenanthren-10-oxid (DOPO), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

### Beispiel 2 (Vergleichsbeispiel - 15 % DOPO):

Beispiel 1 wurde wiederholt mit dem Unterschied, dass 15 Gew% 9,10-Dihydro-9-oxa-10-phospha-phenanthren-10-oxid (DOPO), bezogen auf das erhaltene EPS-Granulat, zudosiert wurden.

### Beispiel 3 (Vergleichsbeispiel - 5 % Schwefel):

Beispiel 1 wurde wiederholt mit dem Unterschied, dass nur 5 Gew% gelber Schwefel, bezogen auf das erhaltene EPS-Granulat, zudosiert wurden.

### Ausführungsbeispiele:

### Beispiel 4 (Ausführungsbeispiel - 10 % DOPS-SNH(Et)₃):

Einem Styrolpolymer (SUNPOR EPS-STD: 6 Gew% Pentan, Kettenlänge MW = 200.000 g/mol, Uneinheitlichkeit Mw/Mn=2,5) wurde im Einzugsbereich eines Doppelschneckenextruders 10 Gew% 9,10-Dihydro-10-mercapto-9-oxa-10-phosphaphenanthren-10-thion- bzw. -10-sulfid-triethylammoniumsalz (DOPS-SNH(Et)₃), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

Die folgenden Ausführungsbeispiele wurden analog bzw. bei gleichen Bedingungen zu den Beispielen 1 bis 4 durchgeführt, jedoch mit unterschiedlichen Flammschutzmitteln bzw. Synergisten. Die Angaben in Gew% sind jeweils auf das erhaltene EPS-Granulat bezogen:

### Beispiel 5 (Ausführungsbeispiel - 10 % DOPS-SNH(Et)₃ + 2% Schwefel):

10 Gew% 9,10-Dihydro-10-mercapto-9-oxa-10-phosphaphenanthren-10-thion- bzw. -10-sulfid-triethylammoniumsalz (DOPS-SNH(Et)₃) und 2 Gew% gelber Schwefel

### Beispiel 6 (Ausführungsbeispiel - 10 % DOPS-ONH(Et)₃):

10 Gew% 9,10-Dihydro-10-hydroxy-9-oxa-10-phosphaphenanthren-10-thion- bzw. -10-sulfid-triethylammoniumsalz (DOPS-ONH(Et)₃)

### Beispiel 7 (Ausführungsbeispiel - 10 % DOPS-ONH(Et)₃ + 2% Schwefel):

10 Gew% 9,10-Dihydro-10-hydroxy-9-oxa-10-phosphaphenanthren-10-thion- bzw. -10-sulfid-triethylammoniumsalz (DOPS-ONH(Et)₃) und 2 Gew% gelber Schwefel

### Beispiel 8 (Ausführungsbeispiel - 7,5 % DOPS-OMeI + 2% Schwefel):

7,5 Gew% 9,10-Dihydro-10-hydroxy-9-oxa-10-phosphaphenanthren-10-thion- bzw. -10-sulfid-melaminiumsalz (DOPS-OMeI) und 2 Gew% gelber Schwefel

### Beispiel 9 (Ausführungsbeispiel - 7,5 % DOPS-OMeI + 5% BBDS):

7,5 Gew% 9,10-Dihydro-10-hydroxy-9-oxa-10-phosphaphenanthren-10-thion- bzw. -10-sulfid-melaminiumsalz (DOPS-OMeI) und 5 Gew% Bis(benzothiazolyl)disulfid (BBDS)

### Beispiel 10 (Ausführungsbeispiel - 7,5 % DOPS-OGua + 2% Schwefel):

7,5 Gew% 9,10-Dihydro-10-hydroxy-9-oxa-10-phosphaphenanthren-10-thion- bzw. -10-sulfid-guanidiniumsalz (DOPS-OGua) und 2 Gew% gelber Schwefel

### Beispiel 11 (Ausführungsbeispiel - 7,5 % DOPS-OGua + 5% BBDS):

7,5 Gew% 9,10-Dihydro-10-hydroxy-9-oxa-10-phosphaphenanthren-10-thion- bzw. -10-sulfid-guanidiniumsalz (DOPS-OGua) und 5 Gew% Bis(benzothiazolyl)disulfid (BBDS)

### Beispiel 12 (Ausführungsbeispiel - 7,5 % DOPS- S-DOPS + 2% Schwefel):

7,5 Gew% Bis(9,10-dihydro-9-oxa-10-phospha-10-thioxophenanthren-10-yl)sulfid (DOPS-S-DOPS) und 2 Gew% gelber Schwefel

### Beispiel 13 (Ausführungsbeispiel - 7,5 % DOPS- S-DOPS + 5% DCDS):

7,5 Gew% Bis(9,10-dihydro-9-oxa-10-phospha-10-thioxophenanthren-10-yl)sulfid (DOPS-S-DOPS) und 5 Gew% N,N'-Dicaprolactamdisulfid (DCDS)

### Beispiel 14 (Ausführungsbeispiel - 7,5 % DOPS- S-DOPS + 5% BBDS):

7,5 Gew% Bis(9,10-dihydro-9-oxa-10-phospha-10-thioxophenanthren-10-yl)sulfid (DOPS-S-DOPS) und 5 Gew% Bis(benzothiazolyl)disulfid (BBDS)

### Beispiel 15 (Ausführungsbeispiel - 10 % DOPS-S₂-DOPS):

10 Gew% Bis(9,10-dihydro-9-oxa-10-phospha-10-thioxophenanthren-10-yl)disulfid (DOPS-S₂-DOPS)

### Beispiel 16 (Ausführungsbeispiel - 7,5 % DOPS-S₂-DOPS + 2% Schwefel):

7,5 Gew% Bis(9,10-dihydro-9-oxa-10-phospha-10-thioxophenanthren-10-yl)disulfid (DOPS-S₂-DOPS) und 2 Gew% gelber Schwefel

### Beispiel 17 (Ausführungsbeispiel - 10 % DOPS-S₄-DOPS):

10 Gew% Bis(9,10-dihydro-9-oxa-10-phospha-10-thioxophenanthren-10-yl)tetrasulfid (DOPS-S₄-DOPS)

### Beispiel 18 (Ausführungsbeispiel - 7,5 % DOPS-S₄-DOPS + 2% Schwefel):

7,5 Gew% Bis(9,10-dihydro-9-oxa-10-phospha-10-thioxophenanthren-10-yl)tetrasulfid (DOPS-S₄-DOPS) und 2 Gew% gelber Schwefel

### Beispiel 19 (Ausführungsbeispiel - 7,5 % DOPS-O-DOPS + 2% Schwefel):

7,5 Gew% Bis(9,10-dihydro-9-oxa-10-phospha-10-thioxophenanthren-10-yl)oxid (DOPS-O-DOPS) und 2 Gew% gelber Schwefel

### Beispiel 20 (Ausführungsbeispiel - 7,5 % DOPO-O-DOPS + 2% Schwefel):

7,5 Gew% DOPO-O-DOPS und 2 Gew% gelber Schwefel

Durch diese Beispiele wird der Fachmann somit in die Lage versetzt, die expandierbaren Polymerisate sowie die Polymerschaumstoffe herzustellen.

### Nachweise der Wirksamkeit der Flammschutzmittel:

### a) Wirksamkeit bei kompaktem Polystyrol:

Schon bei kompaktem Polystyrol zeigen sich vorteilhafte Wirkungen der obengenannten Flammschutzmittel:
Aus Polystyrol-Granulat (M_{w}: ca. 192.000 g/mol, T_{g}: ca. 94 °C) wurden wie folgt Probenkörper geformt: Das Granulat wurde zu einem Pulver vermahlen und in einem Mörser mit den jeweiligen Additiven vermischt. Je 12 g dieser Feststoff-Mischungen wurden in Aluminiumtiegel eingewogen, die anschließend in einen vorgeheizten Trockenschrank gestellt und so lange bei der jeweils erforderlichen Temperatur darin belassen wurden, bis das Pulver zu kompakten Platten verschmolzen war. Die dafür erforderliche Temperatur ist von der Zusammensetzung der jeweiligen Mischung abhängig und lag bei den untersuchten Probekörpern zwischen 165 und 195 °C, und der Schmelzvorgang war nach 10 bis 20 min beendet, wie dies in der nachfolgenden Tabelle angegeben ist. Nach dem Abkühlen wurden die Platten aus den Aluminiumtiegeln entnommen und zu Prüfkörpern für die Flammschutztests zersägt.

Einerseits wurden zur Untersuchung der Nachbrenndauer (in s) bei Beflammung gemäß UL94 Probenkörper mit 70 x 13 x 4 mm hergestellt.

Bei UL94 handelt es sich um die Prüfvorschrift der Underwriters Laboratories, die inhaltsgleich in die IEC/DIN EN 60695-11-10 und -20 übernommen wurde. Dabei wirken Zündflammen mit einer Leistung von 50 W zweimal kurzzeitig auf den Probenkörper ein, wobei bei der Vertikalprüfung die Brennzeit und das Abfallen brennender Teile mithilfe eines unterhalb des Probenkörpers angeordneten Wattebauschs bewertet werden. Die Klassifizierung erfolgt in den Stufen "V0", "V1" und "V2", die in nachstehender Tabelle 1 erläutert werden:

**Tabelle 1: UL94-Klassifizierung**

| Klassifizierung | V0 | V1 | V2 |
|---|---|---|---|
| Nachbrennzeit nach jeder Beflammung | ≤ 10 s | ≤ 30 s | ≤ 30 s |
| Gesamtbrenndauer je Satz (10 Beflammungen) | ≤ 50 s | ≤ 250 s | ≤ 250 s |
| Nachbrennzeit/Nachglühen nach der 2. Beflammung | ≤ 30 s | ≤ 60 s | ≤ 60 s |
| Abbrand bis zur Haltekammer | nein | nein | nein |
| Entzündung der Watte | nein | nein | ja |

Die Klassifizierung "V0" stellt demnach die höchste Anforderung beim Brandschutz dar und ist daher beim Einsatz von Flammschutzzusammensetzungen anzustreben.

Andererseits wurden Probenkörper mit 120 x 10 x 4 mm hergestellt und gemäß ISO 4589 untersucht, um ihren Sauerstoff-Index (LOI, "Limiting Oxygen Index") zu bestimmen. Dabei handelt es sich um die minimale Sauerstoffkonzentration (im Gemisch mit Stickstoff), bei der die Verbrennung eines Probenkörpers gerade noch aufrechtgehalten wird. Hierzu wird ein vertikal angeordneter Probenkörper in einem Gaszylinder, der mit dem jeweiligen Sauerstoff/Stickstoff-Gemisch durchströmt wird, mittels einer Propangasflamme gezündet und sein Brennverhalten beobachtet. Kürzere Brenndauer- und höhere LOI-Werte stehen folglich für bessere Brandschutzwirkung.

Die für drei Testreihen von Probenkörpern erhaltenen Ergebnisse sind in den nachstehenden Tabellen angeführt und stellen Mittelwerte von je vier Messungen dar.

**Tabelle 2: Testreihe 1 - Brandschutztests gemäß UL94 und ISO 4589 für kompaktes Polystyrol**

| Versuch Nr. | Polystyrol (Gew.-%) | Additiv(e), Gew.-% | Verarbeitungsbedingungen | Brenndauer (s) | LOI (% O₂) |
|---|---|---|---|---|---|
| 1 | 100 | - | 180 °C | keine Selbstverlöschung | 18,6 |
| | | | 15 min | | |
| 2 | 95 | Vergl.: DOPO, 5 | 180 °C | keine Selbstverlöschung | 20,5 |
| | | | 12 min | | |
| 3 | 90 | Vergl.: DOPO, 10 | 180 °C | 24 | 20,8 |
| | | | 12 min | | |
| 4 | 95 | Erf.: DOPS-OH, 5 | 175 °C | 24 | 22,6 |
| | | | 15 min | | |
| 5 | 94 | Erf.: DOPS-OH, 5 | 175 °C | 2,2 | 25 |
| | | Schwefel, 1 | 15 min | | |
| 6 | 93,5 | Erf.: DOPS-OH, 5 | 170-175 °C | 2,0 | 25,5 |
| | | Schwefel, 1,5 | 15 min | | |
| 7 | 92 | Erf.: DOPS-OH, 5 | 175 °C | 1,6 | 25,2 |
| | | Schwefel, 3 | 15 min | | |
| 8 | 93 | Erf.: DOPS-OH, 7 | 170-173 °C | 12 | 23,0 |
| | | | 12 min | | |
| 9 | 90 | Erf.: DOPS-OH, 10 | 170-173 °C | 4,0 | 23,4 |
| | | | 12 min | | |
| 10 | 95 | Erf.: DOPS, 5 | 170-175 °C | keine Selbstverlöschung | 21,0 |
| | | | 12 min | | |
| 11 | 94 | Erf.: DOPS, 5 | 170-175 °C | 1,2 | 24,3 |
| | | Schwefel, 1 | 12 min | | |
| 12 | 95 | Erf.: DOPS-SH, 5 | 170-174 °C | 4,9 | 23,2 |
| | | | 12 min | | |
| 13 | 90 | Erf.: DOPS-OH, 5 | 160-163 °C | 6,3 | 23,5 |
| | | DCDS, 5 | 10 min | | |
| 14 | 88 | Erf.: DOPS-OH, 7 | 160-163 °C | 1,6 | 24,3 |
| | | DCDS, 5 | 10 min | | |

| | | | | | |
|---|---|---|---|---|---|
| DCDS: N,N'-Dicaprolactamdisulfid | | | | | |

Zu Vergleichszwecken werden LOI-Werte für elementaren Schwefel als alleiniges Flammschutzadditiv in Polystyrol (Molekulargewicht: 120.000 bis 250.000 g/mol) angeführt. Diese Werte wurden der WO 99/10429 entnommen:

**Tabelle 3: Brandschutztests gemäß ISO 4589 mit elementarem Schwefel**

| Versuch Nr. | Schwefel (Gew.-%) | LOI (% O₂) |
|---|---|---|
| A-1 | 10,0 | 22,3 |
| A-2 | 3,0 | 22,2 |
| A-3 | 1,0 | 21,9 |
| A-4 | 0,44 | 20,7 |
| A-5 | 0,18 | 19,0 |

Die obigen Ergebnisse belegen klar, dass die obenstehenden Verbindungen bei kompakten Polymeren mitunter erheblich bessere Flammschutzwirkung zeigen als das bekannte Additiv DOPO, insbesondere bei kombinierter Verwendung mit elementarem Schwefel oder schwefelhältigen Verbindungen, mit denen sie synergistische Wirkung zeigen, was aus Tabelle 2, aus einem Vergleich der Tabellen 2 und 3, aber auch daraus hervorgeht, dass bei Verdoppelung der Schwefelmenge bei Versuch Nr. 7 im Vergleich zu Versuch Nr. 6 keine Verbesserung der Brandschutzwirkung erzielt wurde. Zudem ist die Einarbeitung der erfindungsgemäßen Verbindungen in eine Harzmasse in den meisten Fällen gegenüber DOPO erleichtert.

Umseitig sind die Ergebnisse der Brandschutztests gemäß UL94 für eine zweite Testreihe von neuen Verbindungen gemäß vorliegender Erfindung angeführt.

**Tabelle 4: Testreihe 2 - Brandschutztests gemäß UL94**

| Versuch Nr. | Polystyrol (Gew.-%) | Additiv(e), Gew.-% | Verarbeitungsbedingungen | Brenndauer (s) |
|---|---|---|---|---|
| 15 | 100 | - | 180 °C | keine Selbstverlöschung |
| | | | 15 min | |
| 16 | 97 | Vergl.: Schwefel, 3 | 180 °C | keine Selbstverlöschung |
| | | | 12 min | |
| 17 | 95 | Vergl.: Schwefel, 5 | 180 °C | 40 |
| | | | 12 min | |
| 18 | 95 | Vergl.: DOPO, 5 | 180 °C | keine Selbstverlöschung |
| | | | 12 min | |
| 19 | 90 | Vergl.: DOPO, 10 | 180 °C | 24 |
| | | | 12 min | |
| 20 | 95 | Vergl.: BBDS, 5 | 180 °C | 7,2 |
| | | | 15 min | |
| 21 | 92,5 | Vergl.: DOPO, 5 BBDS, 2,5 | 180 °C | 4,0 |
| | | | 14 min | |
| 22 | 92,5 | Erf.: DOPS-SNH(Et)₃, 7,5 | 175 °C | 33 |
| | | | 14 min | |
| 23 | 91 | Erf.: DOPS-SNH(Et)₃, 7,5 Schwefel, 1,5 | 175 °C | 4,6 |
| | | | 15 min | |
| 24 | 93 | Erf.: DOPS-ONH(Et)₃, 7 | 175 °C | 33 |
| | | | 13 min | |
| 25 | 91,5. | Erf.: DOPS-ONH(Et)₃, 7 Schwefel, 1,5 | 180 °C | 11 |
| | | | 14 min | |
| 26 | 95,5 | Erf.: DOPS-OMel, 2,5 Schwefel, 2 | 190 °C | 7,6 |
| | | | 15 min | |
| 27 | 92 | Erf.: DOPS-Omel, 3 BBDS, 5 | 190 °C | 17,5 |
| | | | 15 min | |
| 28 | 94,5 | Erf.: DOPS-OGua, 3,5 Schwefel, 2 | 190 °C | 5,7 |
| | | | 15 min | |
| 29 | 92 | Erf.: DOPS-OGua, 3 BBDS, 5 | 190 °C | 17,5 |
| | | | 15 min | |
| 30 | 94 | Erf.: DOPS-S-DOPS, 3,5 Schwefel, 2,5 | 175-180 °C | 1,9 |
| | | | 14 min | |
| 31 | 91,5 | Erf.: DOPS-S-DOPS, 3,5 DCDS, 5 | 170 °C | 29 |
| | | | 12 min | |
| 32 | 92,5 | Erf.: DOPS-S-DOPS, 2,5 BBDS, 5 | 195 °C | 2,0 |
| | | | 14 min | |
| 33 | 94,3 | Erf.: DOPS-S₂-DOPS, 5,7 | 173-176 °C | 6,1 |
| | | | 14 min | |
| 34 | 94 | Erf.: DOPS-S₂-DOPS, 3,5 Schwefel, 2,5 | 175 °C | 17 |
| | | | 14 min | |
| 35 | 94 | Erf.: DOPS-S₄-DOPS, 6 | 175 °C | 22 |
| | | | 14 min | |
| 36 | 94,5 | Erf.: DOPS-S₄-DOPS, 4 Schwefel, 1,5 | 175 °C | 19 |
| | | | 14 min | |

| | | | | |
|---|---|---|---|---|
| DCDS: N,N'-Dicaprolactamdisulfid BBDS: Bis(benzothiazolyl)disulfid | | | | |

Die Ergebnisse in Tabelle 4 belegen ebenfalls klar, dass die neuen Verbindungen bessere Flammschutzwirkung zeigen als das bekannte Additiv DOPO, insbesondere bei kombinierter Verwendung mit elementarem Schwefel oder schwefelhältigen Verbindungen.

Darüber hinaus zeigt die obige Tabelle aber auch klar, dass der Synergismus der erfindungsgemäßen Verbindungen substanzspezifisch ist, d.h. nicht jede schwefelhältige, als flammschutzfördernd bekannte Verbindung wirkt in gleichem Ausmaß synergistisch, wenn überhaupt. Beispielsweise liefert das Melaminium- bzw. Guanidiniumsalz von DOPS (Versuche 26 bis 29) mit Schwefel wesentlich bessere Ergebnisse als mit BBDS, obwohl BBDS bei alleinigem Einsatz bessere Flammschutzwirkung aufweist als die gleiche Gewichtsmenge an Schwefel. Diese Spezifität des Synergismus wird auch durch die Versuche 30 bis 32 belegt, in denen das Dimer DOPS-S-DOPS mit Schwefel und BBDS als Synergisten ausgezeichnete Ergebnisse liefert, während mit DCDS eine, allgemein betrachtet, durchschnittliche, im Vergleich mit den übrigen Zusammensetzungen der Erfindung jedoch eher schlechte Leistung erzielt wird.

Der Versuch, die mitunter ausgezeichneten Ergebnisse des Dimers DOPS-S-DOPS durch die Gegenwart der doppelten molaren Menge an Phosphor und sogar der dreifachen Menge an Schwefel bei gleichen Gewichtsanteilen zu erklären, wird durch die Versuche 33 bis 36 mit DOPS-S₂-DOPS und DOPS-S₄-DOPS widerlegt. Obwohl in derselben Gewichtsmenge dieser Verbindungen zunehmend mehr Schwefel vorhanden ist, verschlechtern sich die Brenndauer-Werte sogar.

Umseitig sind die Ergebnisse der Brandschutztests gemäß UL94 für eine dritte Testreihe von neuen Verbindungen gemäß vorliegender Erfindung unter Verwendung eines weiteren Synergisten angeführt.

**Tabelle 5: Testreihe 3 - Brandschutztests gemäß UL94**

| Versuch Nr. | Polystyrol (Gew.-%) | Additiv(e), Gew.-% | Verarbeitungsbedingungen | Brenndauer (s) |
|---|---|---|---|---|
| 37 | 100 | - | 190 °C | keine Selbstverlöschung |
| | | | 15 min | |
| 38 | 96 | Vergi.: Vultac TB7, 4 | 190 °C | 18 |
| | | | 15 min | |
| 39 | 93 | Vergl.: Vultac TB7, 7 | 190 °C | 11 |
| | | | 15 min | |
| 40 | 97 | Erf.: DOPS-ONH₄, 3 | 190 °C | 23 |
| | | | 15 min | |
| 41 | 93 | Erf.: DOPS-ONH₄, 3 Vultac TB7, 4 | 190 °C | 5,2 |
| | | | 15 min | |
| 42 | 93,5 | Erf.: DOPS-O-DOPO, 2,5 Vultac TB7, 4 | 190 °C | 6,7 |
| | | | 15 min | |
| 43 | 93,5 | Erf.: DOPS-O-DOPS, 2,5 Vultac TB7, 4 | 190 °C | 3,2 |
| | | | 15 min | |

| | | | | |
|---|---|---|---|---|
| Vultac TB7: p-tert-Butylphenoldisulfid-Polymer (Polysulfid); ein Vulkanisationsmittel von Arkema Inc. (Philadelphia, PA, USA) | | | | |

Die Ergebnisse in Tabelle 5 belegen erneut die Wirksamkeit der erfindungsgemäßen neuen Verbindungen als Flammschutzmittel, insbesondere zusammen mit einem schwefelhätigen Synergisten. Bemerkenswert ist hier vor allem, dass Vultac TB7, ein von Arkema Inc. als Vulkanisationsmittel vertriebenes Polysulfid, alleine zwar ebenfalls ganz gute Brandschutzwirkung zeigt, zusammen mit Verbindungen der vorliegenden Erfindung jedoch noch deutlich wirksamere Kombinationen bildet, die somit großes Potenzial als Flammschutzzusammensetzungen aufweisen.

Zusammenfassend belegen die obigen Versuche klar die Eignung der neuen DOPS-Derivate als Flammschutzmittel bei kompakten Polymeren, alleine oder in Kombination mit einem weiteren, synergistisch wirkenden Additiv, wobei dieser Synergismus hierin als substanzspezifisch identifiziert wurde. Insbesondere ist dies der Fall bei kombinierter Verwendung mit elementarem Schwefel oder schwefelhältigen Verbindungen, mit denen sie synergistische Wirkung zeigen. Den jeweils geeignetsten Synergisten für die jeweilige erfindungsgemäße Verbindung herauszufinden, wird somit das Ziel weiterer Untersuchungen sein. Dazu sollte der durchschnittliche Fachmann problemlos und ohne übermäßiges Experimentieren in der Lage sein, indem beispielsweise in Reihenversuchen ein Panel bekannter Flammschutzmittel in Kombination mit jedem einzelnen DOPS-Derivat gemäß UL94 und/oder ISO 4589 getestet wird.

### b) Wirksamkeit bei expandierbaren Polymerisaten bzw. Polymerschaumstoffen:

Auch für die erfindungsgemäßen flammgeschützten expandierbaren treibmittelhaltigen Polymerisate sowie für die daraus herstellbaren Polymerschaumstoffe - für die bekanntlich, wie bereits einleitend erwähnt, besondere Probleme bestehen - zeigt sich ein eindeutiges Ergebnis, das die, gleich in mehrfacher Hinsicht bestehenden, Vorteile der obenstehenden Flammschutzmittel bestätigt:

### Ergebnisse und Bewertung der ersten Versuchsreihe:

Nachfolgende Tabelle 6 stellt die Ergebnisse der zuvor beschriebenen ersten Versuchsreihe übersichtlich nebeneinander, wobei sowohl die Parameter der Viskositätsabnahme im Extruder, die Zeit bis zum Kollaps der aufgeschäumten Schaumstoffperlen sowie das Brandverhalten von definierten Prüfkörpern überprüft wurden.

**Tabelle 6: erste Versuchsreihe - Prüfung der expandierbaren Polymerisate bzw. der Polymerschaumstoffe**

| | Brandprüfung | Viskositätsabnahme in Extruder | Zeit bis zum Kollaps |
|---|---|---|---|
| Versuch 1 (nach Beispiel 1) | 3 | 2 | 2 |
| Versuch 2 (nach Beispiel 2) | 2 | 2 | 2 |
| Versuch 3 (nach Beispiel 3) | 1 | 2 | 2 |
| Versuch 4 (nach Beispiel 4) | 4 | 4 | 4 |
| Versuch 5 (nach Beispiel 5) | 1 | 2 | 2 |
| Versuch 6 (nach Beispiel 6) | 2 | - | 2 |

Die mit Versuch 1 bis 6 bezeichneten und in der linken Spalte verzeichneten Ergebnisse wurden durch Versuche mit Produkten auf Basis der zuvor beschriebenen Beispiele 1 bis 6 gewonnen.

Dabei stellt Versuch 4 einen Referenz- bzw. Bezugspunkt dar, der einem mit DOPO flammgeschützten Polymerisat bzw. Schaumstoff entspricht. Zu diesem ReferenzVersuch 4 sind in der Tabelle 6 jeweils für jede Spalte, d.h. für jede Prüfung, die Resultate mit dem Zahlenwert 4 angegeben. Diese Ergebnisse für DOPO orientieren sich wiederum relativ zu Referenzpolymeren, die entweder nur mit HBCD flammgeschützt wurden oder gar kein Flammschutzmittel enthalten. Kleine Zahlen, insbesondere 1, sind dabei tendenziell vorteilhafter, größere Zahlen, insbesondere 5, nachteiliger.

### im Detail:

### Brandprüfung (Spalte 1 in Tabelle 6):

Die aus den Beispielen 1 bis 5 erhaltenen EPS-Granulate und die EPS-Perlen aus Beispiel 6 wurden mit gesättigtem Wasserdampf zu Schaumstoffperlen mit einer Rohdichte von 15 bis 25 kg/m³ vorgeschäumt, für 24 Stunden zwischengelagert und in einem Formteilautomaten zu Schaumstoffplatten geformt.

Aus den Schaumstoffplatten wurden Prüfkörper mit 2 cm Dicke geschnitten, die nach 72 Stunden Konditionierung bei 70°C in einem Brandtest nach DIN 4102-2 (B2 - Kleinbrennertest) unterzogen.

Die mit Zahlen zwischen 1 und 5 bewerteten Ergebnisse wurden relativ zu mit Hexabromcyclododecan (HBCD) flammgeschützen EPS (Sunpor® EPS SE) bewertet. Dabei bedeuten in Spalte 1 Werte von 1, dass sich die Testsubstanz hinsichtlich ihres Brandverhaltens gleich gut wir HBCD-geschütztes EPS verhält. Werte von 5 bedeuten, dass das Brandverhalten sehr schlecht ist und dem von nicht flammgeschützten EPS entspricht.

Aus Spalte 1 von Tabelle 6 (Versuche 1 und 2) zeigt sich somit, dass aus EPS aufgeschäumte Polystyrol-Schaumstoffplatten, die mit Hydroxy-DOPS flammgeschützt wurden, sowohl deutlich besser flammgeschützt sind als nicht-flammgeschütztes Polystyrol als auch deutlich besser flammgeschützt sind als mit DOPO flammgeschütztes Polystyrol. Darüber hinaus reichen die Werte nahe an die gute Flammschutzwirkung von mit HBCD flammgeschützten Polystyrol heran, insbesondere bei höheren DOPS-Konzentrationen von 10 % gemäß Versuch 2.

Dieses Ergebnis ist auch vom Herstellungsverfahren der EPS-Granulate bzw. Perlen unabhängig, wie Versuch 6 demonstriert.

Durch den zusätzlichen Zusatz von Flammschutzsynergisten bzw. Stabilisatoren kann das Ergebnis noch verbessert werden und eine Brandbeständigkeit erreicht werden, die der von HBCD-geschütztem EPS entspricht, wie Versuch 5 zeigt.

### Viskositätsabnahme im Extruder (Spalte 2 in Tabelle 6):

In den Beispielen 1 bis 5 zeigte sich bei der Extrusion unmittelbar nach dem Start der Dosierung der obenstehenden Flammschutzmittel auf Phosphorbasis eine Reduktion der Viskosität der Polymerschmelze, die sich durch einen Druckabfall der Polymerschmelze im Bereich vor der Düsenplatte manifestierte. GPC Analysen zeigten, dass diese nicht durch einen Abbau der Polymerketten verursacht wurde.

Die mit Zahlen zwischen 1 und 5 bewerteten Ergebnisse zeigen den Druckabfall relativ zu dem sich aufbauenden Druck der Polymerschmelze ohne Flammschutzmittel. Dabei bedeuten in Spalte 2 Werte von 1, dass kein Unterschied bzw. kein Druckabfall besteht. Werte von 5 bedeuten, dass eine starke Viskositätsabnahme erfolgt.

Es zeigt sich somit aus Versuch 1 und 2, dass die obenstehenden Flammschutzmittel, insbesondere DOPS-OH, keinen störenden Einfluss auf die Polymerschmelze haben und deren Viskosität nur geringfügig abnimmt. Im Vergleich dazu liefert DOPO deutlich schlechtere Werte.

### Zeit bis zum Kollaps (Spalte 3 in Tabelle 6):

Die aus den Beispielen 1 bis 5 erhaltenen EPS-Granulate und die EPS-Perlen aus Beispiel 6 wurden mit gesättigtem Wasserdampf zu Schaumstoffperlen mit einer Rohdichte von 15 bis 25 kg/m³ vorgeschäumt, für 24 Stunden zwischengelagert und in einem Formteilautomaten zu Schaumstoffplatten geformt.

Durch die weichmachende Wirkung der Flammschutzmittel auf Phosphorbasis zeigten die EPS Partikel unterschiedliche Stabilität beim Vorschäumen, ausgedrückt als Zeit, die die aufgeschäumten Schaumstoffperlen dem Dampf ausgesetzt werden konnten bis ein Kollaps einsetzt. Diese Zeit wurde in der Zusammenfassung der Ergebnisse relativ zu EPS Partikel ohne Flammschutzmittel bewertet.

Dabei bedeuten in Spalte 3 Werte von 1, dass die Perlen normale Stabilität aufweisen. Werte von 5 bedeuten, dass die Perlen unmittelbar kollabieren.

Es zeigt sich somit aus Versuch 1 und 2, dass die obenstehenden Flammschutzmittel, insbesondere DOPS-OH, keinen störenden Einfluss auf die Stabilität der Schaumstoffperlen haben. Im Vergleich dazu liefert DOPO deutlich schlechtere Werte.

Ingesamt gesehen, sind die erfindungsgemäßen Polymerisate und Schaumstoffe somit in allen drei geprüften Belangen vorteilhafter als mit DOPO geschützte Polymerisate bzw. Schaumstoffe.

### synergistischer Effekt von Schwefel:

Wie bereits einleitend bemerkt, wurde überraschend festgestellt, dass die neuen Verbindungen in Kombination mit elementarem Schwefel und anderen schwefelhältigen Verbindungen synergistische Wirkungen als Flammschutzmittel bei expandierbaren Polymerisaten oder Schäumen aufweisen.

Vergleichsversuche belegen, dass die neuen Verbindungen der vorliegenden Erfindung bei kombinierter Verwendung mit elementarem Schwefel oder schwefelhältigen Verbindungen, mit denen sie synergistische Wirkung zeigen, erheblich bessere Flammschutzwirkungen zeigen als das bekannte Additiv DOPO. Dies geht beispielsweise bereits aus einem Vergleich der obigen Tabellen mit Tabelle 6 hervor, aber auch daraus, dass bei Verdoppelung der Schwefelmenge bei Versuch Nr. 7 im Vergleich zu Versuch Nr. 6 keine Verbesserung der Brandschutzwirkung erzielt wurde.

Folgende Vergleichsversuche zeigen deutlich die gute Wirkung von Schwefel:

### Beispiel 1 (Ausführungsbeispiel):

Einem Styrolpolymer (SUNPOR EPS-STD: 6 Gew% Pentan, Kettenlänge MW = 200.000 g/mol, Uneinheitlichkeit MW/Mn=2,5) wurde im Einzugsbereich eines Doppelschneckenextruders 5 Gew% 6-Hydroxy-6H-dibenz[c,e][1,2]-oxaphosphorine-6-sulfid (Hydroxy-DOPS), und 2 Gew% gelber Schwefel (S₈), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

### Beispiel 2 (Ausführungsbeispiel):

Beispiel 1 wurde wiederholt mit dem Unterschied, dass 10 Gew% 6-Hydroxy-6Hdibenz[c,e][1,2]oxaphosphorine-6-sulfid (Hydroxy-DOPS), bezogen auf das erhaltene EPS-Granulat, zudosiert wurden.

### Beispiel 3 (Vergleichsbeispiel - DOPO):

Einem Styrolpolymer (SUNPOR EPS-STD: 6 Gew% Pentan, Kettenlänge MW = 200.000 g/mol, Uneinheitlichkeit MW/Mn = 2,5) wurde im Einzugsbereich eines Doppelschneckenextruders 10 Gew% 9,10-Dihydro-9-oxa-10-phospha-phenanthren-10-oxid (DOPO) und 2 Gew% gelber Schwefel (S₈), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

### Beispiel 4 (Ausführungsbeispiel - nur Schwefel):

Einem Styrolpolymer (SUNPOR EPS-STD: 6 Gew% Pentan, Kettenlänge MW = 200.000 g/mol, Uneinheitlichkeit MW/Mn=2,5) wurde im Einzugsbereich eines Doppelschneckenextruders 2 Gew% gelber Schwefel (S₈), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

**Tabelle 7: Prüfung der expandierbaren Polymerisate bzw. der Polymerschaumstoffe mit Schwefel**

| | Brandprüfung | Viskositätsabnahme in Extruder | Zeit bis zum Kollaps |
|---|---|---|---|
| Versuch 1 (nach Beispiel 1) | 2 | 2 | 2 |
| Versuch 2 (nach Beispiel 2) | 1 | 2 | 2 |
| Versuch 3 (nach Beispiel 3) | 3 | 4 | 4 |
| Versuch 4 (nach Beispiel 4) | 5 | 1 | 1 |

Die Auswertung der Ergebnisse erfolgt analog zu Tabelle 6 und zeigt deutlich den synergistischen Effekt von Schwefel. Auf diese Weise geschützte Polymerisate und Schaumstoffe sind zumindest hinsichtlich ihres Brandverhaltens vorteilhafter sowohl als nur mit DOPO-Derivaten geschützte Polymerisate, als auch als mit DOPS-Derivaten geschützte Polymerisate, als auch als mit reinem Schwefel versetzte Polymerisate.

### Ergebnisse und Bewertung der zweiten Versuchsreihe:

Nachfolgende Tabelle 8 stellt die Ergebnisse der zuvor beschriebenen zweiten Versuchsreihe übersichtlich nebeneinander, wobei das Brandverhalten von definierten Prüfkörpern überprüft wurde.

**Tabelle 8: zweite Versuchsreihe - Prüfung der expandierbaren Polymerisate bzw. der Polymerschaumstoffe**

| Versuch Nr. | FR | Gew % | Synergist | Gew % | EN 11925 (euroclass E) | DIN 4102 (Klasse B2) |
|---|---|---|---|---|---|---|
| 1 | DOPO | 10 | | | nicht bestanden | nicht bestanden |
| 2 | DOPO | 15 | | | bestanden | nicht bestanden |
| 3 | | | Schwefel | 5 | nicht bestanden | nicht bestanden |
| 4 | DOPS-SNH(Et)₃ | 10 | | | bestanden | nicht bestanden |
| 5 | DOPS-SNH(Et)₃ | 10 | Schwefel | 2 | bestanden | bestanden |
| 6 | DOPS-ONH(Et)₃ | 10 | | | bestanden | nicht bestanden |
| 7 | DOPS-ONH(Et)₃ | 10 | Schwefel | 2 | bestanden | bestanden |
| 8 | DOPS-OMel | 7,5 | Schwefel | 2 | bestanden | bestanden |
| 9 | DOPS-OMel | 7,5 | BBDS | 5 | bestanden | nicht bestanden |
| 10 | DOPS-OGua | 7,5 | Schwefel | 2 | bestanden | bestanden |
| 11 | DOPS-OGua | 7,5 | BBDS | 5 | bestanden | nicht bestanden |
| 12 | DOPS-S-DOPS | 7,5 | Schwefel | 2 | bestanden | bestanden |
| 13 | DOPS-S-DOPS | 7,5 | DCDS | 5 | bestanden | nicht bestanden |
| 14 | DOPS-S-DOPS | 7,5 | BBDS | 5 | bestanden | bestanden |
| 15 | DOPS-S₂-DOPS | 10 | | | bestanden | bestanden |
| 16 | DOPS-S₂-DOPS | 7,5 | Schwefel | 2 | bestanden | nicht bestanden |
| 17 | DOPS-S₄-DOPS | 10 | | | bestanden | nicht bestanden |
| 18 | DOPS-S₄-DOPS | 7,5 | Schwefel | 2 | bestanden | nicht bestanden |
| 19 | DOPS-O-DOPS | 7,5 | Schwefel | 2 | bestanden | bestanden |
| 20 | DOPS-O-DOPO | 7,5 | Schwefel | 2 | bestanden | bestanden |

| | | | | | | |
|---|---|---|---|---|---|---|
| ... bezogen auf Polystyrol | | | | | | |

Die mit Versuch 1 bis 20 bezeichneten und in der linken Spalte verzeichneten Ergebnisse wurden durch Versuche mit Produkten bzw. Prüfkörpern, erhalten auf Basis der zuvor beschriebenen Vergleichs- und Ausführungsbeispiele 1 bis 20, gewonnen.

Dabei stellen die Versuche 1, 2 und 3 Referenzen dar, die einem, nur mit dem bekannten Flammschutzmittel DOPO flammgeschützen oder nur den Synergisten Schwefel enthaltenden, Polymerisat bzw. Schaumstoff entsprechen.

### im Detail:

### Brandprüfung nach EN 11925 (Spalte 6) und DIN 4102 (Spalte 7):

Die aus den Beispielen 1 bis 18 erhaltenen EPS-Granulate wurden mit gesättigtem Wasserdampf zu Schaumstoffperlen mit einer Rohdichte von 15 bis 25 kg/m³ vorgeschäumt, für 24 Stunden zwischengelagert und in einem Formteilautomaten zu Schaumstoffplatten geformt. Aus den Schaumstoffplatten wurden Prüfkörper mit 2 cm Dicke geschnitten, die nach 72 Stunden Konditionierung bei 70°C den Brandtests nach EN 11925 und DIN 4102 unterzogen. Mit "bestanden" wurden jene Tests bezeichnet, die nach EN 11925 die Europäische Brandklasse E bzw. nach DIN 4102 die Brandklasse B2 erreicht haben.

Dabei ist zu erkennen, dass bei den betrachteten Systemen die Brandklasse E nach EN 11925 eher erreicht werden konnte als die Brandklasse B2 nach DIN 4102.

Die Ergebnisse der Versuche 4 bis 20 zeigen, dass alle betrachteten DOPS-Derivate bessere Ergebnisse zeigen bzw. bereits in geringeren Mengen wirken als das bekannte Flammschutzmittel DOPO (Versuche 1 und 2).

Um die Brandklasse E nach EN 11925 zu erreichen, sind bei DOPS-SNH(Et)₃ (Versuch 4) und DOPS-ONH(Et)₃ (Versuch 6) nur 2/3 der Einsatzmenge von DOPO (Versuch 2) notwendig. Durch den Einsatz von 2 Gew% Schwefel kann bei diesen DOPS-Derivaten die Brandklasse B2 nach DIN 4102 erreicht werden (Versuche 5 und 7).

Die synergistische Wirkung von 2 Gew% Schwefel zeigt sich auch bei DOPS-OMel (Versuch 8), DOPS-OGua (Versuch 10), DOPS-S-DOPS (Versuch 12), DOPS-O-DOPS (Versuch 19) und DOPO-O-DOPO (Versuch 20). Geringere synergistische Wirkung zeigten bei diesen Derivaten 5 Gew% BBDS (Versuche 9 und 11) bzw. 5 Gew% DCDS (Versuch 13), während 5 Gew% BBDS in Kombination mit 7,5 Gew% DOPS-S-DOPS (Versuch 14) ausreichen, um die Brandklasse B2 zu erreichen.

Eine Sonderstellung nimmt DOPS-S₂-DOPS ein, das bei einer Konzentration von 10 Gew% die Anforderungen der Brandklassen B2 und E erfüllt (Versuch 17), während die Kombination von 7,5 Gew% DOPS-S₂-DOPS und 2 Gew% Schwefel (Versuch 18) die Anforderungen der Klasse B2 nicht erreicht.

Die Brandschutzsysteme der Versuche 17 (10 Gew% DOPS-S₄-DOPS) und 18 (7,5 Gew% DOPS-S₄-DOPS + 2 Gew% Schwefel) genügen den Anforderungen der Brandklasse E nach EN 11925, nicht aber denen der Klasse B2 nach DIN 4102.

Insgesamt gesehen, sind die erfindungsgemäßen Polymerisate und Schaumstoffe somit vorteilhafter als mit DOPO als Brandschutzmittel ausgerüstete Polymerisate bzw. Schaumstoffe.

## Patentansprüche

1. Flammgeschützte, zumindest ein Treibmittel enthaltende, expandierbare Polymerisate, wobei als Flammschutzmittel zumindest eine Phosphorverbindung enthalten ist, **dadurch gekennzeichnet, dass** das Flammschutzmittel ein 9,10-Dihydro-9-oxa-10-phosphaphenanthren-Derivat der Formel I 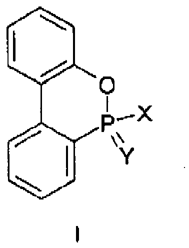 worin X Wasserstoff ist und Y Schwefel ist, d.h. 9,10-Dihydro-9-oxa-10-phosphaphenanthren-10-thion bzw. -10-sulfid ("DOPS"): 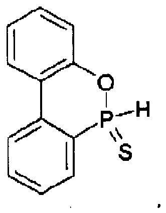 oder ein ringgeöffnetes Hydrolysat davon ist.

2. Flammgeschützte, zumindest ein Treibmittel enthaltende, expandierbare Polymerisate, wobei als Flammschutzmittel zumindest eine Phosphorverbindung enthalten ist, **dadurch gekennzeichnet, dass** das Flammschutzmittel ein
9,10-Dihydro-9-oxa-10-phosphaphenanthren-Derivat der Formel 1, worin X OH ist und Y Schwefel ist, d.h. 9,10-Dihydro-10-hydroxy-9-oxa-10-phosphaphenanthren-10-thion bzw. - 10-sulfid ("DOPS-OH"): 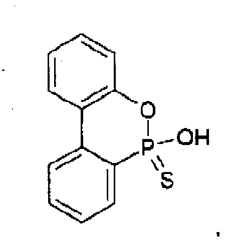 oder ein ringgeöffnetes Hydrolysat davon ist,
oder **dadurch gekennzeichnet, dass** das Flammschutzmittel ein
9,10-Dihydro-9-oxa-10-phosphaphenanthren-Derivat der Formel I, worin X ONH₄ ist und Y Schwefel ist, d.h. 9,10-Dihydro-10-hydroxy-9-oxa-10-phosphaphenanthren-10-thion- bzw. -10-sulfid-ammoniumsalz ("DOPS-ONH₄"): 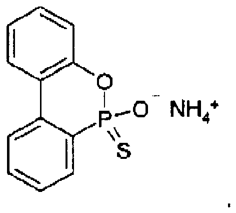 oder ein ringgeöffnetes Hydrolysat davon ist,
oder **dadurch gekennzeichnet, dass** das Flammschutzmittel ein
9,10-Dihydro-9-oxa-10-phosphaphenanthren-Derivat der Formel I, worin X SH ist und Y Schwefel ist, d.h. 9,10-Dihydro-10-mercapto-9-oxa-10-phosphaphenanthren-10-thion bzw. -10-sulfid ("DOPS-SH"): 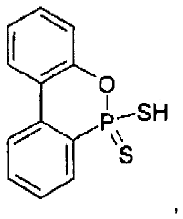 oder ein ringgeöffnetes Hydrolysat davon ist,
oder **dadurch gekennzeichnet, dass** das Flammschutzmittel ein
9.10-Dihydro-9-oxa-10-phosphaphananthren-Derivat der Formel I, worin X SNH(Et)₃ ist und Y Schwefel ist, d.h. 9,10-Dihydro-10-mercapto-9-oxa-10-phosphaphenanthren-10-thion- bzw, -10-sulfid-triethylammoniumsalz ("DOPS-SNH(Et)₃"): 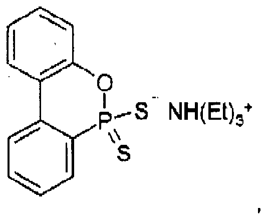 oder ein ringgeöffnetes Hydrolysat davon ist,
oder **dadurch gekennzeichnet, dass** das Flammschutzmittel ein
9,10-Dihydro-9-oxa-10-phasphaphenanthren-Derivat der Formel I, worin X ONH(Et)₃ ist und Y Schwefel ist, d.h. 9,10-Dihydro-10-hydroxy-9-oxa-10-phosphaphenanthren-10-thion- bzw. -10-sulfid-triethylammoniumsalz ("DOPS-ONH(Et)₃"): 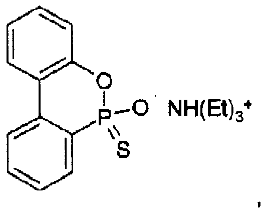 oder ein ringgeöffnetes Hydrolysat davon ist,
oder **dadurch gekennzeichnet, dass** das Flammschutzmittel ein
9.10-Dihydro-9-oxa-10-phosphaphenanthren-Derivat der Formel I, worin X OMeI ist und Y Schwefel ist, d.h. 9,10-Dihydro-10-hydroxy-9-oxa-10-phosphaphenanthren-10-thion- bzw. -10-sulfid-melaminiumsalz ("DOPS-OMel"): 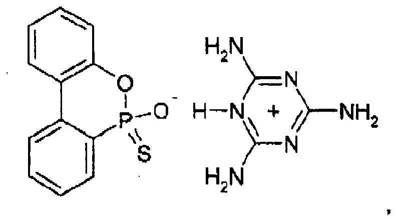 oder ein ringgeöffnetes Hydrolysat davon ist,
oder **dadurch gekennzeichnet, dass** das Flammschutzmittel ein
9,10-Dihydro-9-oxa-10-phosphaphenanthren-Derivat der Formel I, worin X OGua ist und Y Schwefel ist, d.h. 9,10-Dihydro-10-hydroxy-9-oxa-10-phosphaphenanthren-10-thion-bzw. -10-sulfid-guanidiniumsalz ("DOPS-OGua"): 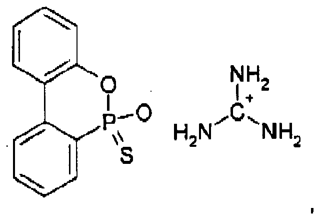 oder ein ring geöffnetes Hydrolysat davon ist,
oder **dadurch gekennzeichnet, dass** das Flammschutzmittel ein
9,10-Dihydro-9-oxa-10-phosphaphenanthren-Derivat der Formel I 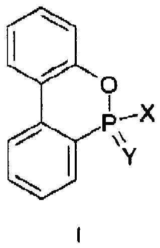 worin X eine zweiwertige Linker-Gruppe Zₙ ist, die zwei Dihydrooxaphosphaphenanthrenyl-Reste der Formel I zu einem Dimer der Formel II verbindet 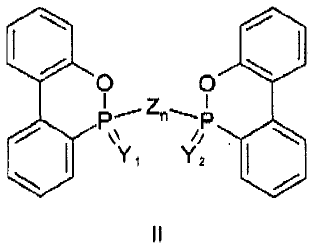 worin Y₁ und Y₂ jeweils Sauerstoff sind, Z Schwefel ist und n = 1 ist, d.h. Bis(9.10-dihydro-9-oxa-10-oxo-10-phosphaphenanthren-10-yl)sulfid ("DOPO-S-DOPO"): 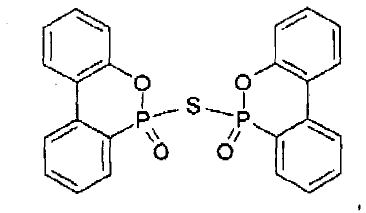 oder ein ringgeöffnetes Hydrolysat davon ist,
oder **dadurch gekennzeichnet, dass** das Flammschutzmittel ein
9,10-Dihydro-9-oxa-10-phosphaphenanthren-Derivat der Formel I, worin X eine zweiwertige Linker-Gruppe Zₙ ist, die zwei Dihydrooxaphosphaphenanthrenyl-Reste der Formel I zu einem Dimer der Formel II verbindet, worin Y₁ und Z jeweils Schwefel sind, Y₂ Sauerstoff ist und n = 1 ist, d.h. 9,10-Dihydro-10-(9,10-dihydro-9-oxa-10-phospha-10-thioxophananthren-10-ylthio)-9-oxa-10-phosphaphenanthren-10-on bzw. -10-oxid ("DOPS-S-DOPO"): 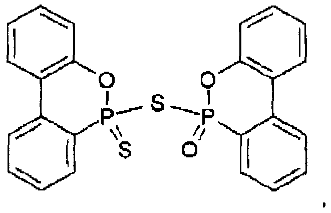 oder ein ringgeöffnetes Hydrolysat davon ist,
oder **dadurch gekennzeichnet, dass** das Flammschutzmittel ein
9,10-Dihydro-9-oxa-10-phosphaphenanthren-Derivat der Formel I, worin X eine zweiwertige Linker-Gruppe Zₙ ist, die zwei Dihydrooxaphosphaphenanthrenyl-Reste der Formel I zu einem Dimer der Formel II verbindet. worin Y₁, Y₂ und Z jeweils Schwefel sind und n = 1 ist, d.h. Bis(9,10-dihydro-9-oxa-10-phospha-10-thioxophenanthren-10-yl)sulfid ("DOPS-S-DOPS"): 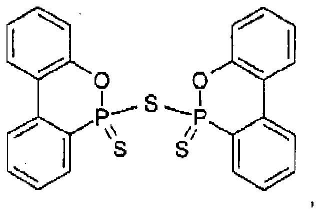 oder ein ringgeöffnetes Hydrolysat davon ist,
oder **dadurch gekennzeichnet, dass** das Flammschutzmittel ein
9,10-Dihydro-9-oxa-10-phosphaphenanthren-Derivat der Formel I, worin X eine zweiwertige Linker-Gruppe Zₙ ist, die zwei Dihydrooxaphosphaphenanthrenyl-Reste der Formel I zu einem Dimer der Formel II verbindet, worin Y₁, Y₂ und Z jeweils Schwefel sind und n = 2 ist, d.h. Bis(9.10-dihydro-9-oxa-10-phospha-10-thioxophenanthren-10-yl)disulfid ("DOPS-S₂-DOPS"): 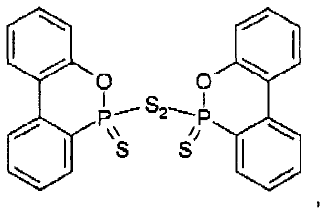 oder ein ringgeöffnetes Hydrolysat davon ist,
oder **dadurch gekennzeichnet, dass** das Flammschutzmittel ein
9,10-Dihydro-9-oxa-10-phosphaphenanthren-Derivat der Formel I, worin X eine zweiwertige Linker-Gruppe Zₙ ist, die zwei Dihydrooxaphosphaphenanthrenyl-Reste der Formel I zu einem Dimer der Formel II verbindet, worin Y₁, Y₂ und Z jeweils Schwefel sind und n= 4 ist, d.h. Bis(9,10-dihydro-9-oxa-10-phospha-10-thioxophenanthren-10-yl)tetrasulfid ("DOPS-S₄-DOPS"): 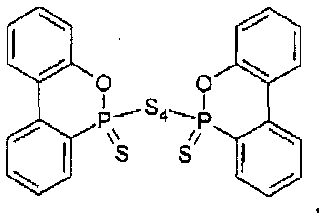 oder ein ringgeöffnetes Hydrolysat davon ist,
oder **dadurch gekennzeichnet, dass** das Flammschutzmittel ein
9,10-Dihydro-9-oxa-10-phosphaphenanthren-Derivat der Formel I, worin X eine zweiwertige Linker-Gruppe Zₙ ist, die zwei Dihydrooxaphosphaphenanthrenyl-Reste der Formel I zu einem Dimer der Formel II verbindet, worin Y₁ und Y₂ jeweils Schwefel sind, Z Sauerstoff ist und n = 1 ist, d.h. Di(9,10-dihydro-9-oxa-10-phospha-10-thioxophenanthren-10-yl)ether ("DOPS-O-DOPS"): 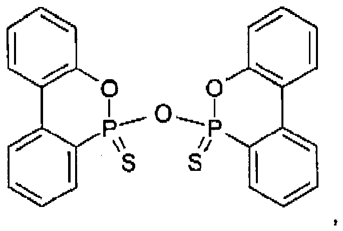 oder ein ringgeöffnetes Hydrolysat davon ist.
oder **dadurch gekennzeichnet, dass** das Flammschutzmittel ein
9,10-Dihydro-9-oxa-10-phosphaphenanthren-Derivat der Formel I, worin X eine zweiwertige Linker-Gruppe Zₙ ist, die zwei Dihydrooxaphosphaphenanthrenyl-Reste der Formel I zu einem Dimer der Formel II verbindet, worin Y₁ Schwefel ist, Y₂ und Z jeweils Sauerstoff sind und n = 1 ist, d.h. 9,10-Dihydro-10-(9,10-dihydro-9-oxa-10-phospha-10-thioxophenanthren-10-yloxy)-2-oxa-10-phosphaphenanthren-10-on bzw. -10-oxid ("DOPS-O-DOPO"): 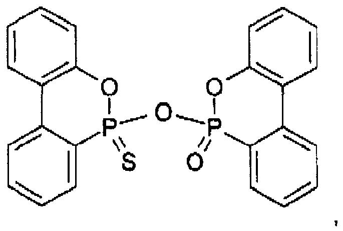 oder ein ringgeöffnetes Hydrolysat davon ist.

3. Expandierbare Polymerisate nach einem der Ansprüche 1 bis 2, **dadurch gekennzeichnet, dass** die expandierbaren Polymerisate expandierbare Styrolpolymerisate (EPS) bzw. expandierbare Styrolpolymer Granulate (EPS) sind, welche insbesondere aus Homo- und Copolymeren von Styrol, vorzugsweise glasklares Polystyrol (GPPS), Schlagzähpolystyrol (HIPS), anionisch polymerisiertes Polystyrol oder Schlagzähpolystyrol (A-IPS), Styrol-alpha-Methylstyrol-copolymere. Acrylnitril-Butadien-Styrolpolymerisate (ABS), Styrol-Acrylnitril (SAN) Acrylnitril-Styrol-Acrylester (ASA), Methyacrylat-Butadien-Styrol (MBS). Methylmethacrylat-Acrylnitril-Butadien-Styrol (MABS)-polymerisate oder Mischungen davon oder mit Polyphenylenether (PPE) bestehen.

4. Expandierbare Polymerisate nach einem der vorangehenden Ansprüche, **dadurch gekennzeichnet, dass** das/die Flammschutzmittel in einer Menge von 0,1 bis 25 Gew.-%, insbesondere 3 bis 10 Gew.-%, bezogen auf das Gesamtgewicht des Polymers, enthalten ist/sind.

5. Expandierbare Polymerisate nach einem der vorangehenden Ansprüche, **dadurch gekennzeichnet, dass** zusätzlich elementarer Schwefel, insbesondere gelber Schwefel (S₈), und/oder zumindest eine weitere anorganische oder organische schwefelhaltige Verbindungen bzw. Schwefelverbindung enthalten ist, insbesondere in einer Menge von 0,1 bis 10 Gew%, insbesondere in einer Menge von etwa 0,5 bis 5 Gew%, vorzugsweise etwa 2 Gew%, bezogen auf das Gesamtgewicht des Polymers.

6. Expandierbare Polymerisate nach Anspruch 5, **dadurch gekennzeichnet, dass** die weitere schwefelhältige Verbindung bzw. Schwefelverbindung zumindest eine S-S-Bindung aufweist, wobei zumindest eines der Schwefelatome in zweiwertiger Form vorliegt.

7. Verfahren zur Herstellung von flammgeschützten, expandierbaren Polymerisaten gemäß einem der Ansprüche 1 bis 6, **dadurch gekennzeichnet, dass** als Flammschutzmittel zumindest eine Phosphorverbindung gemäß einem der Ansprüche 1 bis 2 bzw. ringgeöffnete Hydrolysate oder Salze davon, eingesetzt wird und gegebenenfalls als zusätzliches Flammschutzmittel bzw. -synergist Schwefel und/oder zumindest eine schwefelhältige Verbindung bzw. Schwefelverbindung gemäß einem der Ansprüche 5 oder 6.

8. Verfahren zur Herstellung von flammgeschützten expandierbaren Styrolpolymerisaten (EPS) gemäß Anspruch 7,
- wobei das Flammschutzmittel und ein Treibmittel und gegebenenfalls der Schwefel bzw. die Schwefelverbindung mit einer Styrolpolymerschmelze mit Hilfe eines dynamischen bzw. statischen Mischers gemischt und anschließend granuliert werden
oder
- wobei das Flammschutzmittel und gegebenenfalls der Schwefel bzw. die Schwefelverbindung mittels eines dynamischen bzw. statischen Mischers zu noch granulatförmigem Polystyrolpolymerisat zugemischt und aufgeschmolzen wird, und die Schmelze anschließend imprägniert und granuliert wird
oder
- wobei das Flammschutzmittel und gegebenenfalls der Schwefel bzw. die Schwefelverbindung mittels eines dynamischen bzw. statischen Mischers zu noch granulatförmigem EPS oder zugemischt wird, und die Mischung anschließend aufgeschmolzen und granuliert wird
oder
- wobei die Granulatherstellung durch Suspensions-Polymerisation von Styrol in wässriger Suspension in Gegenwart des Flammsthutzmittels und eines Treibmittels und gegebenenfalls des Schwefels bzw. der Schwefelverbindung erfolgt.

9. Verfahren zur Herstellung von flammgeschützten expandierbaren Styrolpolymerisaten (EPS) nach Anspruch 7 oder 8 umfassend die Schritte:
- Gemeinsames Dosieren in einen Extruder von PS- oder EPS-Granulat mit einem Molekulargewicht von Mw > 120 000 g/mol, bevorzugt von 150 000 bis 250 000 g/mol, besonders bevorzugt von 180 000 bis 220 000 g/mol, sowie von dem zumindest einem Flammschutzmittel und gegebenenfalls von einem oder mehreren weiteren Additiven, insbesondere
a) Flammschutzsynergisten, z.B. thermische Radikalbildner, wie Dicumylperoxid, in einer Konzentration von 0,1 bis 20 Gew%,
b) Infrarottrübungsmittel, z.B. Graphit, Ruß, Aluminium, Titandioxid, in einer Konzentration von 0,1 bis 1 Gew%,
c) Stabilisatoren, z.B. Nitroxyl-Radikal bildende Substanzen, wie HTEMPO, in einer Konzentration von 0,1 bis 1 Gew%,
d) weitere halogenierte oder halogenfreie Flammschutzmittel, z.B. HBCD, DOP-O, Magnesiumhydroxid, in einer Konzentration von 0.1 bis 20 Gew% und/oder
e) Füllstoffe, z.B. Kreide, Talkum, Silikate, in einer Konzentration von 1 bis 20 Gew%
- Gemeinsame Aufschmelzung aller Komponenten im Extruder,
- Optionale Zudosierung zumindest eines Treibmittels,
- Mischung aller Komponenten bei einer Temperatur > 120°C,
- Granulierung mittels druckbeaufschlagter Unterwassergranulierung, bei z.B. 1-20 bar, zu einer Granulatgröße < 5 mm, bevorzugt 0,2 bis 2,5 mm, bei einer Wassertemperatur von 30 bis 100°C, insbesondere 50 bis 80°C,
- gegebenenfalls oberflächliche Beschichtung mit Coatingmitteln, z.B. Silikate, Metallsalze von Fettsäuren, Fettsäureester, Fettsäureamide.

10. Flammgeschützte, expandierbare Styrolpolymerisate (EPS) erhältlich nach einem Verfahren gemäß einem der Ansprüche 7 bis 9.

11. Polymerschaumstoff, insbesondere Styrolpolymer-Partikelschaumstoff oder extrudierter Polystyrol-Hartschaum (XPS), enthaltend als Flammschutzmittel zumindest eine Phosphorverbindung gemäß einem der Ansprüche 1 bis 2, bzw. ringgeöffnete Hydrolysate oder Salze davon.

12. Polymerschaumstoff nach Anspruch 11, **dadurch gekennzeichnet, dass** als zusätzliches Flammschutzmittel bzw. -synergist Schwefel und/oder zumindest eine schwefelhältige Verbindung bzw. Schwefelverbindung gemäß einem der Ansprüche 5 oder 6 enthalten ist.

13. Polymerschaumstoff nach Anspruch 11 oder 12, erhältlich aus flammgeschützten expandierbaren Polymerisaten gemäß einem der Ansprüche 1 bis 6, insbesondere aus expandierbaren Styrolpolymerisaten (EPS), insbesondere durch Aufschäumen und Versintern der Polymerisate oder durch Extrusion.

14. Polymerschaumstoff nach einem der Ansprüche 11 bis 13, mit einer Dichte zwischen 7 und 200 g/l und einer überwiegend geschlossenzelligen Zellstruktur mit mehr als 0.5 Zellen pro mm³.

15. Verwendung von zumindest einer Phosphorverbindung gemäß einem der Ansprüche 1 bis 2, bzw. von ringgeöffneten Hydrolysaten oder Salzen davon, als Flammschutzmittel, sowie gegebenenfalls von Schwefel und/oder zumindest einer schwefelhältigen Verbindung bzw. Schwefelverbindung gemäß einem der Ansprüche 5 oder 6 als Flammschutzmittel bzw. -synergisten,
- in expandierbaren Polymerisaten, insbesondere in expandierbaren Styrolpolymerisaten (EPS) bzw. expandierbaren Styrolpolymer Granulaten (EPS) gemäß Anspruch 3 oder 4,
oder
- in Polymerschaumstoffen, insbesondere in Styrolpolymer-Partikelschaumstoffen, erhältlich durch Aufschäumen aus expandierbaren Polymerisaten, oder in extrudierten Polystyrol-Hartschäumen (XPS).

## Claims

1. Flameproof expandable polymerizates containing at least one blowing agent, wherein at least one phosphorus compound is contained as a flame retardant, **characterized in that** the flame retardant is a
9,10-dihydro-9-oxa-10-phosphaphenanthrene derivative of formula I 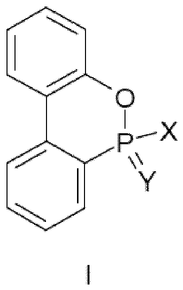 wherein X is hydrogen and Y is sulfur, i.e. 9,10-dihydro-9-oxa-10-phosphaphenanthrene-10-thione or -10-sulfide ("DOPS"): 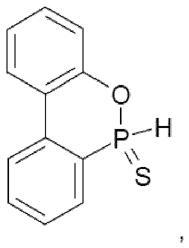 or a ring-opened hydrolyzate thereof.

2. Flameproof expandable polymerizates containing at least one blowing agent, wherein at least one phosphorus compound is contained as a flame retardant, **characterized in that** the flame retardant is a
9,10-dihydro-9-oxa-10-phosphaphenanthrene derivative of formula I, wherein X is OH and Y is sulfur, i.e. 9,10-dihydro-10-hydroxy-9-oxa-10-phosphaphenanthrene-10-thione or -10-sulfide ("DOPS-OH"): 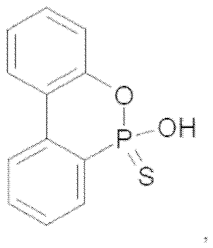 or a ring-opened hydrolyzate thereof,
or **characterized in that** the flame retardant is a
9,10-dihydro-9-oxa-10-phosphaphenanthrene derivative of formula I, wherein X is ONH₄ and Y is sulfur, i.e. 9,10-dihydro-10-hydroxy-9-oxa-10-phosphaphenanthrene-10-thione or -10-sulfide ammonium salt ("DOPS-ONH₄"): 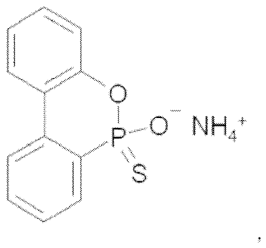 or a ring-opened hydrolyzate thereof,
or **characterized in that** the flame retardant is a
9,10-dihydro-9-oxa-10-phosphaphenanthrene derivative of formula I, wherein X is
SH and Y is sulfur, i.e. 9,10-dihydro-10-mercapto-9-oxa-10-phosphaphenanthrene-10-thione or -10-sulfide ("DOPS-SH"): 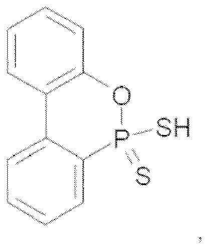 or a ring-opened hydrolyzate thereof,
or **characterized in that** the flame retardant is a
9,10-dihydro-9-oxa-10-phosphaphenanthrene derivative of formula I, wherein X is SNH(Et)₃ and Y is sulfur, i.e. 9,10-dihydro-10-mercapto-9-oxa-10-phosphaphenanthrene-10-thione or - 10-sulfide triethylammonium salt ("DOPS-SNH(Et)₃"): 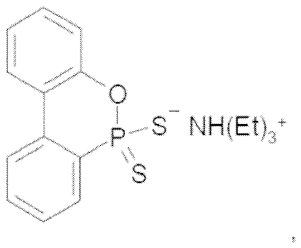 or a ring-opened hydrolyzate thereof,
or **characterized in that** the flame retardant is a
9,10-dihydro-9-oxa-10-phosphaphenanthrene derivative of formula I, wherein X is ONH(Et)₃ and Y is sulfur, i.e. 9,10-dihydro-10-hydroxy-9-oxa-10-phosphaphenanthrene-10-thione or -10-sulfide triethylammonium salt ("DOPS-ONH(Et)₃"): 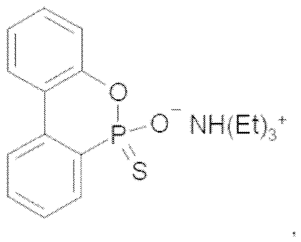 or a ring-opened hydrolyzate thereof,
or **characterized in that** the flame retardant is a
9,10-dihydro-9-oxa-10-phosphaphenanthrene derivative of formula I, wherein X is OMel and Y is sulfur, i.e. 9,10-dihydro-10-hydroxy-9-oxa-10-phosphaphenanthrene-10-thione or -10-sulfide melaminium salt ("DOPS-OMeI"): 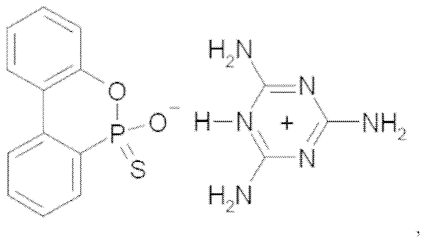 or a ring-opened hydrolyzate thereof,
or **characterized in that** the flame retardant is a
9,10-dihydro-9-oxa-10-phosphaphenanthrene derivative of formula I, wherein X is OGua and Y is sulfur, i.e. 9,10-dihydro-10-hydroxy-9-oxa-10-phosphaphenanthrene-10-thione or -10-sulfide guanidinium salt ("DOPS-OGua"): 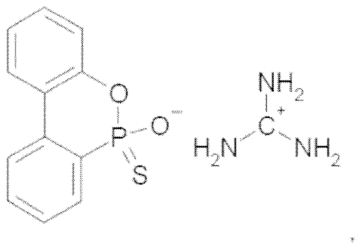 or a ring-opened hydrolyzate thereof,
or **characterized in that** the flame retardant is a
9,10-dihydro-9-oxa-10-phosphaphenanthrene derivative of formula I 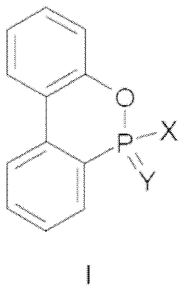 wherein X is a divalent linker group Zₙ linking two dihydrooxaphosphaphenanthrenyl residues of formula I to give a dimer of the following formula II 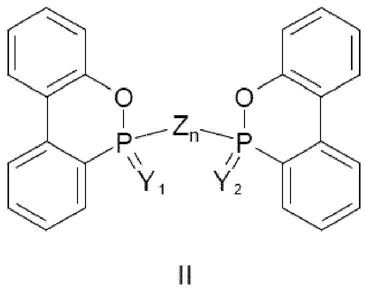 wherein Y₁ and Y₂ are each oxygen, Z is sulfur and n = 1, i.e. bis(9,10-dihydro-9-oxa-10-oxo-10-phosphaphenanthrene-10-yl)sulfide ("DOPO-S-DOPO"): 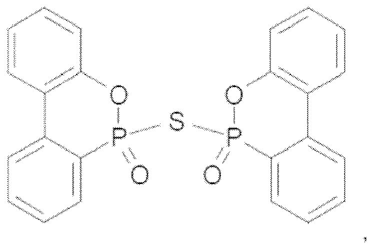 or a ring-opened hydrolyzate thereof,
or **characterized in that** the flame retardant is a
9,10-dihydro-9-oxa-10-phosphaphenanthrene derivative of formula I, wherein X is a divalent linker group Zₙ linking two dihydrooxaphosphaphenanthrenyl residues of formula I to give a dimer of formula II, wherein Y₁ and Z are each sulfur, Y₂ is oxygen and n = 1, i.e. 9,10-dihydro-10-(9,10-dihydro-9-oxa-10-phospha-10-thioxophenanthrene-10-ylthio)-9-oxa-10-phosphaphenanthrene-10-one or -1 0-oxide ("DOPS-S-DOPO"): 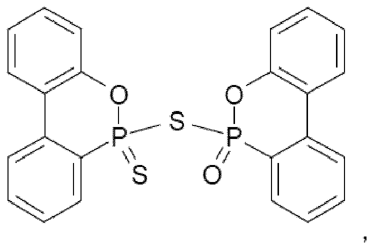 or a ring-opened hydrolyzate thereof,
or **characterized in that** the flame retardant is a
9,10-dihydro-9-oxa-10-phosphaphenanthrene derivative of formula I, wherein X is a divalent linker group Zₙ linking two dihydrooxaphosphaphenanthrenyl residues of formula I to give a dimer of formula II, wherein Y₁, Y₂, and Z are each sulfur and n = 1, i.e. bis(9,10-dihydro-9-oxa-10-phospha-10-thioxophenanthrene-10-yl)sulfide ("DOPS-S-DOPS"): 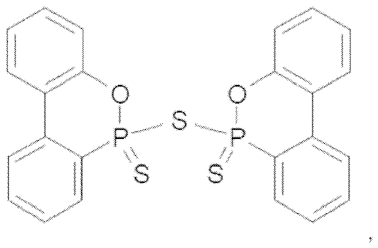 or a ring-opened hydrolyzate thereof,
or **characterized in that** the flame retardant is a
9,10-dihydro-9-oxa-10-phosphaphenanthrene derivative of formula I, wherein X is a divalent linker group Zₙ linking two dihydrooxaphosphaphenanthrenyl residues of formula I to give a dimer of formula II, wherein Y₁, Y₂, and Z are each sulfur and n = 2, i.e. bis(9,10-dihydro-9-oxa-10-phospha-10-thioxophenanthrene-10-yl)disulfide ("DOPS-S₂-DOPS"): 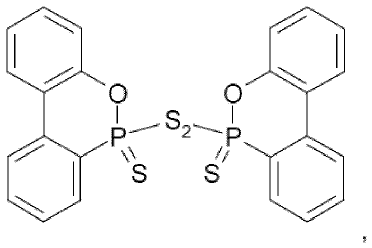 or a ring-opened hydrolyzate thereof,
or **characterized in that** the flame retardant is a
9,10-dihydro-9-oxa-10-phosphaphenanthrene derivative of formula I, wherein X is a divalent linker group Zₙ linking two dihydrooxaphosphaphenanthrenyl residues to give a dimer of formula II, wherein Y₁, Y₂, and Z are each sulfur and n = 4, i.e. bis(9,10-dihydro-9-oxa-10-phospha-10-thioxophenanthrene-10-yl)tetrasulfide ("DOPS-S₄-DOPS"): 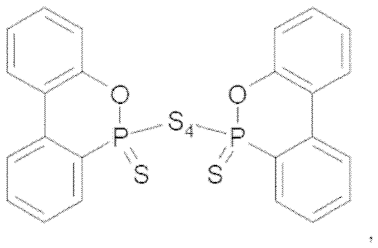 or a ring-opened hydrolyzate thereof,
or **characterized in that** the flame retardant is a
9,10-dihydro-9-oxa-10-phosphaphenanthrene derivative of formula I, wherein X is a divalent linker group Zₙ linking two dihydrooxaphosphaphenanthrenyl residues of formula I to give a dimer of formula II, wherein Y1 and Y2 are each sulfur, Z is oxygen and n = 1, i.e. di(9,10-dihydro-9-oxa-10-phospha-10-thioxophenanthrene-10-yl)ether ("DOPS-O-DOPS"): 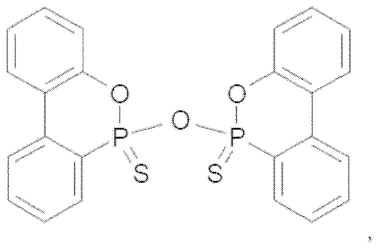 or a ring-opened hydrolyzate thereof,
or **characterized in that** the flame retardant is a
9,10-dihydro-9-oxa-10-phosphaphenanthrene derivative of formula I, wherein X is a divalent linker group Zₙ linking two dihydrooxaphosphaphenanthrenyl residues of formula I to give a dimer of formula II, wherein Y₁ is sulfur, Y₂ and Z are each oxygen and n = 1, i.e. 9,10-dihydro-10-(9,10-dihydro-9-oxa-10-phospha-10-thioxophenanthrene-10-yloxy)-9-oxa-10-phosphaphenanthrene-10-one or -10-oxide ("DOPS-O-DOPO"): 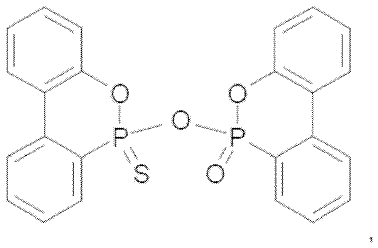 or a ring-opened hydrolyzate thereof.

3. Expandable polymerizates according to any one of claims 1 to 2, **characterized in that** the expandable polymerizates are expandable styrene polymerizates (EPS) or expandable granular styrene polymers (EPS), especially consisting of homo- and copolymers of styrene, preferably crystal-clear polystyrene (GPPS), high-impact polystyrene (HIPS), anionically polymerized polystyrene or impact-resistant polystyrene (A-IPS), copolymers of styrene and alpha-methylstyrene, acrylonitrile-butadiene-styrene polymerizates (ABS), styrene-acrylonitrile (SAN), acrylonitrile-styrene-acrylic ester (ASA), methylacrylate-butadien-styrene (MBS), methylmethacrylate-acrylonitrile-butadiene-styrene (MABS) polymerizates, or mixtures thereof or mixtures with polyphenylene ether (PPE).

4. Expandable polymerizates according to any one of the preceding claims, **characterized in that** the flame retardant(s) is/are contained in an amount of 0.1 to 25 wt%, especially 3 to 10 wt%, based on the total weight of the polymer.

5. Expandable polymerizates according to any one of the preceding claims, **characterized in that** additionally elemental sulfur, especially yellow sulfur (S₈), and/or at least one further inorganic or organic sulfur-containing compound or sulfur compound is/are contained, especially in an amount of 0.1 to 10 wt%, especially 0.5 to 5 wt%, preferably approximately 2 wt%, based on the total weight of the polymer.

6. Expandable polymerizates according to claim 5, **characterized in that** the further sulfur-containing compound or sulfur compound comprises at least one S-S bond, wherein at least one of the sulfur atoms is divalent.

7. A method for preparing the flameproof expandable polymerizates according to any one of claims 1 to 6, **characterized in that** at least one phosphorus compound according to any one of claims 1 to 2, or ring-opened hydrolyzates or salts thereof, is/are used as (a) flame retardant(s), and optionally sulfur and/or at least one sulfur-containing compound or sulfur compound according to any one of claims 5 or 6, is/are used as (an) additional flame retardant(s) or synergist(s).

8. The method for preparing flameproof expandable styrene polymerizates (EPS) according to claim 7,
- wherein the flame retardant and a blowing agent, and optionally sulfur or the sulfur compound, are mixed with a styrene polymer melt using a dynamic or static mixer and subsequently granulated,
or
- wherein the flame retardant, and optionally sulfur or the sulfur compound, are mixed into the still granular polystyrene polymerizate, using a dynamic or static mixer, and melted, whereafter the melt is impregnated and granulated,
or
- wherein the flame retardant, and optionally sulfur or the sulfur compound, are mixed into the still granular polystyrene polymerizate, using a dynamic or static mixer, whereafter the melt is molten and granulated,
or
- wherein granulation is achieved by suspension polymerization of styrene in an aqueous suspension in the presence of the flame retardant and a blowing agent, and optionally of sulfur or the sulfur compound.

9. The method for preparing flameproof expandable styrene polymerizates (EPS) according to claim 7 or 8, comprising the steps of:
- jointly dosing granular PS or EPS having a molecular weight of Mw >120,000 g/mol, preferably 150,000 to 250,000 g/mol, especially preferably 180,000 to 220,000 g/mol, and the at least one flame retardant, and optionally one or more further additives, especially
a) flame retardancy synergists, e.g. thermal radical formers such as dicumyl peroxide, in a concentration of 0.1 to 20 wt%,
b) infrared opacifiers, e.g. graphite, carbon black, aluminum, titanium dioxide, in a concentration of 0.1 to 1 wt%,
c) stabilizers, e.g. nitroxyl radical-forming substances such as HTEMPO, in a concentration of 0.1 to 1 wt%,
d) further halogenated or halogen-free flame retardants, e.g. HBCD, DOPO, magnesium hydroxide, in an concentration of 0.1 to 20 wt%, and/or
e) fillers, e.g. chalk, talcum, silicates, in a concentration of 1 to 20 wt%,
into an extruder,
- jointly melting of all components in the extruder,
- optionally adding at least one blowing agent,
- mixing all components at a temperature >120°C,
- granulation by means of pressurized underwater granulation, at e.g. 1-20 bar, to a granule size <5 mm, preferably 0.2 to 2.5 mm, at a water temperature of 30 to 100 °C, especially 50 to 80°C,
- optionally coating the surface with coating agents, e.g. silicates, metal salts of fatty acids, fatty acid esters, fatty acid amides.

10. Flameproof expandable styrene polymerizates (EPS), obtainable by the method according to any one of claims 7 to 9.

11. A polymeric foam, especially styrene polymeric particle foam or extruded polystyrene rigid foam (XPS), containing at least one phosphorus compound according to any one of claims 1 to 2, or a ring-opened hydrolyzate or salt thereof, as (a) flame retardant(s).

12. The polymeric foam according to claim 11, **characterized in that** sulfur and/or at least one sulfur-containing compound or sulfur compound according to any one of claims 5 or 6 is/are contained as (a) further flame retardant(s) or as (a) synergist(s).

13. The polymeric foam according to claim 11 or 12, obtainable from flameproof expandable polymerizates according to any one of claims 1 to 6, especially from expandable styrene polymerizates (EPS), especially by foaming and caking the polymerizates or by extrusion.

14. The polymeric foam according to any one of claims 11 to 13, having a density between 7 and 200 g/L and a mainly closed-cell structure with more than 0.5 cells per mm³.

15. A use of at least one phosphorus compound according to any one of claims 1 to 2, or of ring-opened hydrolyzates or salts thereof, as (a) flame retardant(s), and optionally of sulfur and/or at least one sulfur-containing compound or sulfur compound according to any one of claims 5 or 6 as (a) flame retardant(s) or as (a) synergist(s)
- in expandable polymerizates, especially in expandable styrene polymerizates (EPS) or expandable granular styrene polymers (EPS), according to claim 3 or 4,
or
- in polymeric foams, especially in styrene polymeric particle foams, obtainable by foaming from expandable polymerizates, or in extruded polystyrene rigid foams (XPS).

## Revendications

1. Polymères expansibles, retardateurs qui contiennent au moins un produit moussant et au moins un composé phosphorique comme retardateur, **caractérisés en ce que** ledit retardateur est un dérivé du 9,10-dihydro-9-oxa-10-phosphaphénanthrène de la formule I 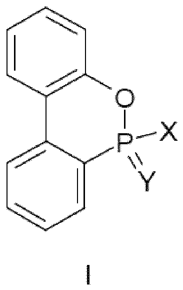 dans laquelle X représente l'hydrogène et Y représente le soufre, c'est-à-dire le 9,10-dihydro-9-oxa-10-phosphaphénanthrène-10-thione ou -10-sulfure (DOPS): 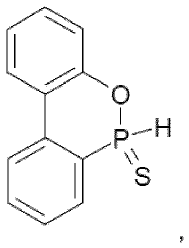 ou un hydrolysat à cycle ouvert de ceux-ci.

2. Polymères expansibles, retardateurs qui contiennent au moins un produit moussant et au moins un composé phosphorique comme retardateur, **caractérisés en ce que** ledit retardateur est un dérivé du 9,10-dihydro-9-oxa-10-phosphaphénanthrène de la formule I, dans laquelle X représente OH et Y représente le soufre, c'est-à-dire le 9,10-dihydro-10-hydroxy-9-oxa-10-phosphaphénanthrène-10-thione ou -10-sulfure (DOPS-OH): 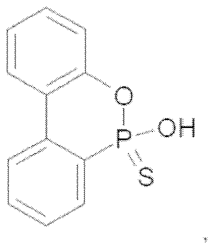 ou un hydrolysat à cycle ouvert de ceux-ci;
ou **caractérisés en ce que** ledit retardateur est un dérivé du 9,10-dihydro-9-oxa-10-phosphaphénanthrène de la formule I, dans laquelle X représente ONH₄ et Y représente le soufre, c'est-à-dire le sel d'ammonium du 9,10-dihydro-10-hydroxy-9-oxa-10-phosphaphénanthrène-10-thione ou -10-sulfure (DOPS-ONH₄): 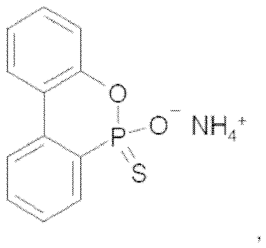 ou un hydrolysat à cycle ouvert de ceux-ci,
ou **caractérisés en ce que** ledit retardateur est un dérivé du 9,10-dihydro-9-oxa-10-phosphaphénanthrène de la formule I, dans laquelle X représente SH et Y représente le soufre, c'est-à-dire le 9,10-dihydro-10-mercapto-9-oxa-10-phosphaphénanthrène-10-thione ou -10-sulfure (DOPS-SH): 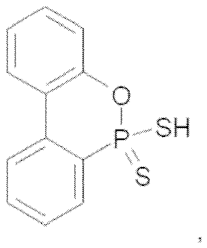 ou un hydrolysat à cycle ouvert de ceux-ci,
ou **caractérisés en ce que** ledit retardateur est un dérivé du 9,10-dihydro-9-oxa-10-phosphaphénanthrène de la formule I, dans laquelle X représente SNH(Et)₃ et Y représente le soufre, c'est-à-dire le sel de triéthylammonium du 9,10-dihydro-10-mercapto-9-oxa-10-phosphaphénanthrène-10-thione ou -10-sulfure (DOPS-SNH(Et)₃): 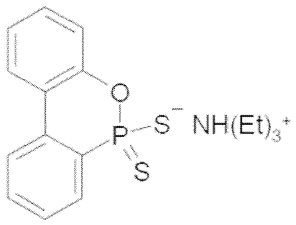 ou un hydrolysat à cycle ouvert de ceux-ci,
ou **caractérisés en ce que** ledit retardateur est un dérivé du 9,10-dihydro-9-oxa-10-phosphaphénanthrène de la formule I, dans laquelle X représente ONH(Et)₃ et Y représente le soufre, c'est-à-dire le sel de triéthylammonium du 9,10-dihydro-10-hydroxy-9-oxa-10-phosphaphénanthrène-10-thione ou -10-sulfure (DOPS-ONH(Et)₃): 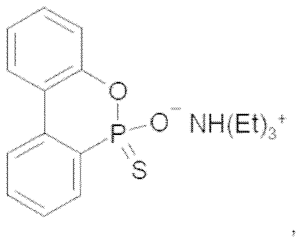 ou un hydrolysat à cycle ouvert de ceux-ci,
ou **caractérisés en ce que** ledit retardateur est un dérivé du 9,10-dihydro-9-oxa-10-phosphaphénanthrène de la formule I, dans laquelle X représente OMeI et Y représente le soufre, c'est-à-dire le sel de mélamine du 9,10-dihydro-10-mercapto-9-oxa-10-phosphaphénanthrène-10-thione ou -10-sulfure (DOPS-OMeI): 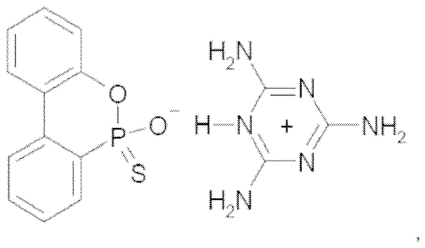 ou un hydrolysat à cycle ouvert de ceux-ci,
ou **caractérisés en ce que** ledit retardateur est un dérivé du 9,10-dihydro-9-oxa-10-phosphaphénanthrène de la formule I, dans laquelle X représente OGua et Y représente le soufre, c'est-à-dire le sel de guanidine du 9,10-dihydro-10-mercapto-9-oxa-10-phosphaphénanthrène-10-thione ou -10-sulfure (DOPS-OGua): 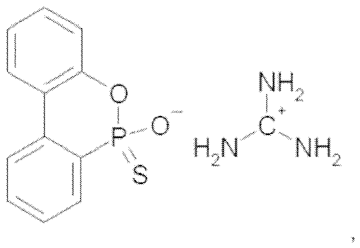 ou un hydrolysat à cycle ouvert de ceux-ci,
ou **caractérisés en ce que** ledit retardateur est un dérivé du 9,10-dihydro-9-oxa-10-phosphaphénanthrène de la formule I, 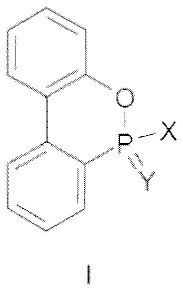 dans laquelle X représente un groupe de liaison bivalent Zₙ qui relie deux radicaux du dihydrooxaphosphaphénanthrényle de la formule I pour former un dimère de la formule II: 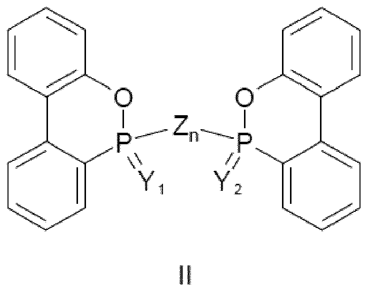 dans laquelle chacun des groupes Y₁ et Y₂ représente l'oxygène, Z représente le soufre et n = 1, c'est-à-dire le sulfure de bis(9,10-dihydro-9-oxa-10-oxo-10-phosphaphénanthrén-10-yle) (DOPO-S-DOPO): 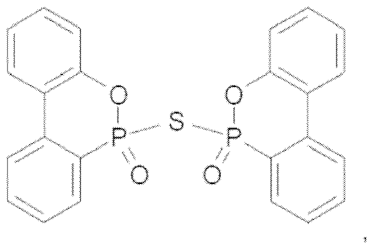 ou un hydrolysat à cycle ouvert de ceux-ci,
ou **caractérisés en ce que** ledit retardateur est un dérivé du 9,10-dihydro-9-oxa-10-phosphaphénanthrène de la formule I, dans laquelle X représente un groupe de liaison bivalent Zₙ qui relie deux radicaux du dihydrooxaphosphaphénanthrényle de la formule I pour former un dimère de la formule II, dans laquelle Y₁ et Z représentent le soufre, Y₂ représente l'oxygène, et n = 1, c'est-à-dire le 9,10-dihydro-10-(9,10-dihydro-9-oxa-10-phospha-10-thioxophénanthrén-10-ylethio)-9-oxa-10-phosphaphénanthrén-10-on ou -10-oxyde (DOPS-S-DOPO): 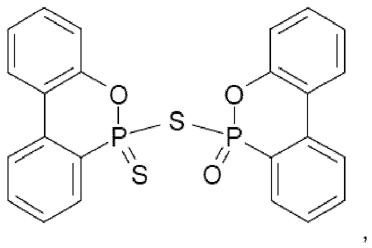 ou un hydrolysat à cycle ouvert de ceux-ci,
ou **caractérisés en ce que** ledit retardateur est un dérivé de la formule I, dans laquelle X représente un groupe de liaison bivalent Zₙ qui relie deux radicaux du dihydrooxaphosphaphénanthrényle de la formule I pour former un dimère de la formule II, dans laquelle chacun des groupes Y₁, Y₂ et Z représente le soufre et n = 1, c'est-à-dire le sulfure du bis(9,10-dihydro-9-oxa-10-phospha-10-thioxophénanthrén-10-yle) (DOPS-S-DOPS): 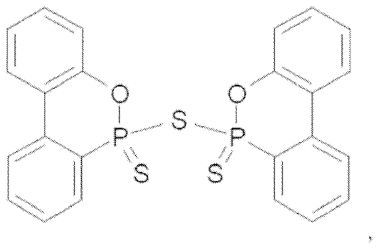 ou un hydrolysat à cycle ouvert de ceux-ci,
ou **caractérisés en ce que** ledit retardateur est un dérivé du 9,10-dihydro-9-oxa-10-phosphaphénanthrène de la formule I, dans laquelle X représente un groupe de liaison bivalent Zₙ qui relie deux radicaux du dihydrooxaphosphaphénanthrényle de la formule I pour former un dimère de la formule II, dans laquelle chacun des groupes Y₁, Y₂ et Z représente le soufre et n = 2, c'est-à-dire le disulfure du bis(9,10-dihydro-9-oxa-10-phospha-10-thioxophénanthrén-10-yle) (DOPS-S₂-DOPS): 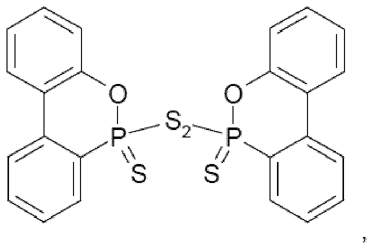 ou un hydrolysat à cycle ouvert de ceux-ci,
ou **caractérisés en ce que** ledit retardateur est un dérivé du 9,10-dihydro-9-oxa-10-phosphaphénanthrène de la formule I, dans laquelle X représente un groupe de liaison bivalent Zₙ qui relie deux radicaux du dihydrooxaphosphaphénanthrényle de la formule I pour former un dimère de la formule II, dans laquelle chacun des groupes Y₁, Y₂ et Z représente le soufre et n = 4, c'est-à-dire le tetrasulfure du bis(9,10-dihydro-9-oxa-10-phospha-10-thioxophénanthrén-10-yle) (DOPS-S₄-DOPS): 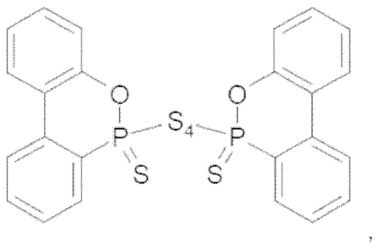 ou un hydrolysat à cycle ouvert de ceux-ci,
ou **caractérisés en ce que** ledit retardateur est un dérivé du 9,10-dihydro-9-oxa-10-phosphaphénanthrène de la formule I, dans laquelle X représente un groupe de liaison bivalent Zₙ qui relie deux radicaux du dihydrooxaphosphaphénanthrényle de la formule I pour former un dimère de la formule II, dans laquelle chacun des groupes Y₁ et Y₂ représente le soufre, Z représente l'oxygène et n = 1, c'est-à-dire l'éther du di(9,10-dihydro-9-oxa-10-phospha-10-thioxophénanthrén-10-yle) (DOPS-O-DOPS): 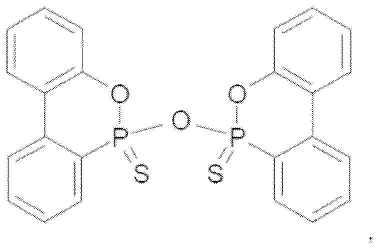 ou un hydrolysat à cycle ouvert de ceux-ci,
ou **caractérisés en ce que** ledit retardateur est un dérivé du 9,10-dihydro-9-oxa-10-phosphaphénanthrène de la formule I, dans laquelle X représente un groupe de liaison bivalent Zₙ qui relie deux radicaux du dihydrooxaphosphaphénanthrényle de la formule I pour former un dimère de la formule II, dans laquelle Y₁ représente le soufre, chacun des groupes Y₂ et Z représente l'oxygène et n = 1, c'est-à-dire le 9,10-dihydro-10-(9,10-dihydro-9-oxa-10-phospha-10-thioxophénanthrén-10-yleoxy)-9-oxa-10-phosphaphénanthrén-10-on ou -10-oxyde (DOPS-O-DOPO): 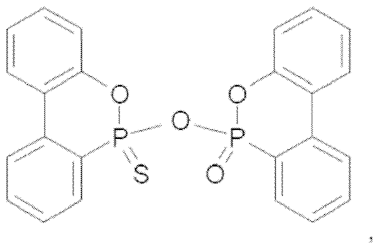 ou un hydrolysat à cycle ouvert de ceux-ci.

3. Polymères expansibles selon l'une des revendications 1 et 2, **caractérisés en ce que** lesdits polymères expansibles sont des polymères de styrène (EPS) ou des granulés de polymères de styrène (EPS), consistant notamment en des homo- et copolymères de styrène, de préférence en polystyrène cristal (GPPS), polystyrène résistant aux chocs (HIPS), polystyrène obtenu par polymérisation anionique (A-IPS), des copolymères de styrène et d'alpha-méthylstyrène, des polymères d'acrylonitrile-styrène-butadiène (ABS), styrène-acrylonitrile (SAN), ester d'acrylonitrile-styrène (ASA), méthylacrylate de styrène-butadiène (MBS), des polymères de méthacrylate-acrylonitrile-styrène-butadiène (MABS) ou des mélanges des styrènes précités ou avec l'éther de polyphénylène (PPE).

4. Polymères expansibles selon l'une des revendications précédentes, **caractérisés en ce que** le/s retardateur/s est/sont compris en une quantité de 0,1 à 25 % en poids, notamment de 3 à 10 % en poids, par rapport au poids total du polymère.

5. Polymères expansibles selon l'une des revendications précédentes, **caractérisés en ce que** du soufre élémentaire, notamment du soufre jaune (Sg), et/ou au moins un autre composé sulfureux ou un composé du soufre, anorganique ou organique, est compris, notamment en une quantité de 0,1 à 10 % en poids, notamment en une quantité de 0,5 à 5 % en poids, de préférence d'environ 2 % en poids, par rapport au poids total du polymère.

6. Polymères expansibles selon la revendication 5, **caractérisés en ce que** ledit autre composé sulfureux ou composé du soufre a au moins une liaison S-S, au moins un des atomes de soufre étant bivalent.

7. Procédé pour la production de polymères expansibles, retardateurs selon l'une des revendications 1 à 6, **caractérisé en ce que** au moins un composé du phosphore selon l'une des revendications 1 et 2 ou des hydrolysats à cycle ouvert ou des sels desdits composés sont utilisés comme retardateur et, selon le cas, le soufre et/ou au moins un composé sulfureux ou un composé du soufre selon l'une des revendications 5 et 6 est/sont utilisé/s comme retardateur additionnel ou synergiste.

8. Procédé pour la production de polymères de styrène (EPS) expansibles, retardateurs selon la revendication 7,
- le retardateur et un agent moussant et, selon le cas, le soufre ou le composé du soufre étant mélangés avec un mélangeur dynamique ou statique et puis granulés
ou
- le retardateur et, selon le cas, le soufre ou le composé du soufre étant mélangés avec un polymère de polystyrène granulé avec un mélangeur dynamique ou statique et puis portés à fusion, la matière en fusion étant ensuite imprégnée et granulée,
ou
- le retardateur et, selon le cas, le soufre ou le composé du soufre étant mélangés avec de l'EPS granulé avec un mélangeur dynamique ou statique et puis portés à fusion, le mélange étant ensuite porté à fusion et granulé,
ou
- le granulé est produit par une polymérisation en suspension de styrène dans une suspension aqueuse en présence du retardateur et d'un agent moussant et, selon le cas, du soufre ou du composé du soufre.

9. Procédé pour la production de polymères de styrène (EPS) expansibles, retardateurs selon la revendication 7 ou 8, comprenant les étapes suivantes:
- doser ensemble du granulé PS ou EPS d'un poids moléculaire Mw de > 120.000 g/mol, de préférence de 150.000 à 250.000 g/mol, notamment de 180.000 à 220.000 g/mol, et dudit au moins un retardateur et, selon le cas, d'un ou plusieurs additifs additionnels, notamment
a) des synergistes retardateurs, comme des formateurs thermiques de radicaux, comme du peroxyde de dicumyle, par exemple, en une concentration de 0,1 à 20 % en poids,
b) des agents opacifiant le rayonnement infrarouge, comme du graphite, du noir, de l'aluminium, du dioxyde de titane, par exemple, en une concentration de 0,1 à 1 % en poids,
c) des stabilisateurs, comme des substances formant des radicaux nitroxyle, comme le HTEMPO, par exemple, en une concentration de 0,1 à 1 % en poids,
d) d'autres retardateurs halogénés ou sans halogènes, comme le HBCD, DOP-O, l'hydroxyde de magnésium, par exemple, en une concentration de 0,1 à 20 % en poids, et/ou
e) des matières de remplissage, comme de la craie, de la poudre de talc, des silicates, par exemple, en une concentration de 1 à 20 % en poids;
dedans une extrudeuse;
- porter à fusion tous composants ensemble dans l'extrudeuse;
- addition dosée facultative d'au moins un agent moussant;
- mélanger tous composants à une température de > 120 °C;
- granuler par granulation submergée pressurisée, à 1 à 20 bar, par exemple, pour obtenir une grosseur des granulés de < 5 mm, notamment de 0,2 à 2,5 mm, à une température d'eau de 30 à 100 °C, notamment de 50 à 80 °C;
- selon le cas, recouvrir la surface d'une couche d'agents d'enduction, comme des silicates, des sels métalliques d'acides gras, d'esters d'acides gras, d'amides d'acides gras, par exemple.

10. Polymères de styrène (EPS) expansibles, retardateurs qu'on peut obtenir par un procédé selon l'une des revendications 7 à 9.

11. Mousse polymère, notamment mousse particulaire d'un polymère de styrène ou mousse solidifiée extrudée de polystyrène (XPS), comprenant au moins un composé du phosphore selon l'une des revendications 1 à 2 ou des hydrolysats à cycle ouvert ou des sels desdits composés comme retardateur.

12. Mousse polymère selon la revendication 11, **caractérisée en ce que** le soufre et/ou au moins un composé sulfureux ou un composé du soufre selon l'une des revendications 5 et 6 est/sont compris comme retardateur additionnel ou synergiste.

13. Mousse polymère selon l'une des revendications 11 et 12, qu'on peut obtenir de polymères retardateurs expansibles selon l'une des revendications 1 à 6, notamment de polymères de styrène expansibles (EPS), notamment par moussage et frittage desdits polymères ou par extrusion.

14. Mousse polymère selon l'une des revendications 11 et 12, d'une densité d'entre 7 et 200 g/l et avec des alvéoles majoritairement fermées avec plus de 0,5 alvéoles par mm³.

15. Utilisation d'au moins un composé du phosphore selon l'une des revendications 1 à 2 ou d'hydrolysats à cycle ouvert ou de sels desdits composés comme retardateur, et du soufre et/ou d'au moins un composé sulfureux ou un composé du soufre selon l'une des revendications 5 et 6 comme retardateur/s ou synergiste/s
- dans des polymères expansibles, notamment dans des polymères de styrène expansibles (EPS) ou des polymères de styrène granulés expansibles (EPS) selon l'une des revendications 3 et 4;
ou
- dans des mousses polymères, notamment des mousses particulaires de polymères styrène qu'on peut obtenir par mousses des polymères expansibles, ou dans des mousses solidifiées extrudées de polystyrène (XPS).
